# EUROPÄISCHE PATENTSCHRIFT

(11) **EP 2 338 953 B1**
(45) Veröffentlichungstag und Bekanntmachung des Hinweises auf die Patenterteilung: **19.03.2014**
(21) Anmeldenummer: 11002584.8
(22) Anmeldetag: 29.11.2007
(51) Int. Cl.: C09K 19/12, C09K 19/30, C09K 19/42, C09K 19/44, C09K 19/20, C09K 19/34, C09K 19/04

(54) **Flüssigkristallines Medium**
Liquid crystalline medium
Milieu cristallin liquide

(30) Priorität: 02.02.2007 DE 102007005317
(43) Veröffentlichungstag der Anmeldung: 29.06.2011
(62) Teilanmeldung aus: 07023136.0
(73) Patentinhaber: Merck Patent GmbH, 64293 Darmstadt (DE)
(72) Erfinder: Hirschmann, Harald Dr., 64291 Darmstadt (DE); Witteck, Michael Dr., 64285 Darmstadt (DE); Czanta, Markus Dr., 64285 Darmstadt (DE); Reiffenrath, Volker, 64380 Rossdorf (DE)

(56) Entgegenhaltungen:
- WO-A-2006/133783
- DE-A1- 4 314 085
- DE-A1- 4 434 976
- DE-A1- 4 445 224
- DE-A1- 10 340 534
- DE-A1- 19 528 085
- US-A1- 2006 278 850

## Beschreibung

Die vorliegende Erfindung betrifft flüssigkristalline Medien (FK-Medien) enthaltend eine oder mehrere Verbindungen mit einer -O-CH=CF₂-Endgruppe, neue Verbindungen dieses Typ, Verfahren zu ihrer Herstellung, die Verwendung der FK-Medien und Verbindungen für elektrooptische Zwecke, sowie solche FK-Medien und Verbindungen enthaltende FK-Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur. Daneben gibt es auch Zellen, die mit einem elektrischen Feld parallel zur Substrat- und Flüssigkristallebene arbeiten, wie beispielsweise die IPS-Zellen ("in-plane switching"). Vor allem die TN-, STN- und IPS- Zellen, insbesondere die TN-, STN- und IPS-Zellen, sind derzeit kommerziell interessante Einsatzgebiete für die erfindungsgemäßen Medien.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektro-optischer Effekt üblicherweise der TN-Effekt verwendet. Man unterscheidet zwei Technologien: TFTs aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Ver zögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Für TV- und Videoanwendungen werden Displays mit geringen Schaltzeiten benötigt. Solche geringen Schaltzeiten lassen sich besonders dann realisieren, wenn Flüssigkristallmedien mit geringen Werten für die Viskosität, insbesondere der Rotationsviskosität γ₁ verwendet werden. Verdünnende Zusätze verringern jedoch in der Regel den Klärpunkt und damit den Arbeitstemperaturbereich des Mediums.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Insbesondere bei FK-Anzeigen für TV- und Video-Anwendungen (z.B. LCD-TV, Monitore, PDAs, Notebooks, Spielkonsolen) ist eine deutliche Verringerung der Schaltzeiten gewünscht. Es besteht deshalb ein Bedarf an Verbindungen für FK-Medien, die eine Verringerung der Schaltzeiten ermöglichen, ohne gleichzeitig die anderen Eigenschaften des FK-Mediums, wie beispielsweise den Klärpunkt, die dielektrische Anisotropie Δε oder die Doppelbrechung Δn zu verschlechtern. Hierfür sind insbesondere niedrige Rotationsviskositäten wünschenswert.

Die Druckschriften DE 44 45 224 A1 und DE 195 28 085 A1 offenbaren Verbindungen mit einer Endgruppe -OCH=CF₂ an fluorierten Cyclohexylbiphenylen. Die Druckschriften WO 2006/133783 A1, DE 103 40 534 A1 und DE 44 34 976 A1 geben einen Hinweis auf die Endgruppe -OCH=CF₂ an Benzolderivaten. Die Druckschrift DE 43 14 085 A1 offenbart auch diese Endgruppe an Cyclohexanringen. In der Druckschrift US 2006/0278850 A1 werden flüssigkristalline Mischungen offenbart, die eine Verbindung der Formel XXIa gemäß der vorliegenden Offenbarung umfassen.

Der Erfindung liegt die Aufgabe zugrunde, Medien insbesondere für derartige MFK-, TN-, STN- oder IPS-Anzeigen bereitzustellen, welche die oben angegebenen gewünschten Eigenschaften besitzen und die oben angegebenen Nachteile nicht oder nur in geringerem Maße zeigen. Insbesondere sollten die FK-Medien schnelle Schaltzeiten und niedrige Rotationsviskositäten bei gleichzeitig hoher dielektrische Anisotropie aufweisen. Darüber hinaus sollten die FK-Medien einen hohen Klärpunkt, einen breiten nematischen Phasenbereich und eine niedrige Schwellenspannung aufweisen.

Es wurde nun gefunden, dass diese Aufgabe gelöst werden kann, wenn man FK-Medien enthaltend eine oder mehrere Verbindungen der Formel I mit einer -O-CH=CF₂-Endgruppe verwendet. Die Verbindungen der Formel I führen zu FK-Medien mit den oben angegebenen gewünschten Eigenschaften.

Gegenstand der Erfindung ist ein flüssigkristallines Medium, dadurch gekennzeichnet, dass es eine oder mehrere Verbindungen der Formel I 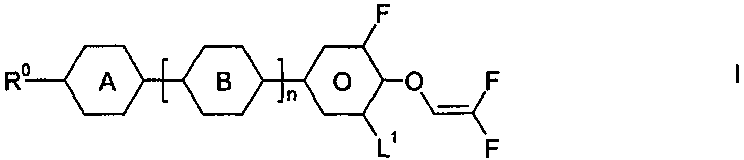 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C=C-, -CF₂O-, -CH=CH-, 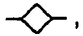 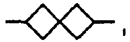 -O-, -CO-O- oder -O-CO- so ersetzt sein können, dass O-Atome nicht direkt miteinander verknüpft sind, und worin auch ein oder mehrere H-Atome durch Halogen ersetzt sein können,
L¹ H oder F,
n 1 oder 2, und 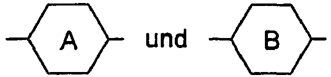 jeweils unabhängig voneinander 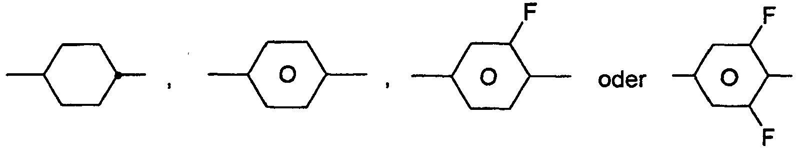 bedeuten,
und zusätzlich
eine oder mehrere Verbindungen ausgewählt aus den Formeln 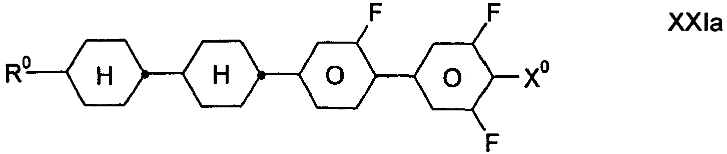 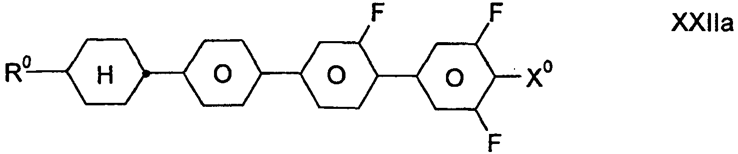
worin R⁰ wie für Formel I definiert ist, und
X⁰ F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen
bedeuten,
enthält.

Ein weiterer Gegenstand der Erfindung ist die Verwendung der erfindungsgemäßen FK-Medien in elektronischen und elektrooptischen Vorrichtungen, insbesondere in FK-Anzeigen.

Ein weiterer Gegenstand der Erfindung ist eine elektrooptische Anzeige, insbesondere eine FK-Anzeige, enthaltend ein erfindungsgemäßes FK-Medium, insbesondere eine MFK-, TN-, STN- oder IPS-Anzeige.

Überraschenderweise wurde gefunden, dass FK-Medien enthaltend eine oder mehrere Verbindungen der Formel I gleichzeitig eine niedrige Rotationsviskosität γ₁ und eine hohe positive dielektrische Anisotropie, sowie schnelle Schaltzeiten, hohe elastische Konstanten K11, K22 und K33, eine niedrige Schwellenspannung, einen hohen Klärpunkt und einen breiten nematischen Phasenbereich aufweisen.

Die Verbindungen der Formel I besitzen einen breiten Anwendungsbereich. In Abhängigkeit von der Auswahl der Substituenten können sie als Basismaterialien dienen, aus denen flüssigkristalline Medien zum überwiegenden Teil zusammengesetzt sind; es können aber auch den Verbindungen der Formel I flüssigkristalline Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Besonders bevorzugt sind Verbindungen der Formel I, worin L¹ F bedeutet.

Weiterhin bevorzugt sind Verbindungen der Formel I, worin R⁰ geradkettiges Alkyl oder Alkoxy mit 1 bis 8 C-Atomen oder geradkettiges Alkenyl oder Alkenyloxy mit 2 bis 7 C-Atomen bedeutet.

Weiterhin bevorzugt sind Verbindungen der Formel I, worin, falls A keinen Cyclohexylring bedeutet, B ebenfalls keinen Cyclohexylring bedeutet, und/oder Verbindungen der Formel I,worin 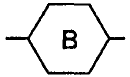 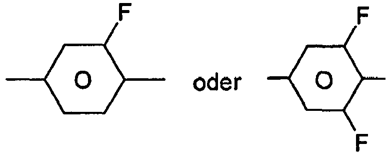 bedeutet.

Weitere bevorzugte Verbindungen der Formel I sind solche ausgewählt aus folgenden Formeln: 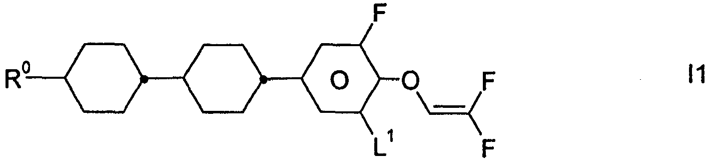 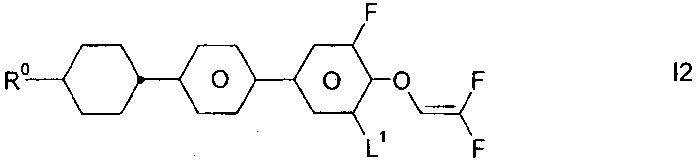 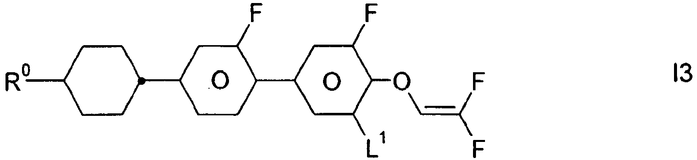 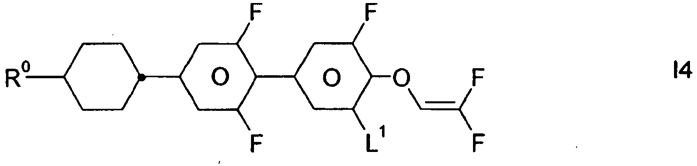 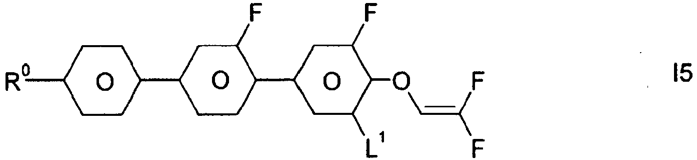 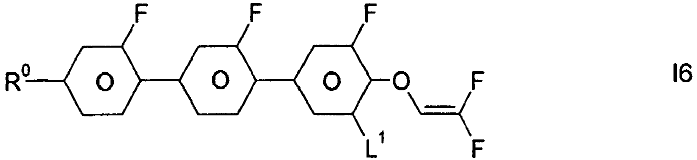 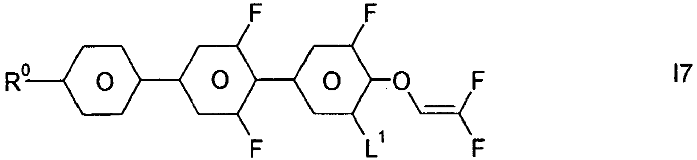 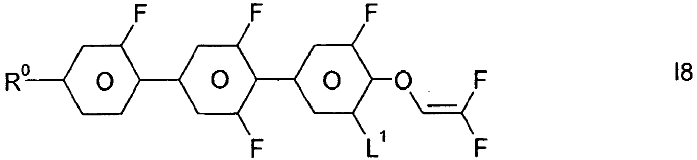 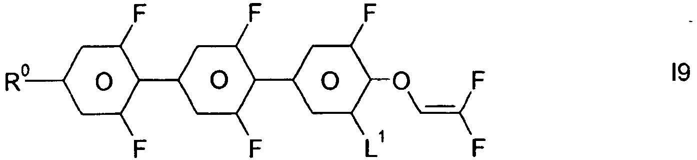 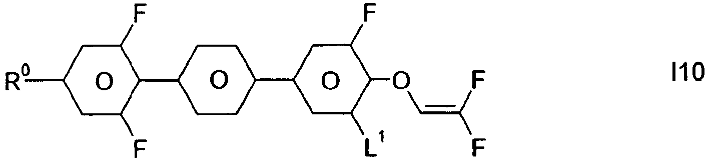 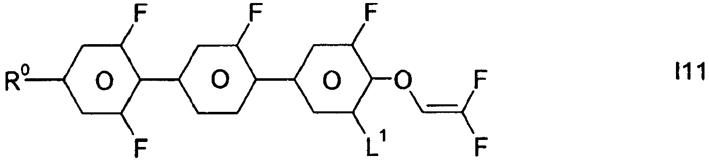 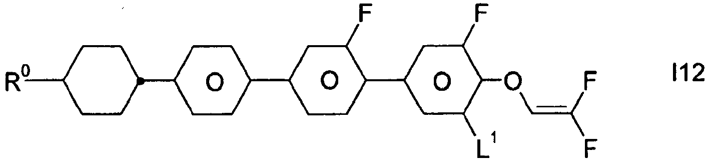 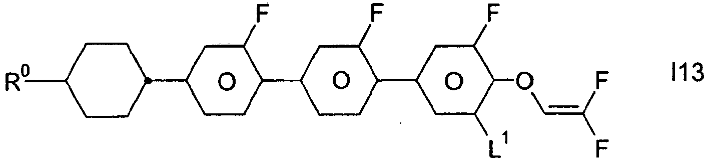 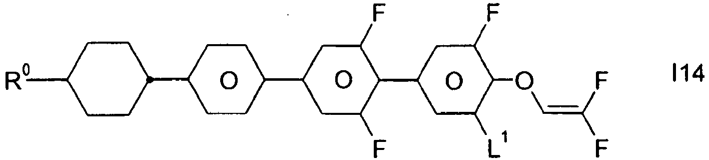 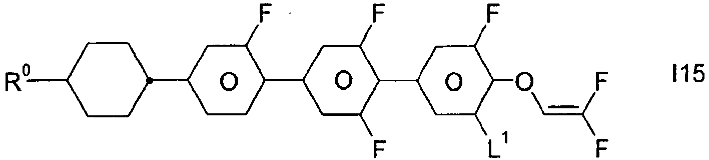 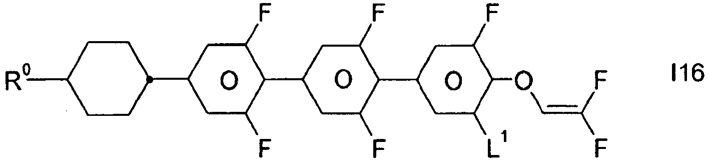 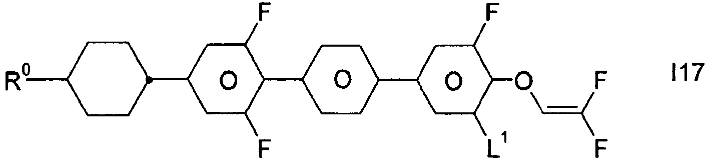 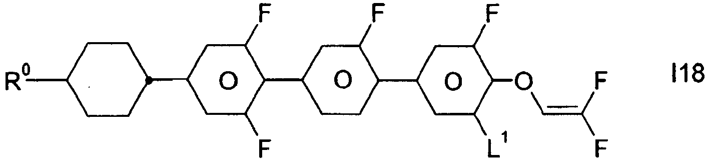 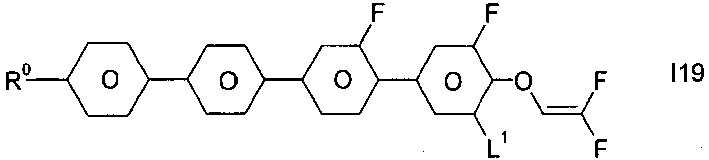 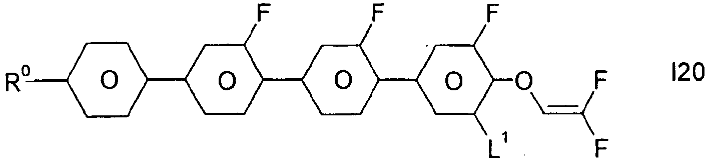 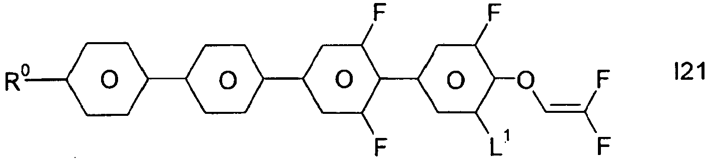 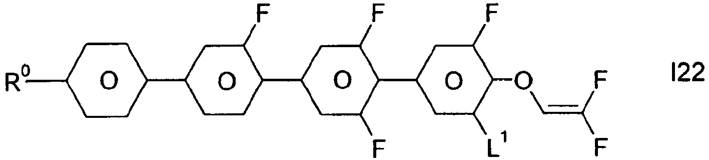 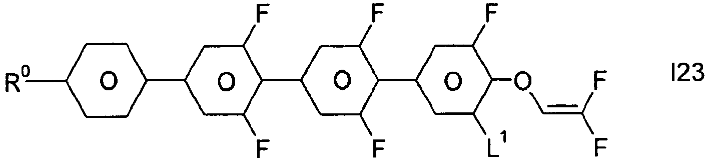 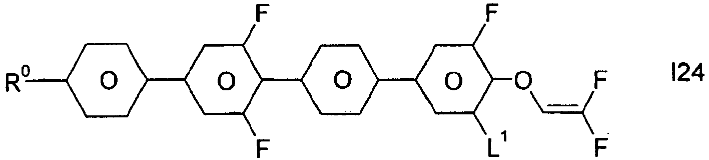 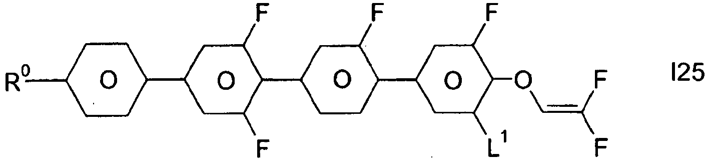 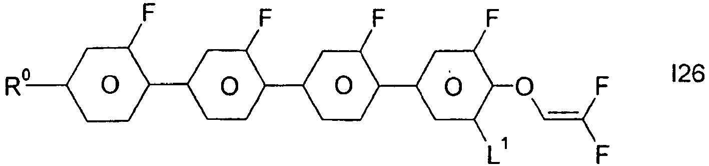 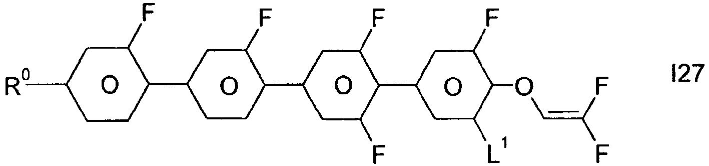 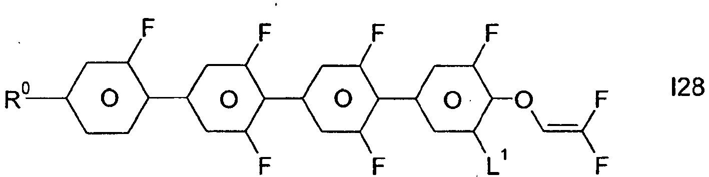 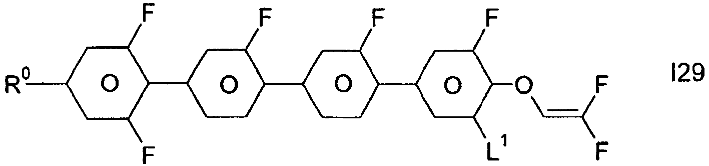 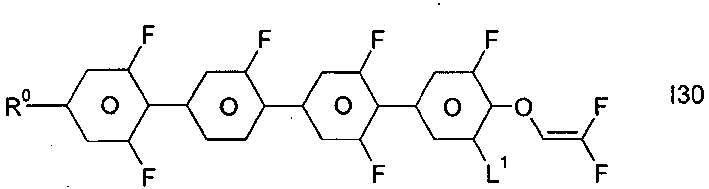 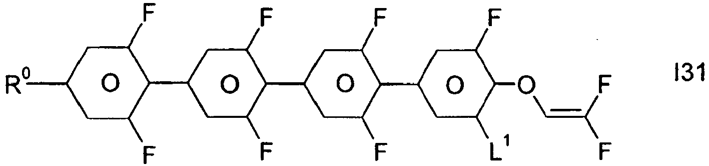 worin R⁰ und L¹ die oben angegebene Bedeutung besitzen, L¹ vorzugsweise F bedeutet und R⁰ vorzugsweise geradkettiges Alkyl mit 1, 2, 3, 4, 5, 6, 7 oder 8 C-Atomen bedeutet.

Falls in den oben- und untenstehenden Formeln R⁰ einen Alkylrest und/oder einen Alkoxyrest bedeutet, so kann dieser geradkettig oder verzweigt sein. Vorzugsweise ist er geradkettig, hat 2, 3, 4, 5, 6 oder 7C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7-oder 8-Oxanonyl, 2-, 3-, 4-, 5-, 6-, 7-, 8- oder 9-Oxadexyl.

Falls R⁰ einen Alkylrest bedeutet, in dem eine CH₂-Gruppe durch -CH=CH-ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Diese Reste können auch ein- oder mehrfach halogeniert sein.

Falls R⁰ einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Die Verbindungen der Formel I können nach an sich bekannten Methoden dargestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Synthese von Verbindungen der Formel I, worin die Ringe A und B Phenyl oder Cyclohexyl bedeuten, ist beispielsweise in WO 1992/21734 A1 beschrieben. Verbindungen der Formel I mit fluorierten Phenylringen A und B können in Analogie zu den literaturbekannten Verfahren, und insbesondere gemäß nachfolgendem Reaktionsschema 1 oder in Analogie dazu hergestellt werden (worin X H oder F und R R⁰ oder R⁰-A- gemäß Formel I bedeutet).

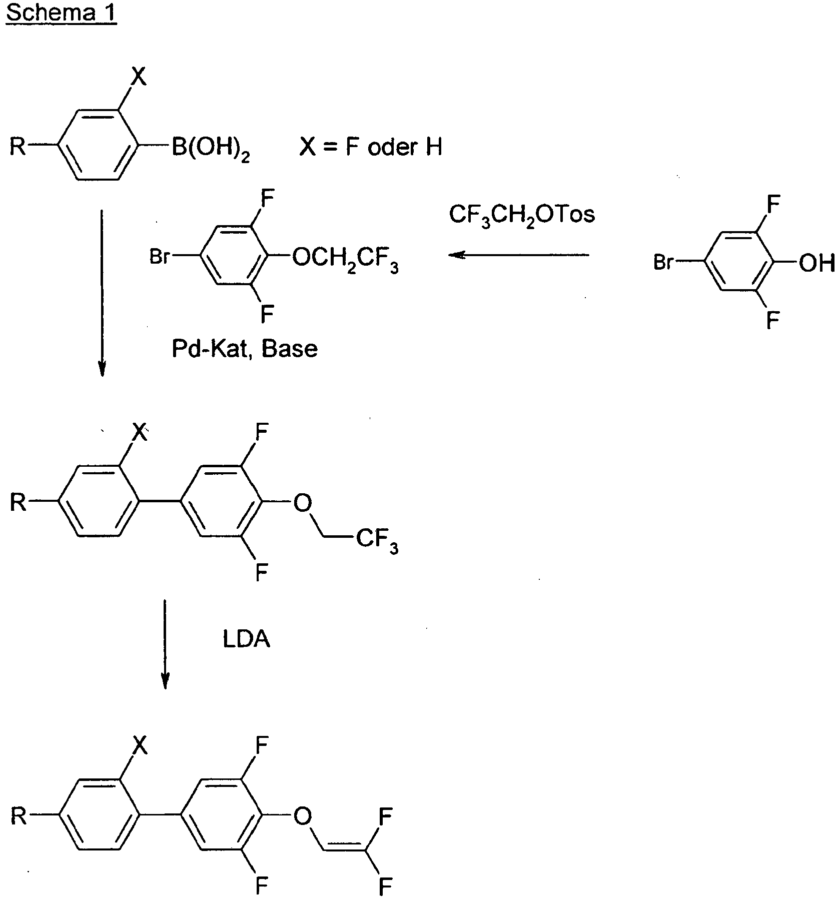

Besonders bevorzugte Ausführungsformen für erfindungsgemäße FK-Medien sind im Folgenden angegeben:
- Das Medium enthält zusätzlich eine oder mehrere Verbindungen der Formel II und/oder III: 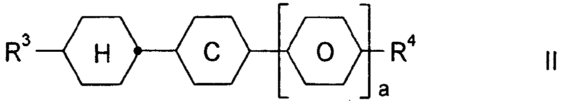 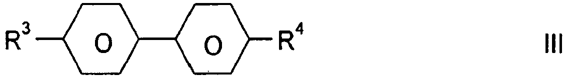 worin
   Ring C 1,4-Phenylen oder trans-1,4-Cyclohexylen bedeutet,
   a 0 oder 1 ist, und
   R³ Alkenyl mit 2 bis 9 C-Atomen bedeutet,
   und R⁴ eine der für R⁰ in Formel I angegebenen Bedeutungen besitzt und vorzugsweise Alkyl mit 1 bis 12 C-Atomen oder Alkenyl mit 2 bis 9 C-Atomen bedeutet.
- Die Verbindungen der Formel II sind vorzugsweise ausgewählt aus folgenden Formeln: 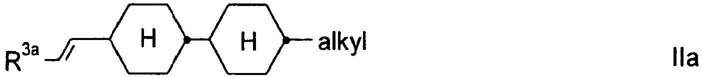 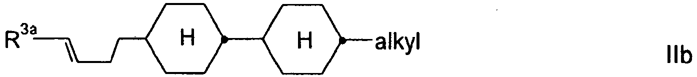 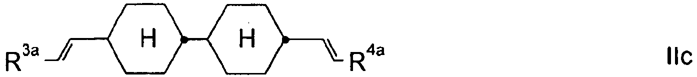 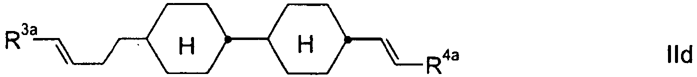 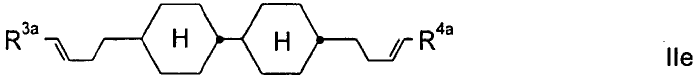 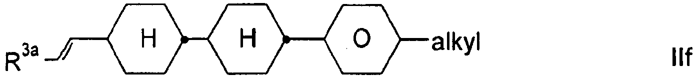 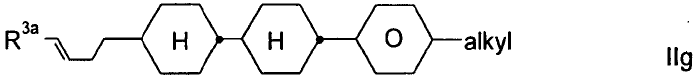 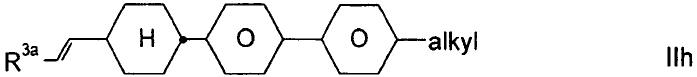 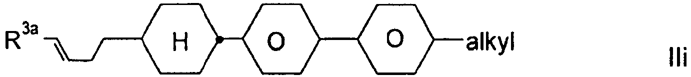 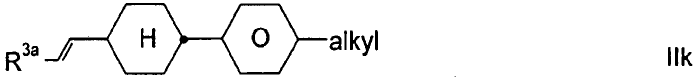 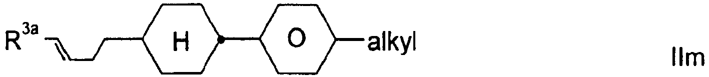
worin R^{3a} und R^{4a} jeweils unabhängig voneinander H, CH₃, C₂H₅ oder C₃H₇ bedeuten, und "alkyl" eine geradkettige Alkylgruppe mit 1 bis 8 C-Atomen bedeutet. Besonders bevorzugt sind Verbindungen der Formel IIa und IIf, insbesondere worin R^{3a} H oder CH₃ bedeutet, und Verbindungen der Formel IIc, insbesondere worin R^{3a} und R^{4a} H, CH₃ oder C₂H₅ bedeuten.
- Die Verbindungen der Formel III sind vorzugsweise ausgewählt aus folgenden Formeln: 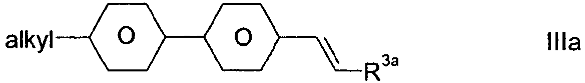 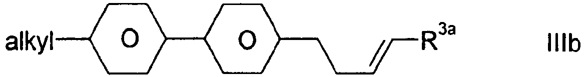 worin "alkyl" und R^{3a} die oben angegebene Bedeutung haben und R^{3a} vorzugsweise H oder CH₃ bedeutet. Besonders bevorzugt sind Verbindungen der Formel IIIb;
- Das Medium enthält zusätzlich eine oder mehrere Verbindungen ausgewählt aus folgenden Formeln: 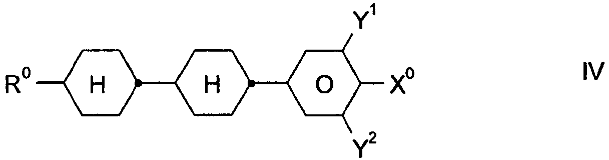 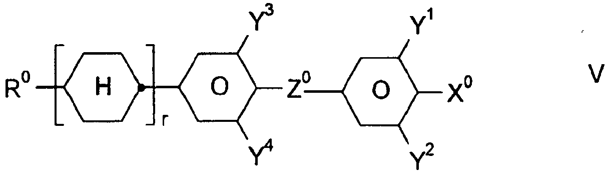 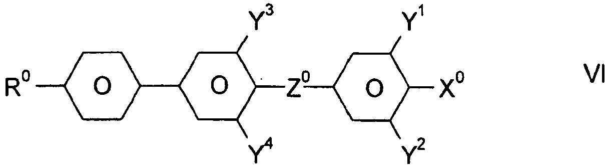 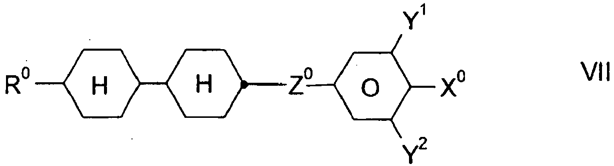 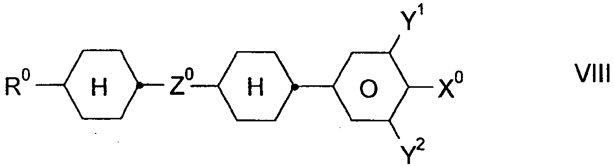 worin R⁰ die in Formel I angegebene Bedeutung besitzt,
   Y¹⁻⁴ jeweils unabhängig voneinander H oder F,
   X⁰ F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen, und
   Z⁰ -C₂H₄-, -(CH₂)₄-, -CH=CH-, -CF=CF-, -C₂F₄-, -CH₂CF₂-, - CF₂CH₂-, -CH₂O-, -OCH₂-, -COO-, -CF₂O- oder -OCF₂-, in Formel V und VI auch eine Einfachbindung, und
   r 0 oder 1 bedeutet;
- Die Verbindungen der Formel IV sind vorzugsweise ausgewählt aus folgenden Formeln: 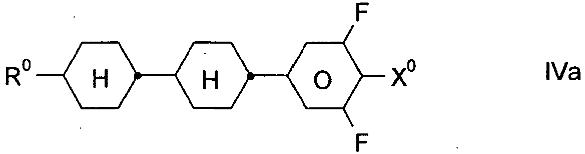 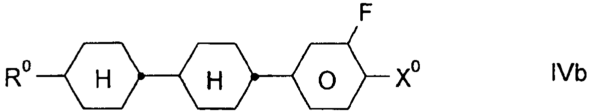 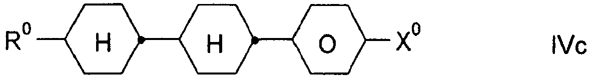 worin R⁰ und X⁰ die oben angegebene Bedeutung haben. Vorzugsweise bedeutet R⁰ Alkyl mit 1 bis 8 C-Atomen und X⁰ F oder OCF₃;
- Das Medium enthält ein oder mehrere Verbindungen der Formel V, worin Z⁰ eine Einfachbindung bedeutet, besonders bevorzugt solche ausgewählt aus folgenden Formeln: 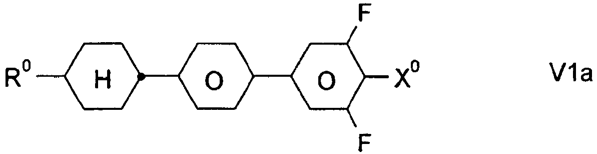 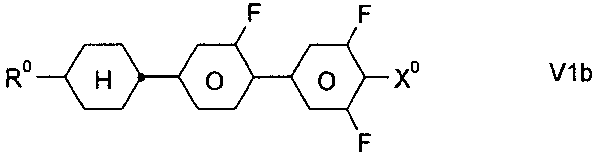 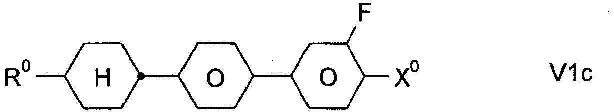 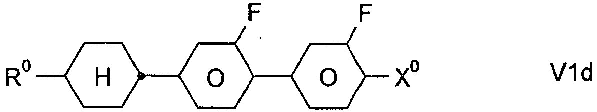 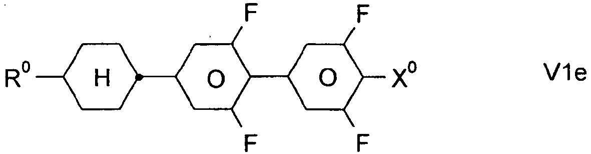 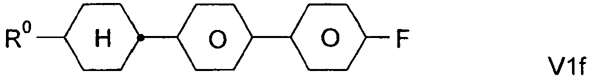 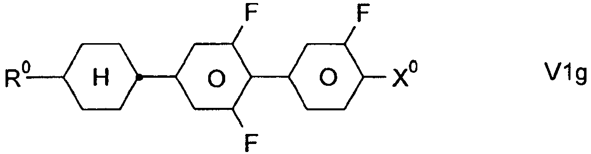 worin R⁰ und X⁰ die oben angegebene Bedeutung haben. Vorzugsweise bedeutet R⁰ Alkyl mit 1 bis 8 C-Atomen und X⁰ F;
- Das Medium enthält ein oder mehrere Verbindungen der Formel V, worin Z⁰ -COO- bedeutet, besonders bevorzugt solche ausgewählt aus folgenden Formeln: 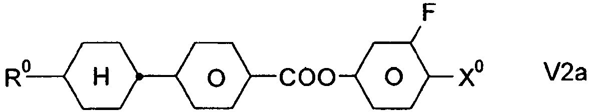 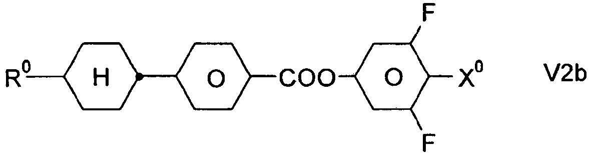 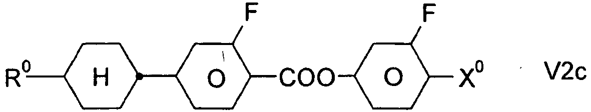 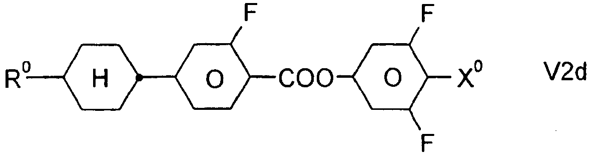 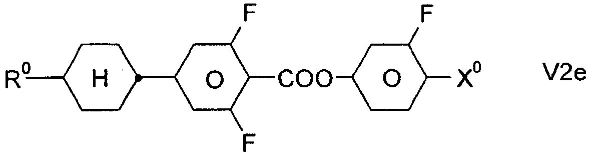 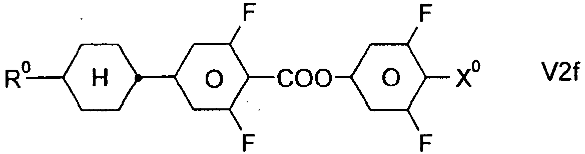 worin R⁰ und X⁰ die oben angegebene Bedeutung haben. Vorzugsweise bedeutet R⁰ Alkyl mit 1 bis 8 C-Atomen und X⁰ F;
- Das Medium enthält ein oder mehrere Verbindungen der Formel VI-1 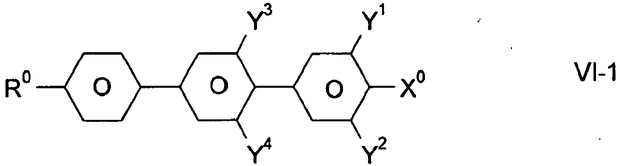 besonders bevorzugt solche ausgewählt aus folgenden Formeln: 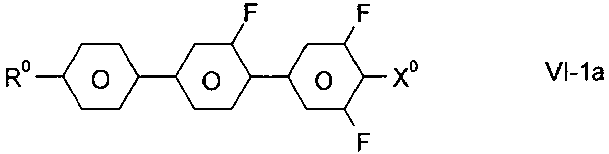 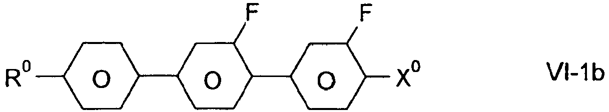 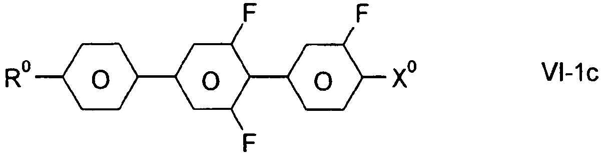 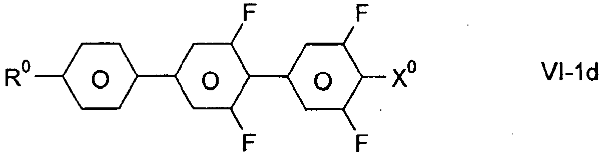 worin R⁰ und X⁰ die oben angegebene Bedeutung haben. Vorzugsweise bedeutet R⁰ Alkyl mit 1 bis 8 C-Atomen und X⁰ F;
- Das Medium enthält ein oder mehrere Verbindungen der Formel VI-2 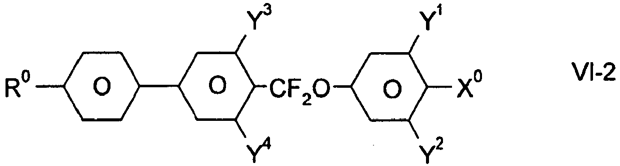 besonders bevorzugt solche ausgewählt aus,folgenden Formeln: 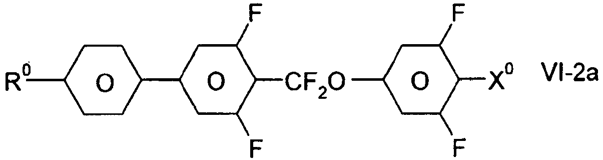 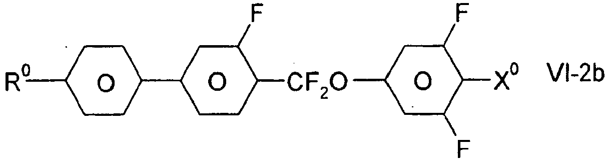 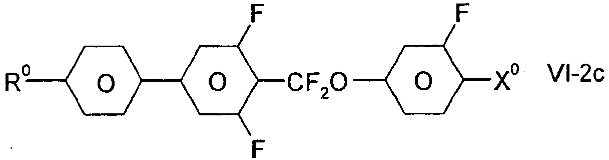 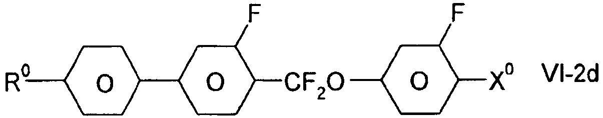 worin R⁰ und X⁰ die oben angegebene Bedeutung haben. Vorzugsweise bedeutet R⁰ Alkyl mit 1 bis 8 C-Atomen und X⁰ F oder OCF₃;
- Das Medium enthält ein oder mehrere Verbindungen der Formel VII, worin Z⁰ -CF₂O- bedeutet, besonders bevorzugt solche ausgewählt aus folgenden Formeln: 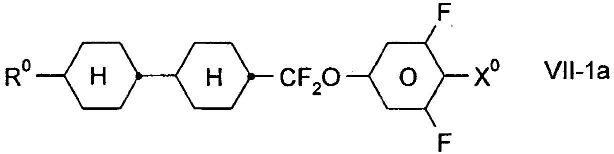 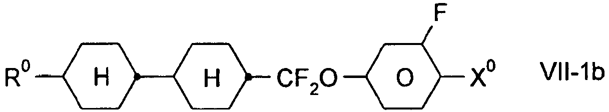 worin R⁰ und X⁰ die oben angegebene Bedeutung haben. Vorzugsweise bedeutet R⁰ Alkyl mit 1 bis 8 C-Atomen und X⁰ F;
- Das Medium enthält ein oder mehrere Verbindungen der Formel VII, worin Z⁰ -COO- bedeutet, besonders bevorzugt solche ausgewählt aus folgenden Formeln: 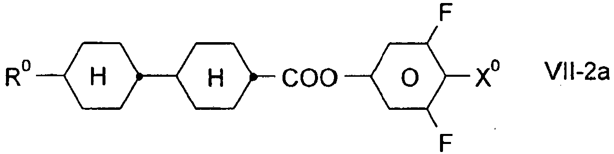 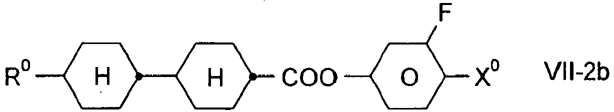 worin R⁰ und X⁰ die oben angegebene Bedeutung haben. Vorzugsweise bedeutet R⁰ Alkyl mit 1 bis 8 C-Atomen und X⁰ F;
- Das Medium enthält zusätzlich ein oder mehrere Verbindungen der folgenden Formel: 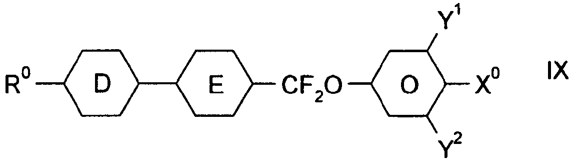 worin R⁰, X⁰, Y¹ und Y² die oben angegebene Bedeutung haben, und 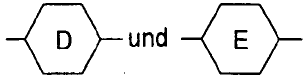 jeweils unabhängig voneinander 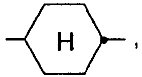 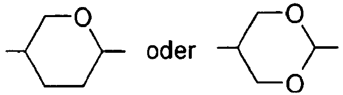 bedeuten,
   wobei die Ringe A und B nicht beide gleichzeitig Cyclohexylen bedeuten;
- Die Verbindungen der Formel IX sind vorzugsweise ausgewählt aus folgenden Formeln: 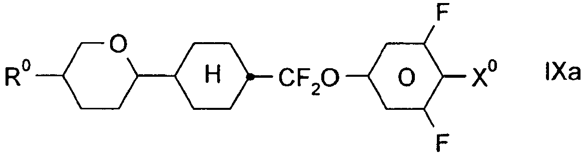 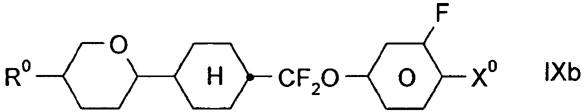 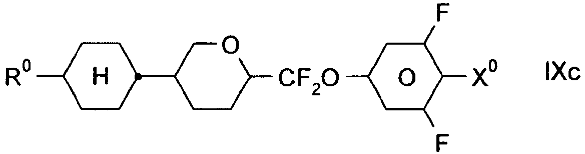 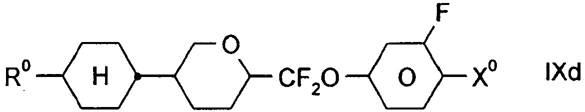 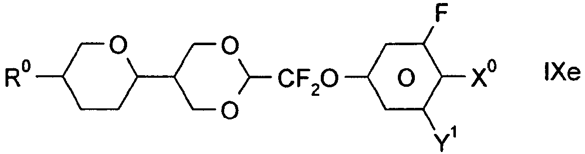 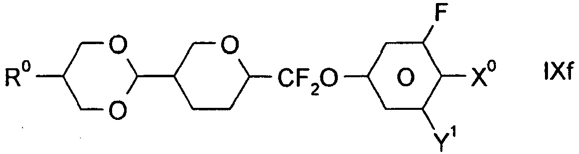 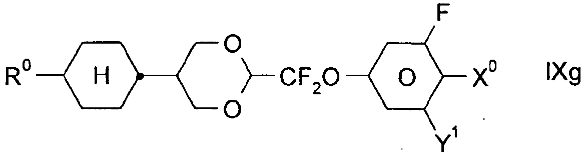 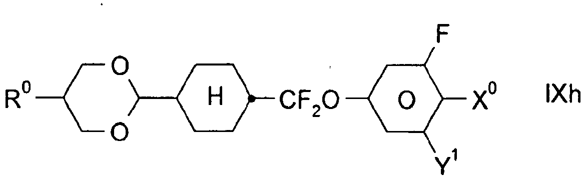 worin R⁰, Y¹ und X⁰ die oben angegebene Bedeutung haben. Vorzugsweise bedeutet R⁰ Alkyl mit 1 bis 8 C-Atomen und X⁰ F. Besonders bevorzugt sind Verbindungen der Formel IXa;
- Das Medium enthält zusätzlich eine oder mehrere Verbindungen ausgewählt aus den folgenden Formeln: 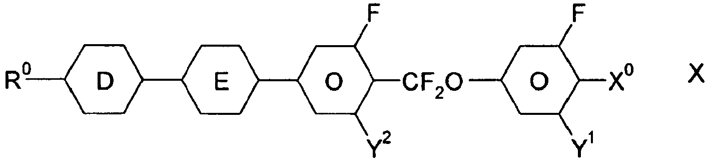 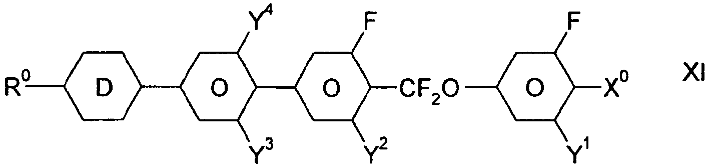 worin R⁰, X⁰ und Y¹⁻⁴ die in Formel I angegebene Bedeutung haben und 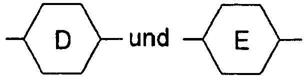 jeweils unabhängig voneinander 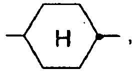 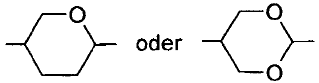 bedeuten;
- Die Verbindungen der Formeln X und XI sind vorzugsweise ausgewählt aus folgenden Formeln: 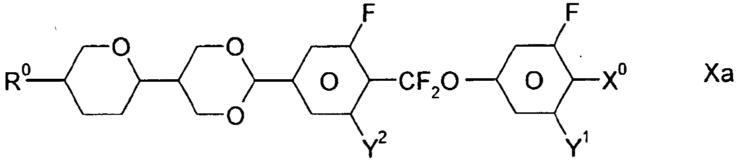 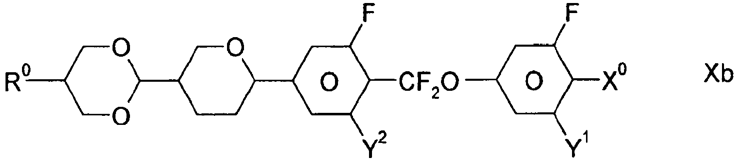 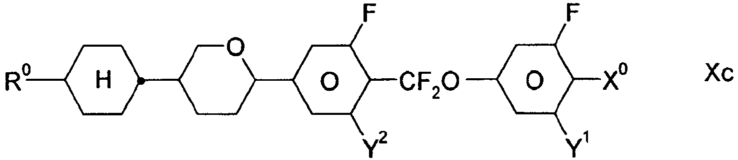 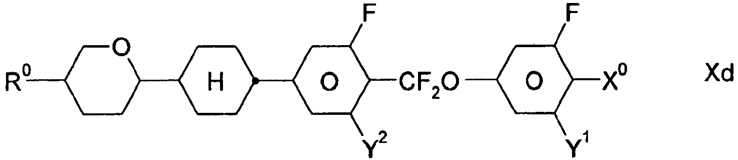 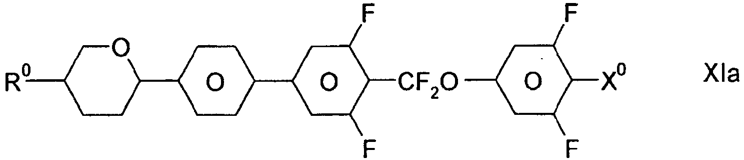 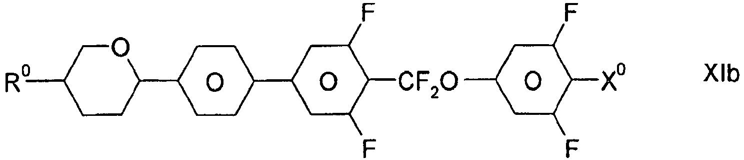 worin R⁰ und X⁰ die oben angegebene Bedeutung haben. Vorzugsweise bedeutet R⁰ Alkyl mit 1 bis 8 C-Atomen und X⁰ F. Besonders bevorzugte Verbindungen sind solche, worin Y¹ F und Y² H oder F, vorzugsweise F, bedeutet;
- Das Medium enthält zusätzlich eine oder mehrere Verbindungen der folgenden Formel: 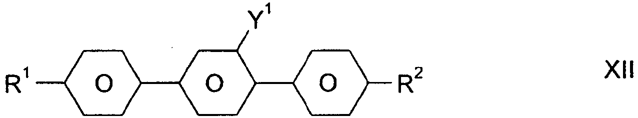 worin R¹ und R² jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 8 C-Atomen bedeuten, und Y¹ H oder F bedeutet;
- Das Medium enthält zusätzlich eine oder mehrere Verbindungen ausgewählt aus folgenden Formeln: 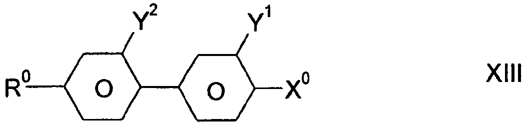 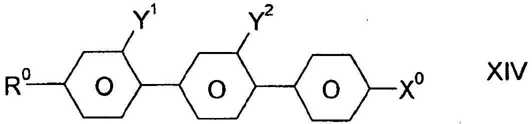 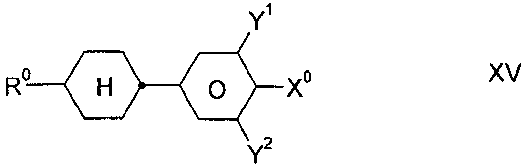 worin R⁰, X⁰, Y¹ und Y² die oben angegebene Bedeutung haben. Vorzugsweise bedeutet R⁰ Alkyl mit 1 bis 8 C-Atomen und X⁰ F oder Cl;
- Die Verbindungen der Formeln XIII, XIV und XV sind vorzugsweise ausgewählt aus folgenden Formeln: 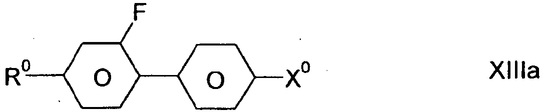 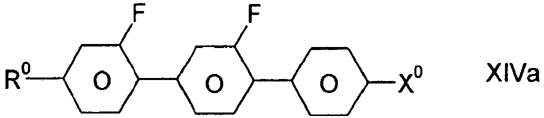 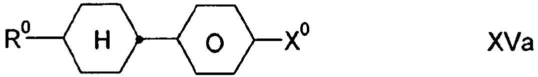 worin R⁰ und X⁰ die oben angegebene Bedeutung haben. Vorzugsweise bedeutet R⁰ Alkyl mit 1 bis 8 C-Atomen und X⁰ Cl;
- Das Medium enthält zusätzlich eine oder mehrere Verbindungen der folgenden Formel: 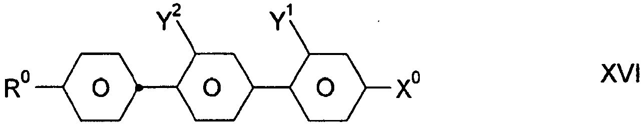 worin Y¹, Y², R⁰ und X⁰ die oben angegebene Bedeutung haben und Y¹ und Y² nicht gleichzeitig H bedeuten. Vorzugsweise bedeutet R⁰ Alkyl mit 1 bis 8 C-Atomen und X⁰ F oder Cl. Besonders bevorzugt sind Verbindungen der folgenden Formel 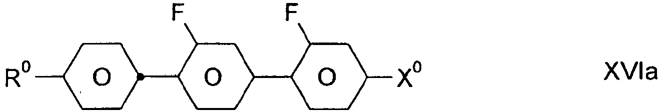 worin R⁰ und X⁰ die oben angegebene Bedeutung haben. Vorzugsweise bedeutet R⁰ Alkyl mit 1 bis 8 C-Atomen und X⁰ F oder Cl;
- Das Medium enthält zusätzlich eine oder mehrere Verbindungen der folgenden Formel: 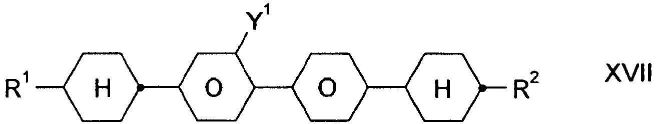 worin Y¹, R¹ und R² die oben angegebene Bedeutung haben. R¹ und R² bedeuten vorzugsweise jeweils unabhängig voneinander Alkyl mit 1 bis 8 C-Atomen;
- Das Medium enthält zusätzlich eine oder mehrere Verbindungen der folgenden Formel: 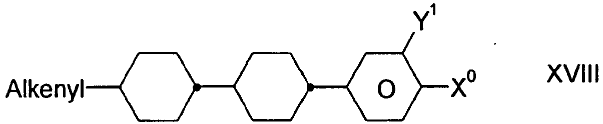 worin X⁰ und Y¹ die oben angegebene Bedeutung haben und "Alkenyl" C₂₋₇-Alkenyl bedeutet. Besonders bevorzugt sind Verbindungen der folgenden Formel 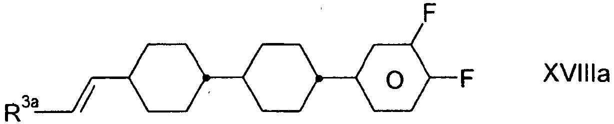 worin R^{3a} die oben angegebene Bedeutung hat und vorzugsweise H bedeutet;
- Das Medium enthält zusätzlich eine oder mehrere Verbindungen ausgewählt aus folgenden Formeln: 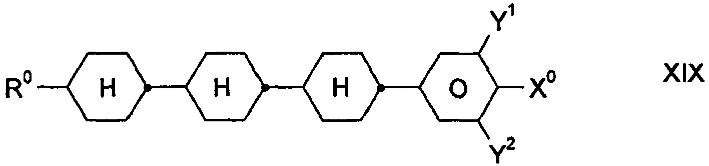 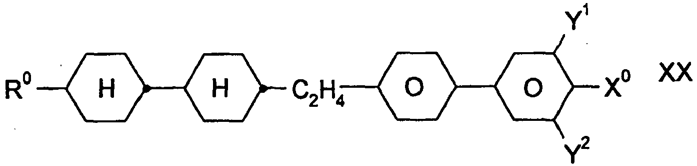 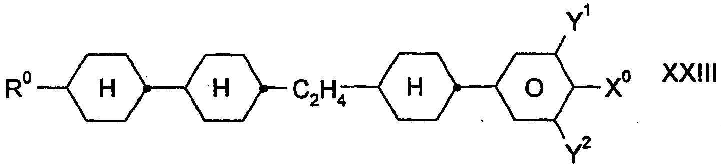 worin Y¹⁻⁴, R⁰ und X⁰ jeweils unabhängig voneinander eine der oben angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalky Fluoralkyl oder Alkenyl mit jeweils bis zu 8 C-Atomen.
- In der Formel: 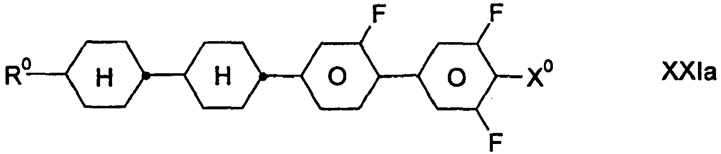 bedeutet R⁰ Alkyl mit 1 bis 8 C-Atomen und X⁰ F oder OCF₃.
- In der Formel: 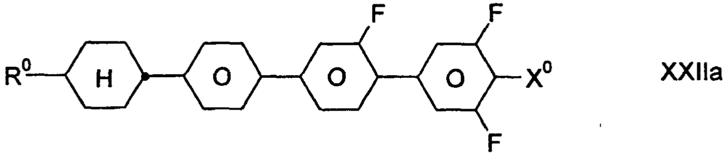 bedeutet R⁰ Alkyl mit 1 bis 8 C-Atomen und X⁰ F oder OCF₃.
- Das Medium enthält zusätzlich eine oder mehrere Verbindungen ausgewählt aus folgenden Formeln: 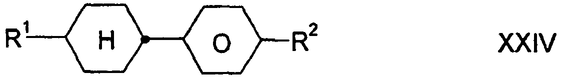 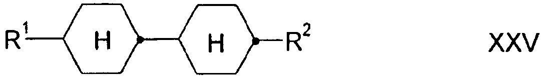 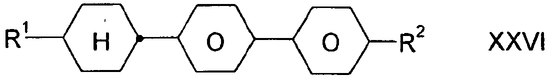 worin R¹ und R² die oben angegebene Bedeutung haben und vorzugsweise bedeutet Alkyl oder Alkoxy mit 1 bis 8 C-Atomen bedeuten;
- Das Medium enthält zusätzlich eine oder mehrere Verbindungen der folgenden Formel: 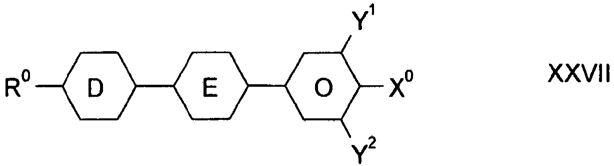 worin D, E, R⁰, X⁰ und Y^{1,2} die oben angegebene Bedeutung haben, wobei D und E nicht gleichzeitig Cyclohexylen bedeuten;
- Die Verbindungen der Formel XXVII sind vorzugsweise ausgewählt aus folgenden Formeln: 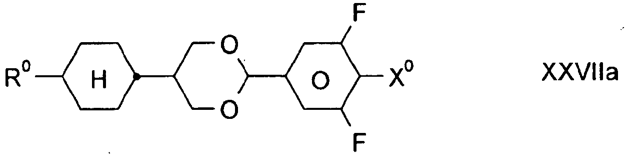 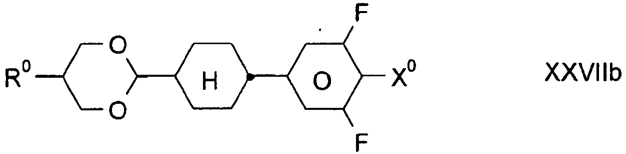 worin R⁰ und X⁰ die oben angegebenen Bedeutungen haben. Vorzugsweise bedeutet R⁰ Alkyl mit 1 bis 8 C-Atomen und X⁰ F; 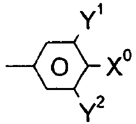 ist vorzugsweise 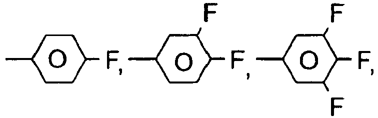 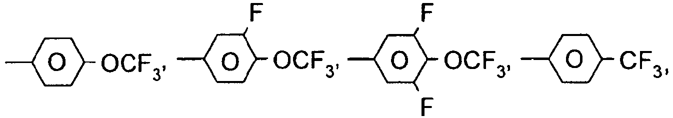 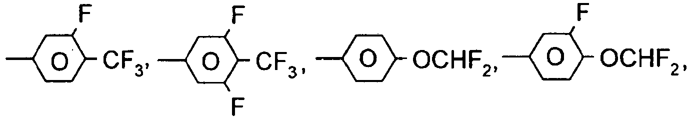 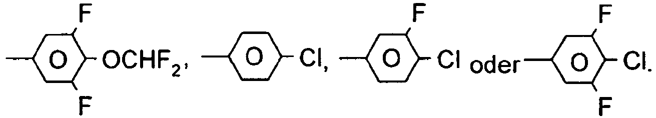
- R⁰ ist geradkettiges Alkyl oder Alkenyl mit 2 bis 7 C-Atomen;
- X⁰ ist F;
- Das Medium enthält eine, zwei, drei, vier oder fünf Verbindungen der Formel I;
- Das Medium enthält Verbindungen ausgewählt aus den Formeln I, II, III, V, VI-2, VII, XI, XII, XIV, XV, XXI, XXII und XXVII;
- Das Medium enthält 1-55 Gew.%, bevorzugt 3-45 Gew.% an Verbindungen der Formel I;
- Der Anteil an Verbindungen der Formeln II-XXVII im Gesamtgemisch beträgt 20 bis 99 Gew.%;
- Das Medium enthält 5-50 Gew.%, besonders bevorzugt 10-40 Gew.% an Verbindungen der Formel II und/oder III;
- Das Medium enthält 5-30 Gew.%, besonders bevorzugt 8-25 Gew.% an Verbindungen der Formel VI-2;
- Das Medium enthält 5-40 Gew.%, besonders bevorzugt 8-30 Gew.% an Verbindungen der Formel VII;
- Das Medium enthält 3-35 Gew.%, besonders bevorzugt 5-20 Gew.% an Verbindungen der Formel XI;
- Das Medium enthält 2-25 Gew.%, besonders bevorzugt 3-15 Gew.% an Verbindungen der Formel XIV;
- Das Medium enthält 1-15 Gew.%, besonders bevorzugt 2-10 Gew.% an Verbindungen der Formel XV;
- Das Medium enthält 3-30 Gew.%, besonders bevorzugt 6-20 Gew.% an Verbindungen der Formel XXI und/oder XXII;
- Das Medium enthält 1-25 Gew.%, besonders bevorzugt 2-20 Gew.% an Verbindungen der Formel XXVII.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formeln II bis XXVII zu einer beträchtlichen Erhöhung der Lichtstabilität und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr niedrige Schwellenspannungen und sehr gute Werte für die VHR bei UV-Belastung.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst geradkettige und verzweigte Alkenylgruppen mit 2-7 Kohlenstoffatomen, insbesondere die geradkettigen Gruppen. Bevorzugte Alkenylgruppen sind C₂-C₇-1 E-Alkenyl, C₄-C₇-3E-Alkenyl, C₅-C₇-4-Alkenyl, C₆-C₇-5-Alkenyl und C₇-6-

Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl,1E-Butenyl,1E-Pentenyl,1E-Hexenyl,1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluor-butyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst vorzugsweise geradkettige Reste der Formel CₙH₂ₙ₊₁-O-(CH₂)ₘ, worin n und m jeweils unabhängig voneinander 1 bis 6 bedeuten m kann auch 0 bedeuten. Vorzugsweise ist n = 1 und m 1-6 oder m = 0 und n = 1-3.

In den oben- und untenstehenden Formeln ist X⁰ vorzugsweise F, Cl oder ein- oder mehrfach fluoriertes Alkyl oder Alkoxy mit 1, 2 oder 3 C-Atomen oder ein- oder mehrfach fluoriertes Alkenyl mit 2 oder 3 C-Atomen. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CCIF₂, OCCIFCF₂CF₃ oder CH=CF₂, ganz besonders bevorzugt F, Cl oder OCF₃.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe K₁-Werte aus und besitzen somit deutlich schnellere Schaltzeilen als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formel IV bis VIII, worin X⁰ F, OCF₃, OCHF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formeln I, V und VI zeichnen sich durch ihre niedrige Schwellenspannung aus.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. TN- STN-, IPS- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und high-Δn-TFT-Anwendungen wie z. B. PDAs, Notebooks, LCD-TV und Monitore geeignet.

Die erfindungsgemäßen Flüssigkristallmischungen besitzen vorzugweise eine nematische Phase bis -20 °C und bevorzugt bis -30 °C, besonders bevorzugt bis -40 °C, und vorzugsweise einen Klärpunkt ≥ 60 °C, besonders bevorzugt ≥ 65°C, ganz besonders bevorzugt ≥ 70 °C.

Die Rotationsviskositäten γ₁ ist vorzugsweise ≤ 150 mPa·s, besonders bevorzugt ≤ 90 mpa·s. Dadurch können MFK-Anzeigen mit schnellen Schaltzeiten erzielt werden.

Die dielektrische Anisotropie der erfindungsgemäßen Flüssigkristallmischungen Δε ist vorzugsweise ≥ +1,5, besonders bevorzugt ≥ +3. Die Mischungen sind außerdem durch kleine Operationsspannungen gekennzeichnet. Die Schwellenspannung der erfindungsgemäßen Flüssigkristallmischungen ist vorzugsweise ≤ 2.0 V.

Die Doppelbrechung Δn der erfindungsgemäßen Flüssigkristallmischungen ist vorzugsweise ≥ 0,07, besonders bevorzugt ≥ 0,08.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von - 25° bis +70°C.

Es versteht sich, dass durch geeignete Wahl der Komponenten der erfindungsgemäßen Mischungen auch höhere Klärpunkte (z.B. oberhalb 100°C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δs und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich geringere Abnahme des HR unter UV-Belastung aufweisen als analoge Mischungen enthaltend anstelle den Verbindungen der Formel I Cyanophenylcyclohexane der Formel

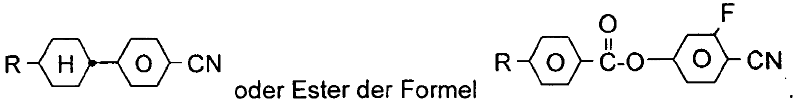

Die Lichtstabilität und UV-Stabilität der erfindungsgemäßen Mischungen ist erheblich besser, d.h. sie zeigen eine deutlich kleinere Abnahme des HR unter Licht- bzw. UV-Belastung. Bereits geringe Konzentrationen der Verbindungen (< 10 Gew.%) der Formel I in den Mischungen erhöhen die HR gegenüber Mischungen aus dem Stand der Technik um 6 % und mehr.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise, beispielsweise indem man eine oder mehrere Verbindungen der Formel I mit einer oder mehreren Verbindungen der Formeln II-XXIII oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Die Dielektrika können auch weitere, dem Fachmann bekannte und in der Literatur beschriebene Zusätze, wie z. B. UV-Stabilisatoren wie Tinuvin^{®} der Fa. Ciba, Antioxidantien, Radikalfänger, Nanopartikel, etc. enthalten. Beispielsweise können 0-15 % pleochroitische Farbstoffe oder chirale Dotierstoffe zugesetzt werden. Geeignete Dotierstoffe und Stabilisatoren werden nachfolgend in den Tabellen C und D genannt.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strich ein Code für die Substituenten R¹*, R²*, L¹* und L²*:

| Code für R¹*, R ²*, L¹*, L²*, L³* | R¹* | R²* | L¹* | L²* |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCI | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |

| Code für R¹*, R²*, L¹*, L²*, L³* | R¹* | R²* | L¹* | L²* |
|---|---|---|---|---|
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| | |
|---|---|
| 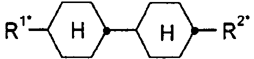 | 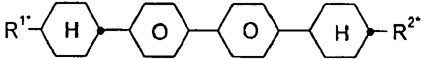 |
| **CCH** | **CBC** |
| 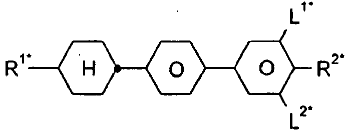 | 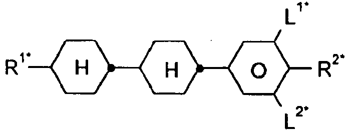 |
| **BCH** | **CCP** |
| 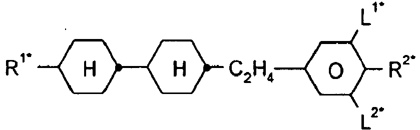 | 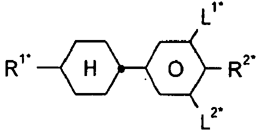 |
| **ECCP** | **PCH** |

**Tabelle B**

| | |
|---|---|
| 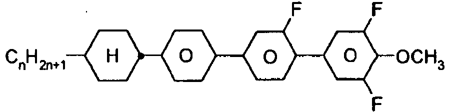 | 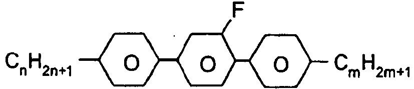 |
| **CPGU-n-OT** | **PGP-n-m** |
| 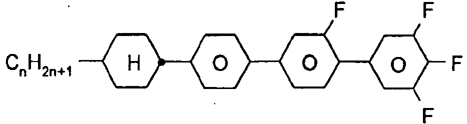 | 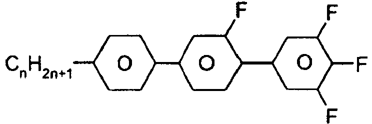 |
| **CPGU-n-F** | **PGU-n-F** |
| 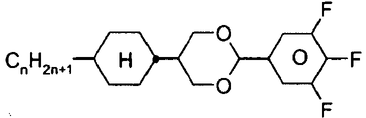 | 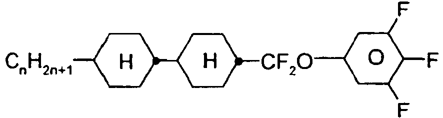 |
| **CDU-n-F** | **CCQU-n-F** |
| 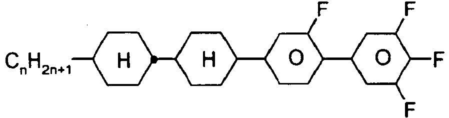 | 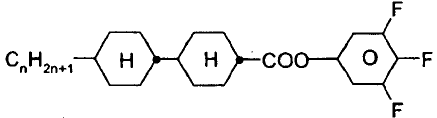 |
| **CCGU-n-F** | **CCZU-n-F** |
| 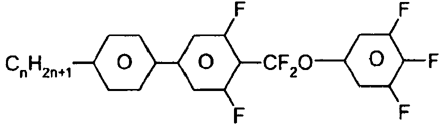 | 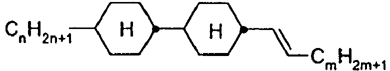 |
| **PUQU-n-F** | **CC-n-Vm** |
| 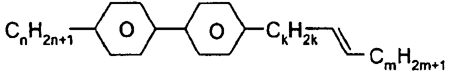 | 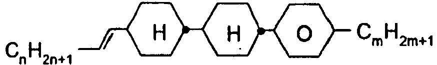 |
| **PP-n-kVm** | **CCP-nV-m** |
| 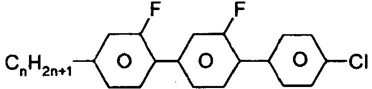 | 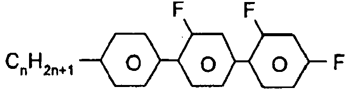 |
| **GGP-n-CI** | **PGIGI-n-F** |
| 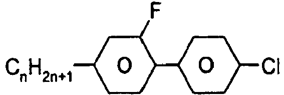 | 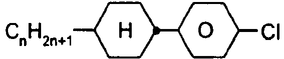 |
| **GP-n-C**I | **CP-n-CI** |
| 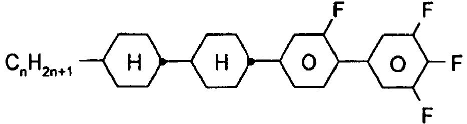 | 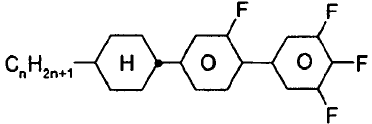 |
| **CCGU-n-F** | **CGU-n-F** |
| 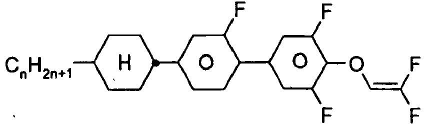 | 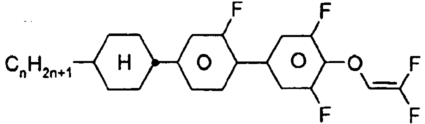 |
| **CGU-n-OXF** | **CGG-n-OXF** |
| 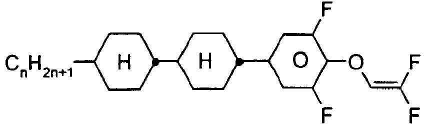 | 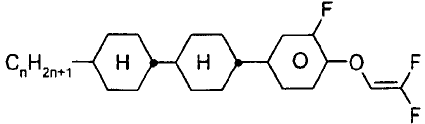 |
| **CCU-n-OXF** | **CCG-n-OXF** |
| 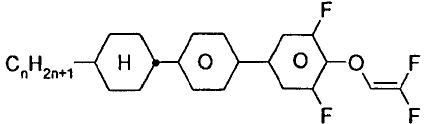 | 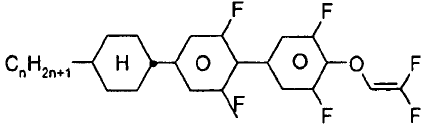 |
| **CPU-n-OXF** | **CUU-n-OXF** |
| 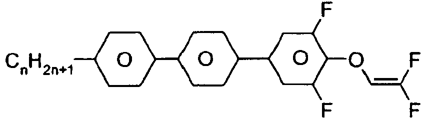 | 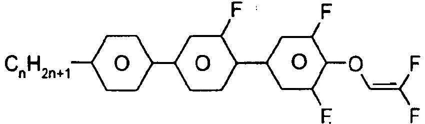 |
| **PPU-n-OXF** | **PGU-n-OXF** |
| 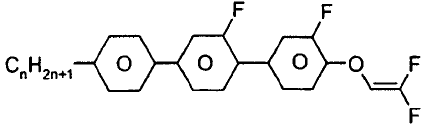 | 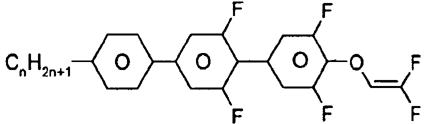 |
| **PGG-n-OXF** | **PUU-n-OXF** |
| 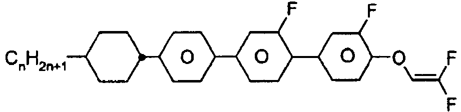 | 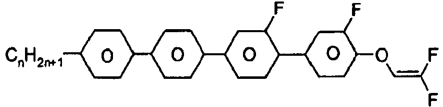 |
| **CPGU-n-OXF** | **PPGU-n-OXF** |
| 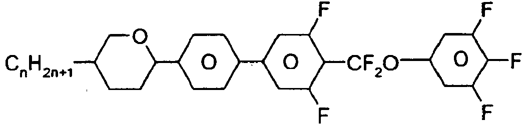 | |
| **APUQU-n-F** | |

Besonders bevorzugt sind flüssigkristalline Mischungen, die neben den Verbindungen der Formel I mindestens ein, zwei, drei, vier oder mehr Verbindungen aus der Tabelle B enthalten.

**Tabelle C**

| | |
|---|---|
| In der Tabelle C werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. | |
| 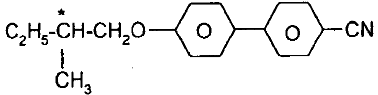 | 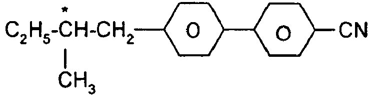 |
| **C 15** | **CB 15** |
| 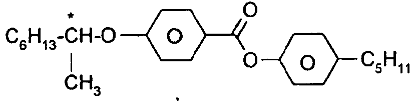 | 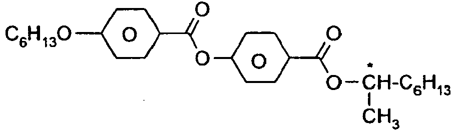 |
| **CM 21** | **R/S-811** |
| 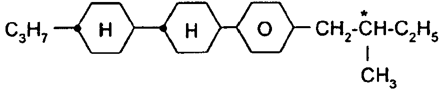 | 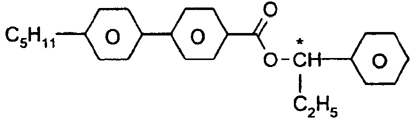 |
| **CM 44** | **CM 45** |
| 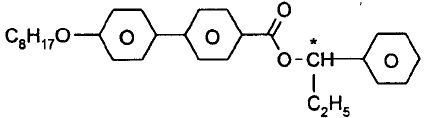 | 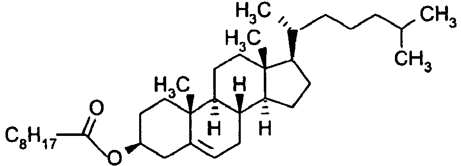 |
| **CM 47** | **CN** |
| 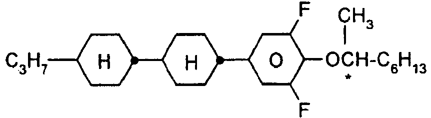 | 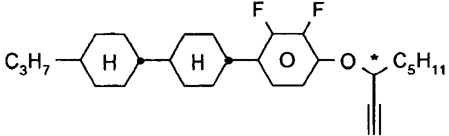 |
| **R/S-2011** | **R/S-3011** |
| 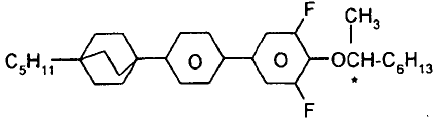 | 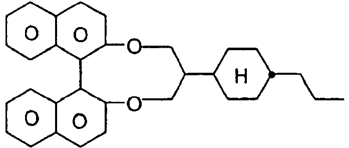 |
| **R/S-4011** | **R/S-5011** |
| 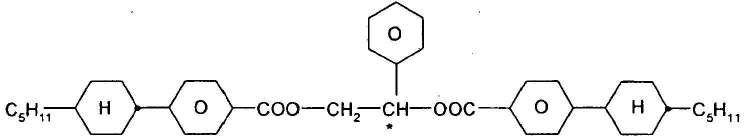 | |
| **R/S-1011** | |

**Tabelle D**

| | |
|---|---|
| Stabilisatoren, die beispielsweise den erfindungsgemäßen Mischungen in Mengen von 0-10 Gew.% zugesetzt werden können, werden nachfolgend genannt. | |
| 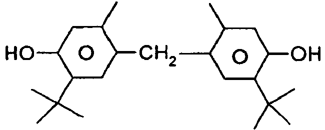 | 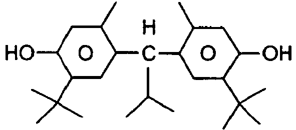 |
| 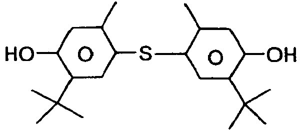 | 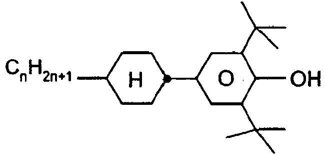 |
| 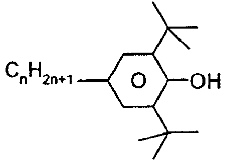 | 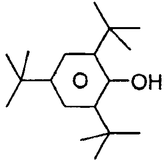 |
| 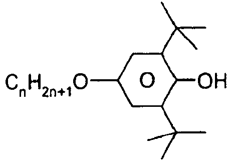 | 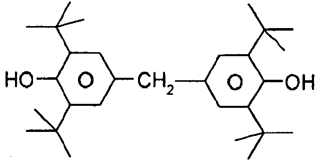 |
| 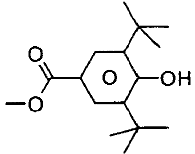 | 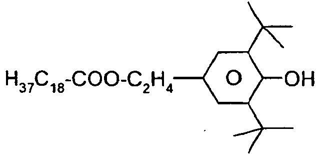 |
| 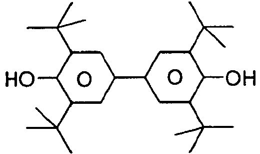 | 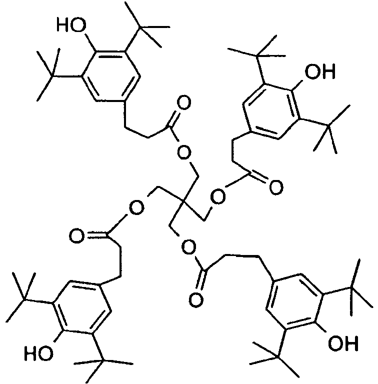 |
| 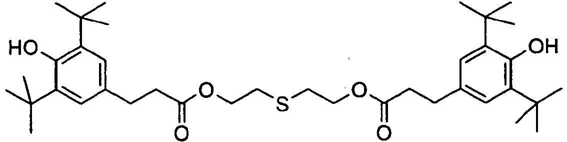 | |
| 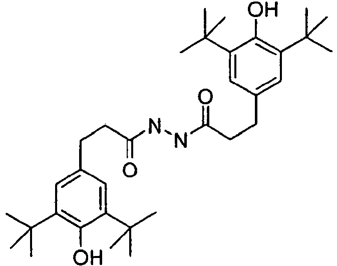 | 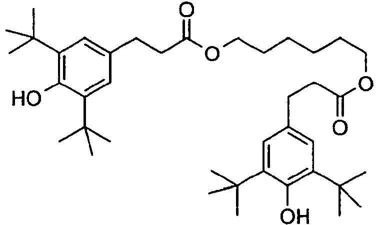 |
| 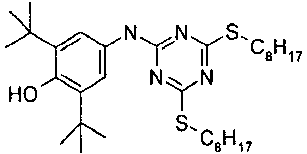 | 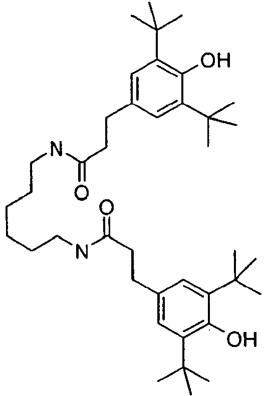 |
| 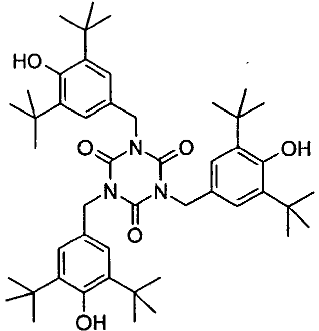 | 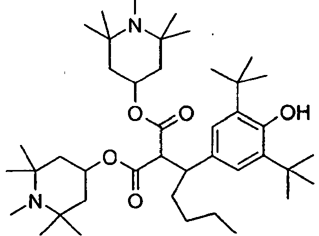 |
| 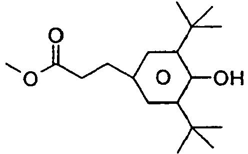 | 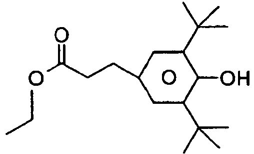 |
| 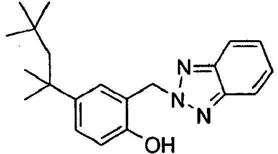 | 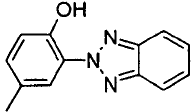 |
| 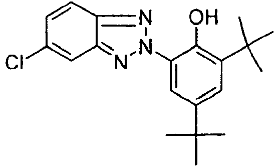 | 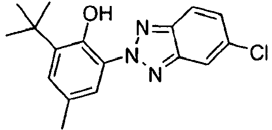 |
| 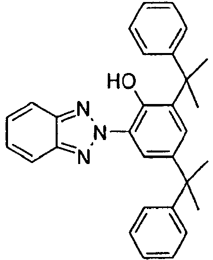 | 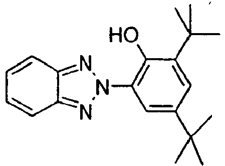 |
| 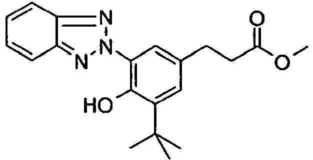 | 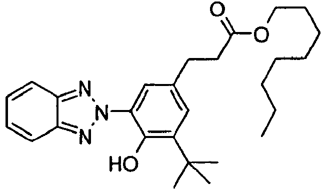 |
| 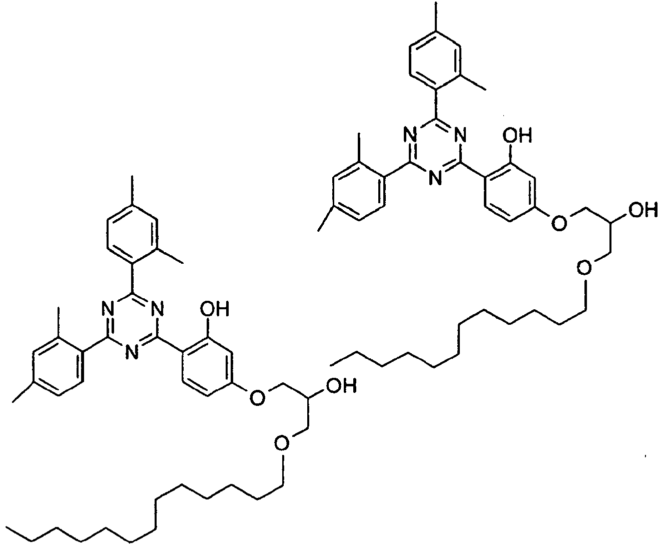 | |
| 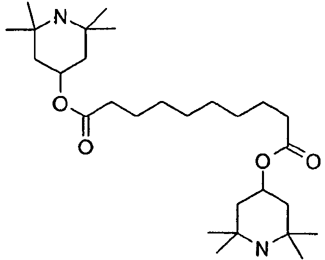 | 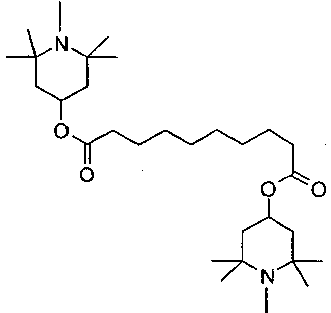 |

Die folgenden Beispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Δn die optische Anisotropie bei 589 nm und 20°C),
- γ₁ die Rotationsviskosität (mPa·s) bei 20°C.
- V₁₀ die Spannung (V) für 10 % Transmission (Blickrichtung senkrecht zur Plattenoberfläche), (Schwellenspannung),
- Δε die dielektrische Anisotropie bei 20°C und 1 kHz (Δε = ε_{∥} - ε_{⊥}, wobei
   ε_{∥} die Dielektrizitätskonstante parallel zu den Moleküllängsachsen und
   ε_{⊥} die Dielektrizitätskonstante senkrecht dazu bedeutet).

Die elektrooptischen Daten werden in einer TN-Zelle im 1. Minimum (d.h. bei einem d·Δn-Wert von 0,5 µm) bei 20°C gemessen, sofern nicht ausdrücklich etwas anderes angegeben wird. Die optischen Daten werden bei 20 °C gemessen, sofern nicht ausdrücklich etwas anderes angegeben wird. Alle physikalischen Eigenschaften werden nach "Merck Liquid Crystals, Physical Properties of Liquid Crystals" Status Nov. 1997, Merck KGaA, Deutschland bestimmt und gelten für eine Temperatur von 20 °C, sofern nicht explizit anders angegeben.

### Beispiel 1

Verbindung (1) wurde hergestellt wie oben beschrieben. 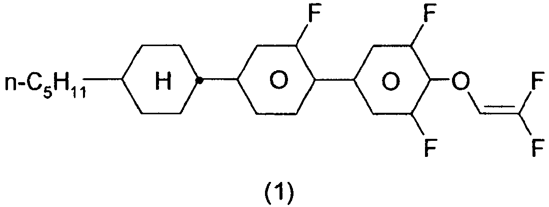 Phasenverhalten: K 21 N 90.4 I, Δn = 0.1510, Δε = +14.0

Analog wurden die folgenden Verbindungen hergestellt:

R-A¹-A²-A³-A⁴-O-CH=CF₂

| Nr. | R | A¹ | A² | A³ | A⁴ | |
|---|---|---|---|---|---|---|
| 2) | C₂H₅ | - | 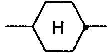 | 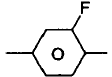 | 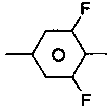 | K 9 N 36.7 I |
| | | | | | | Δn = 0.1490, Δε = +15.4 |
| 3) | n-C₃H₇ | - | 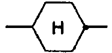 | 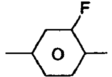 | 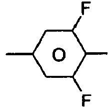 | K 36 N 80.7 I |
| | | | | | | Δn = 0.1550, Δε = +14.4 |
| 4) | n-C₄H₉ | - | 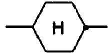 | 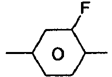 | 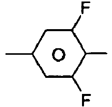 | |
| 5) | C₂H₅ | - | 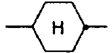 | 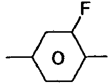 | 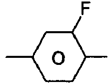 | K 24 N 41.2 I |
| | | | | | | Δn = 0.1480, Δε = +8.6 |
| 6) | n-C₃H₇ | - | 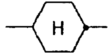 | 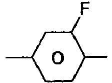 | 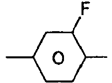 | K 35 N 90.1 I |
| | | | | | | Δn = 0.1540, Δε = +8.6 |
| 7) | n-C₄H₉ | - | 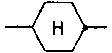 | 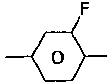 | 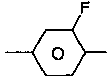 | |
| 8) | n-C₅H₁₁ | - | 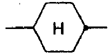 | 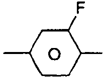 | 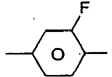 | K 48 N 96.6 I |
| | | | | | | Δn = 0.1470, Δε = +8.3 |
| 9) | C₂H₅ | - | 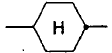 | 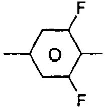 | 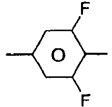 | K 78 I |
| | | | | | | Δn = 0.1500, Δε = +17.8 |
| 10) | n-C₃H₇ | - | 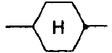 | 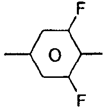 | 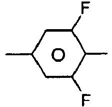 | K 87 N 91.5 I |
| | | | | | | Δn = 0.1440, Δε = +19.0 |
| 11) | n-C₄H₉ | - | 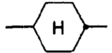 | 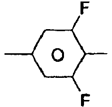 | 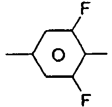 | |
| 12) | n-C₅H₁₁ | - | 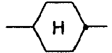 | 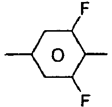 | 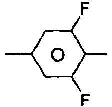 | K 86 I |
| | | | | | | Δn = 0.1420, Δε=+16.0 |
| 13) | C₂H₅ | - | 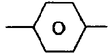 | 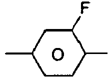 | 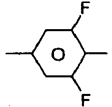 | K 32 S_{A} 105 I |
| | | | | | | Δn = 0.2381, Δε =+18.4 |
| 14) | n-C₃H₇ | - | 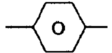 | 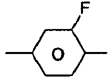 | 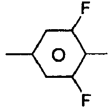 | |
| 15) | n-C₄H₉ | - | 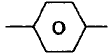 | 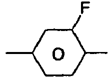 | 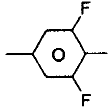 | K26S_{A}113I |
| | | | | | | Δn = 0.2277, Δε = +16.9 |
| 16) | n-C₅H₁₁ | - | 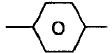 | 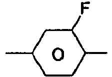 | 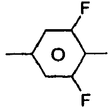 | |
| 17) | C₂H₅ | - | 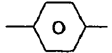 | 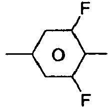 | 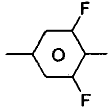 | |
| 18) | n-C₃H₇ | - | 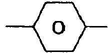 | 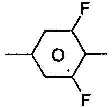 | 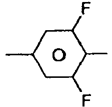 | |
| 19) | n-C₄H₉ | - | 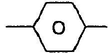 | 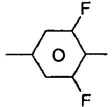 | 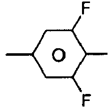 | |
| 20) | n-C₅H₁₁ | - | 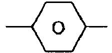 | 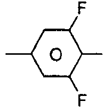 | 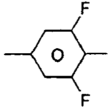 | K 82 |
| | | | | | | Δn = 0.2200, Δε = +24.5 |
| 21) | C₂H₅ | - | 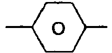 | 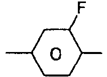 | 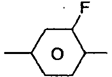 | |
| 22) | n-C₃H₇ | - | 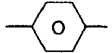 | 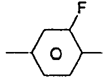 | 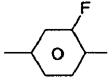 | |
| 23) | n-C₄H₉ | - | 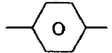 | 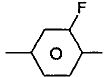 | 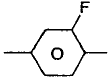 | |
| 24) | n-C₅H₁₁ | - | 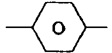 | 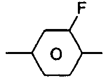 | 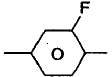 | |
| 25) | C₂H₅ | - | 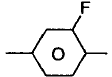 | 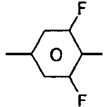 | 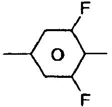 | |
| 26) | n-C₃H₇ | - | 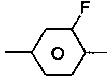 | 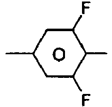 | 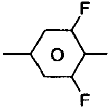 | |
| 27) | n-C₄H₉ | - | 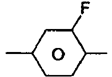 | 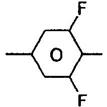 | 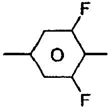 | |
| 28) | n-C₅H₁₁ | - | 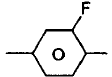 | 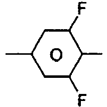 | 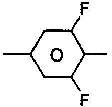 | |
| 29) | C₂H₅ | - | 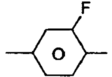 | 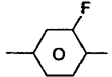 | 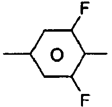 | |
| 30) | n-C₃H₇ | - | 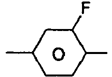 | 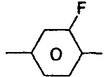 | 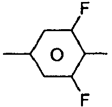 | |
| 31) | n-C₄H₉ | - | 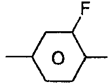 | 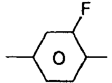 | 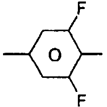 | |
| 32) | n-C₅H₁₁ | - | 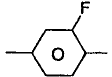 | 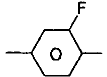 | 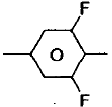 | |
| 33) | C₂H₅ | 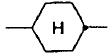 | 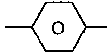 | 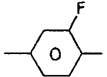 | 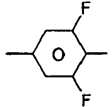 | |
| 34) | n-C₃H₇ | 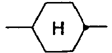 | 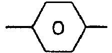 | 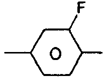 | 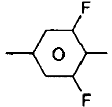 | K 78 S_{C} (68) S_{A} 182 N 263.6 I |
| | | | | | | Δn = 0.2188, Δε = +14.9 |
| 35) | n-C₄H₉ | 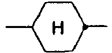 | 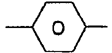 | 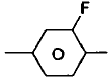 | 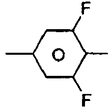 | |
| 36) | n-C₅H₁₁ | 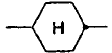 | 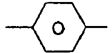 | 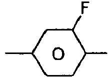 | 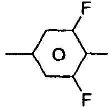 | |
| 37) | C₂H₅ | 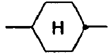 | 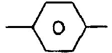 | 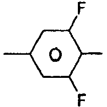 | 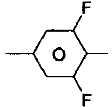 | |
| 38) | n-C₃H₇ | 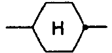 | 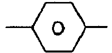 | 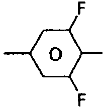 | 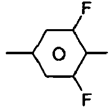 | |
| 39) | n-C₄H₉ | 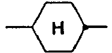 | 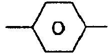 | 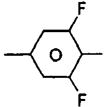 | 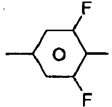 | |
| 40) | n-C₅H₁₁ | 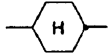 | 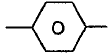 | 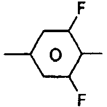 | 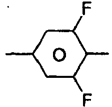 | |
| 41) | C₂H₅ | 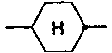 | 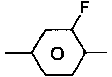 | 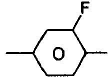 | 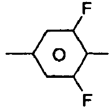 | |
| 42) | n-C₃H₇ | 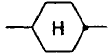 | 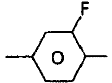 | 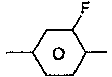 | 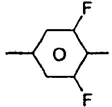 | |
| 43) | n-C₄H₉ | 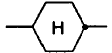 | 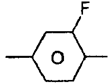 | 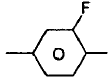 | 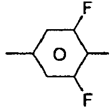 | |
| 44) | n-C₅H₁₁ | 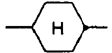 | 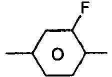 | 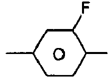 | 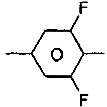 | |
| 45) | C₂H₅ | 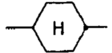 | 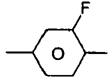 | 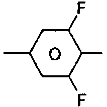 | 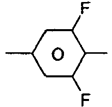 | |
| 46) | n-C₃H₇ | 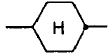 | 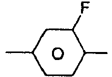 | 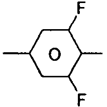 | 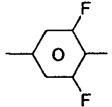 | |
| 47) | n-C₄H₉ | 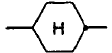 | 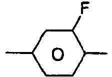 | 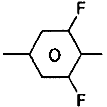 | 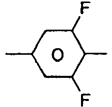 | |
| 48) | n-C₅H₁₁ | 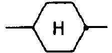 | 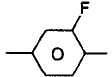 | 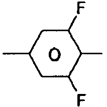 | 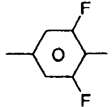 | |
| 49) | C₂H₅ | 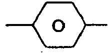 | 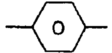 | 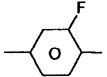 | 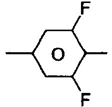 | |
| 50) | n-C₃H₇ | 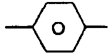 | 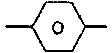 | 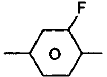 | 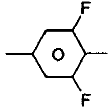 | |
| 51) | n-C₄H₉ | 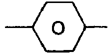 | 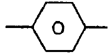 | 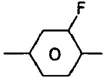 | 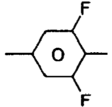 | |
| 52) | n-C₅H₁₁ | 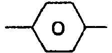 | 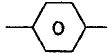 | 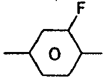 | 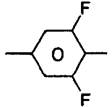 | |
| 53) | C₂H₅ | 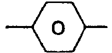 | 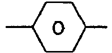 | 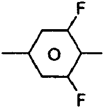 | 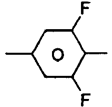 | |
| 54) | n-C₃H₇ | 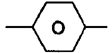 | 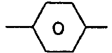 | 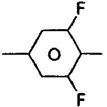 | 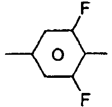 | |
| 55) | n-C₄H₉ | 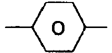 | 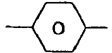 | 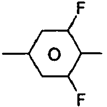 | 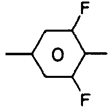 | |
| 56) | n-C₅H₁₁ | 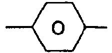 | 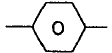 | 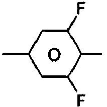 | 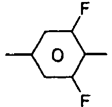 | |
| 57) | C₂H₅ | 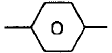 | 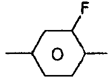 | 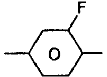 | 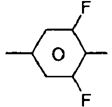 | |
| 58) | n-C₃H₇ | 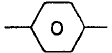 | 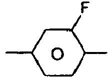 | 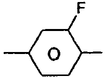 | 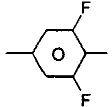 | |
| 59) | n-C₄H₉ | 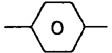 | 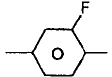 | 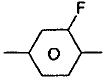 | 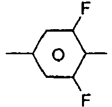 | |
| 60) | n-C₅H₁₁ | 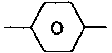 | 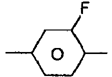 | 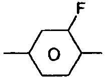 | 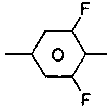 | |
| 61) | C₂H₅ | 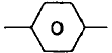 | 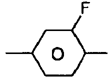 | 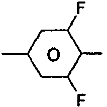 | 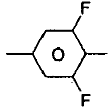 | |
| 62) | n-C₃H₇ | 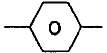 | 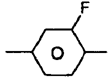 | 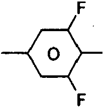 | 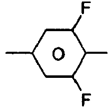 | |
| 63) | n-C₄H₉ | 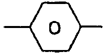 | 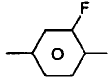 | 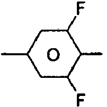 | 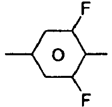 | |
| 64) | n-C₅H₁₁ | 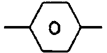 | 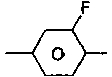 | 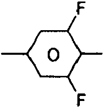 | 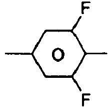 | |
| 65) | C₂H₅ | 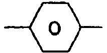 | 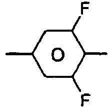 | 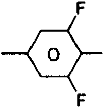 | 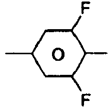 | |
| 66) | n-C₃H₇ | 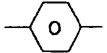 | 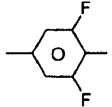 | 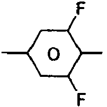 | 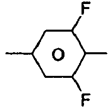 | |
| 67) | n-C₄H₉ | 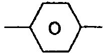 | 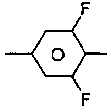 | 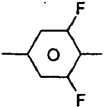 | 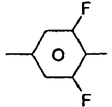 | |
| 68) | n-C₅H₁₁ | 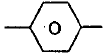 | 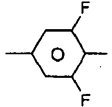 | 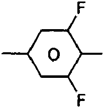 | 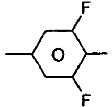 | |
| 69) | C₂H₅ | 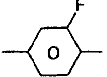 | 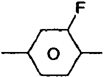 | 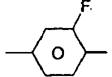 | 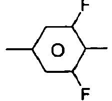 | |
| 70) | n-C₃H₇ | 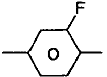 | 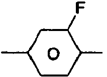 | 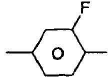 | 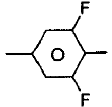 | |
| 71) | n-C₄H₉ | 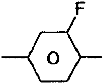 | 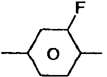 | 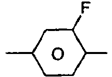 | 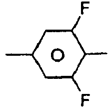 | |
| 72) | n-C₅H₁₁ | 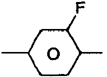 | 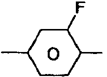 | 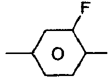 | 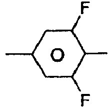 | |
| 73) | C₂H₅ | 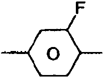 | 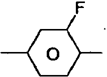 | 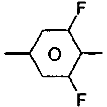 | 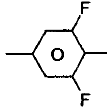 | |
| 74) | n-C₃H₇ | 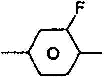 | 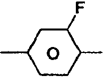 | 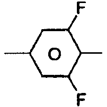 | 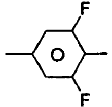 | |
| 75) | n-C₄H₉ | 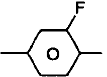 | 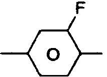 | 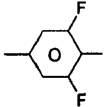 | 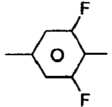 | |
| 76) | n-C₅H₁₁ | 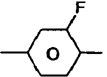 | 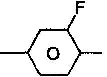 | 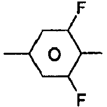 | 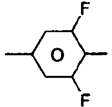 | |
| 77) | C₂H₅ | 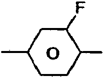 | 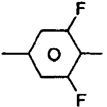 | 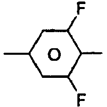 | 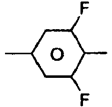 | |
| 78) | n-C₃H₇ | 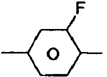 | 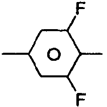 | 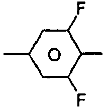 | 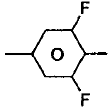 | |
| 79) | n-C₄H₉ | 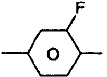 | 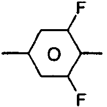 | 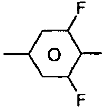 | 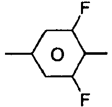 | |
| 80) | n-C₅H₁₁ | 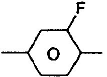 | 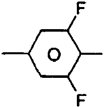 | 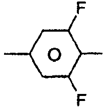 | 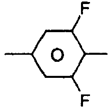 | |
| 81) | C₂H₅ | 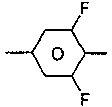 | 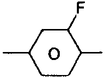 | 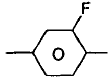 | 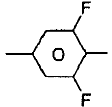 | |
| 82) | n-C₃H₇ | 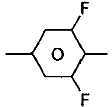 | 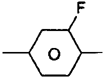 | 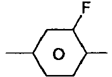 | 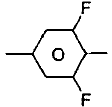 | |
| 83) | n-C₄H₉ | 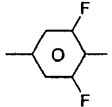 | 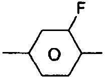 | 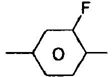 | 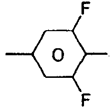 | |
| 84) | n-C₅H₁₁ | 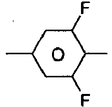 | 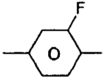 | 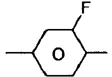 | 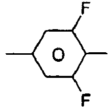 | |
| 85) | C₂H₅ | 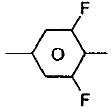 | 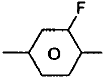 | 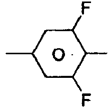 | 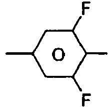 | |
| 86) | n-C₃H₇ | 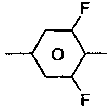 | 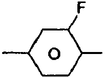 | 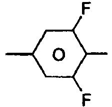 | 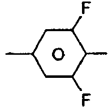 | |
| 87) | n-C₄H₉ | 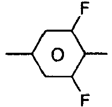 | 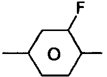 | 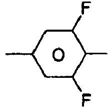 | 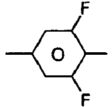 | |
| 88) | n-C₅H₁₁ | 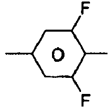 | 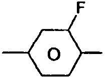 | 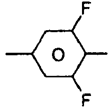 | 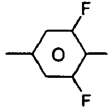 | |
| 89) | C₂H₅ | 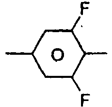 | 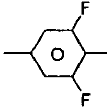 | 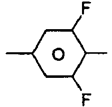 | 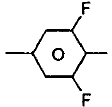 | |
| 90) | n-C₃H₇ | 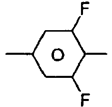 | 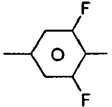 | 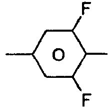 | 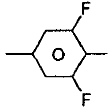 | |
| 91) | n-C₄H₉ | 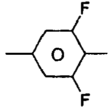 | 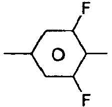 | 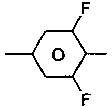 | 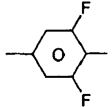 | |
| 92) | n-C₅H₁₁ | 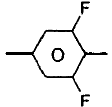 | 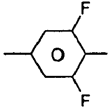 | 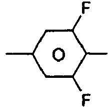 | 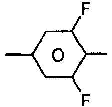 | |

### Vergleichsbeispiel 1

Eine FK-Mischung wird wie folgt formuliert:

| | | | |
|---|---|---|---|
| GGP-3-Cl | 6,00 % | Klärpunkt [°C]: | 77,0 |
| BCH-3F.F.F | 15,00 % | Δn [589 nm, 20 °C]: | 0,1309 |
| BCH-5F.F.F | 10,00 % | Δε [kHz, 20 °C]: | +13,7 |
| CCQU-2-F | 10,00 % | γ₁ [mPa·s, 20 °C]: | 147 |
| CCQU-3-F | 10,00 % | V₁₀ [V]: | 1,05 |
| CCQU-5-F | 3,00 % | | |
| CGU-3-F | 8,00 % | | |
| CCGU-3-F | 2,00 % | | |
| PUQU-3-F | 10,00 % | | |
| CPGU-3-OT | 8,00 % | | |
| CC-3-V | 7,00 % | | |
| PP-1-2V1 | 4,00 % | | |
| CCP-V-1 | 4,00 % | | |
| PGP-2-4 | 3,00 % | | |

### Mischungsbeispiel 1

Eine FK-Mischung wird wie folgt formuliert:

| | | | |
|---|---|---|---|
| GGP-3-Cl | 6,00 % | Klärpunkt [°C]: | 78,0 |
| BCH-3F.F.F | 15,00 % | Δn [589 nm, 20 °C]: | 0,1307 |
| BCH-5F.F.F | 10,00 % | Δε [kHz, 20 °C]: | +13,9 |
| CCQU-2-F | 10,00 % | γ₁ [mPa·s, 20 °C]: | 141 |
| CCQU-3-F | 10,00 % | V₁₀ [V]: | 1,07 |
| CCQU-5-F | 3,00 % | | |
| CGU-3-OXF | 9,00 % | | |
| CCGU-3-F | 2,00 % | | |
| PUQU-3-F | 10,00 % | | |
| CPGU-3-OT | 8,00 % | | |
| CC-3-V | 7,50 % | | |
| PP-1-2V1 | 5,50 % | | |
| CCP-V-1 | 4,00 % | | |

Die Mischung weist gegenüber Vergleichsbeispiel 1 eine geringere Viskosität bei nahezu unveränderten sonstigen Eigenschaften auf.

### Mischungsbeispiel 2

Eine FK-Mischung wird wie folgt formuliert:

| | | | |
|---|---|---|---|
| PGU-4-OXF | 5,00 % | Klärpunkt [°C]: | 76,0 |
| BCH-3F.F.F | 15,00 % | Δn [589 nm, 20 °C]: | 0,1303 |
| BCH-5F.F.F | 10,00 % | Δε [kHz, 20 °C]: | +14,0 |
| CCQU-2-F | 10,00 % | γ₁ [mPa·s, 20°C]: | 141 |
| CCQU-3-F | 10,00 % | V₁₀ [V]: | 1,04 |
| CCQU-5-F | 3,00 % | | |
| CGU-3-F | 8,00 % | | |
| CCGU-3-F | 2,00 % | | |
| PUQU-3-F | 10,00 % | | |
| CPGU-3-OT | 8,00 % | | |
| CC-3-V | 6,00 % | | |
| PP-1-2V1 | 4,00 % | | |
| CCP-V-1 | 4,00 % | | |
| PGP-2-4 | 5,00 % | | |

Die Mischung weist gegenüber Vergleichsbeispiel 1 eine geringere Viskosität bei nahezu unveränderten sonstigen Eigenschaften auf.

### Mischungsbeispiel 3

Eine FK-Mischung wird wie folgt formuliert:

| | | | |
|---|---|---|---|
| GGP-3-Cl | 6,00 % | Klärpunkt [°C]: | 76,0 |
| CPU-3-OXF | 25,00 % | Δn [589 nm, 20 °C]: | 0,1314 |
| CCQU-2-F | 10,00 % | Δε [kHz, 20 °C]: | +14,9 |
| CCQU-3-F | 10,00 % | γ₁ [mPa·s, 20 °C]: | 119 |
| CCQU-5-F | 3,00 % | V₁₀ [V]: | 1,02 |
| CGU-3-F | 8,00 % | | |
| PUQU-3-F | 14,00 % | | |
| CPGU-3-OT | 8,00 % | | |
| CC-3-V | 11,50 % | | |
| PP-1-2V1 | 3,50 % | | |
| CCP-V-1 | 1,00 % | | |

Die Mischung weist gegenüber Vergleichsbeispiel 1 eine geringere Viskosität bei nahezu unveränderten sonstigen Eigenschaften auf.

### Mischungsbeispiel 4

Eine FK-Mischung wird wie folgt formuliert:

| | | | |
|---|---|---|---|
| GGP-3-Cl | 6,00 % | Klärpunkt [°C]: | 78,0 |
| CPU-3-OXF | 25,00 % | Δn [589 nm, 20 °C]: | 0,1321 |
| CCQU-2-F | 10,00 % | Δε [kHz, 20 °C]: | +14,9 |
| CCQU-3-F | 11,00 % | γ₁ [mPa·s, 20 °C]: | 113 |
| CGU-3-OXF | 9,00 % | V₁₀ [V]: | 1,07 |
| PUQU-3-F | 14,50 % | | |
| CPGU-3-OT | 8,00 % | | |
| CC-3-V | 14,50 % | | |
| PP-1-2V1 | 2,00 % | | |

Die Mischung weist gegenüber Vergleichsbeispiel 1 eine geringere Viskosität bei nahezu unveränderten sonstigen Eigenschaften auf.

### Mischungsbeispiel 5

Eine FK-Mischung wird wie folgt formuliert:

| | | | |
|---|---|---|---|
| GGP-3-Cl | 4,00 % | Klärpunkt [°C]: | 79;5 |
| CPU-3-OXF | 25,00 % | Δn [589 nm, 20 °C]: | 0,1305 |
| CCQU-2-F | 5,00 % | Δε [kHz, 20°C]: | +15,1 |
| CCQU-3-F | 6,00 % | γ₁ [mPa·s, 20 °C]: | 108 |
| CCU-3-OXF | 10,00 % | V₁₀ [V]: | 1,04 |
| CGU-3-OXF | 9,00 % | | |

| | | | |
|---|---|---|---|
| PUQU-3-F | 17,00 % | | |
| CPGU-3-OT | 8,00 % | | |
| CC-3-V | 16,00 % | | |

Die Mischung weist gegenüber Vergleichsbeispiel 1 eine geringere Viskosität und einen höheren Klärpunkt bei nahezu unveränderten sonstigen Eigenschaften auf.

### Vergleichsbeispiel 2

Eine FK-Mischung wird wie folgt formuliert:

| | | | |
|---|---|---|---|
| APUQU-2-F | 7,50 % | Klärpunkt [°C]: | 89,9 |
| PUQU-3-F | 5,00 % | Δn [589 nm, 20 °C]: | 0,1302 |
| PGU-2-F | 7,00 % | Δε [kHz, 20 °C]: | +6,9 |
| PGU-3-F | 7,00 % | γ₁ [mPa·s, 20 °C]: | 86 |
| GGP-3-Cl | 5,50 % | | |
| CP-3-Cl | 3,00 % | | |
| CC-3-V | 28,50 % | | |
| CCP-V-1 | 15,00 % | | |
| CCP-V2-1 | 13,00 % | | |
| PGP-2-3 | 7,50 % | | |
| CBC-33F | 1,00 % | | |

### Mischungsbeispiel 6

Eine FK-Mischung wird wie folgt formuliert:

| | | | |
|---|---|---|---|
| APUQU-2-F | 9,00 % | Klärpunkt [°C]: | 89,0 |
| PUQU-3-F | 4,00 % | Δn [589 nm, 20 °C]: | 0,1285 |
| PGU-2-F | 9,00 % | Δε [kHz, 20 °C]: | +7,0 |
| PGU-3-F | 4,50 % | γ₁ [mPa·s, 20 °C]: | 76 |
| CP-3-Cl | 3,50 % | | |
| CC-3-V | 30,50 % | | |
| CCP-V-1 | 18,00 % | | |
| CCP-V2-1 | 7,00 % | | |
| PGP-2-3 | 6,00 % | | |
| PGP-2-4 | 5,00 % | | |
| CPGU-3-OXF | 3,50 % | | |

Die Mischung weist gegenüber Vergleichsbeispiel 2 eine geringere Viskosität bei nahezu unveränderten sonstigen Eigenschaften auf.

## Patentansprüche

1. Flüssigkristallines Medium, **dadurch gekennzeichnet, dass** es eine oder mehrere Verbindungen der Formel I 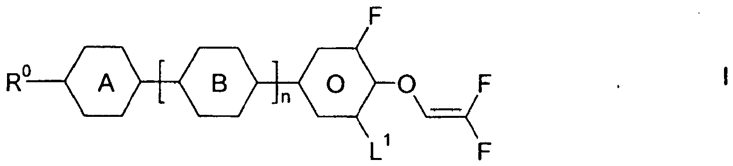 enthält, worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 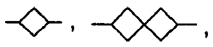 -O-, -CO-O- oder -O-CO- so ersetzt sein können, dass O-Atome nicht direkt miteinander verknüpft sind, und worin auch eine oder mehrere H-Atome durch Halogenatome ersetzt sein können,
L¹ H oder F,
n 1 oder 2, und 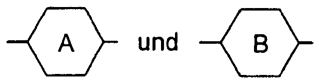 jeweils unabhängig voneinander 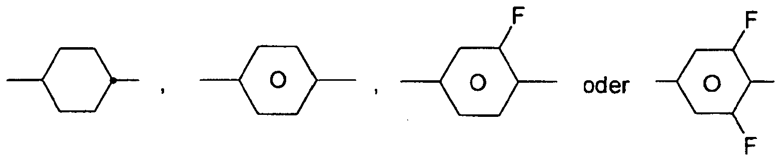 bedeuten, und zusätzlich
eine oder mehrere Verbindungen ausgewählt aus folgenden Formeln: 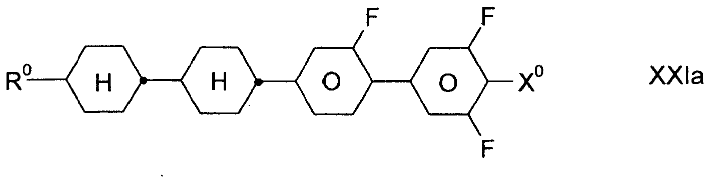 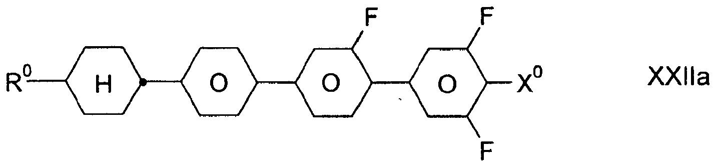 worin R⁰ wie für Formel I definiert ist, und
X⁰ F, Cl, CN, SF₅, SCN, NCS, halogenierter Alkylrest, halogenierter Alkenylrest, halogenierter Alkoxyrest oder halogenierter Alkenyloxy rest mit bis zu 6 C-Atomen
bedeutet.

2. Flüssigkristallines Medium nach Anspruch 1, **dadurch gekennzeichnet, dass** es eine oder mehrere Verbindungen ausgewählt aus folgenden Formeln enthält: 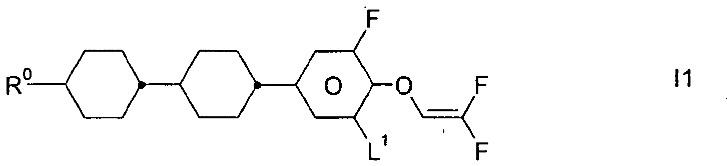 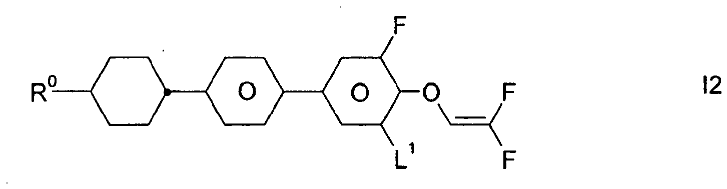 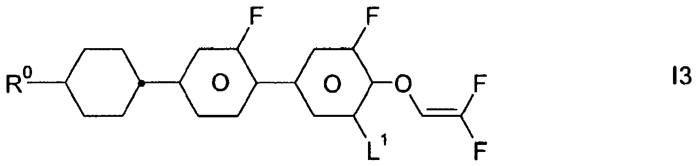 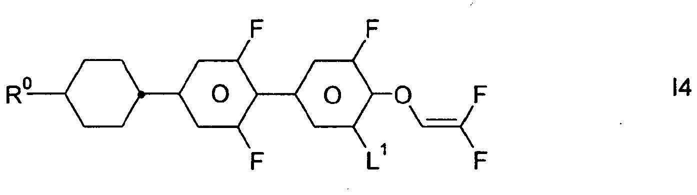 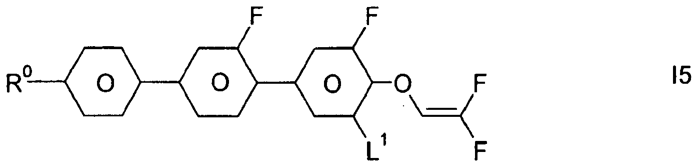 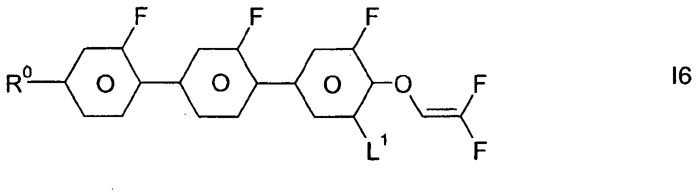 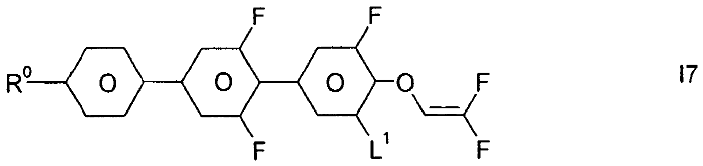 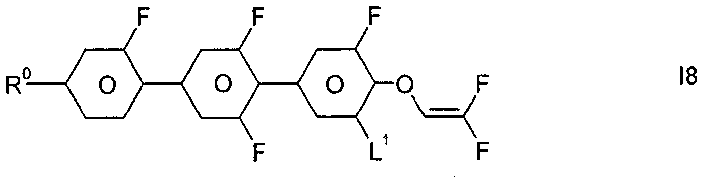 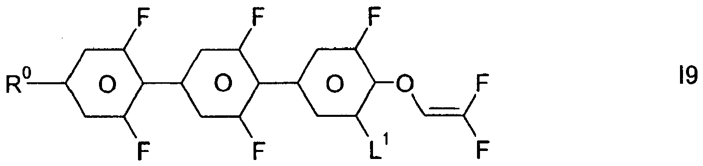 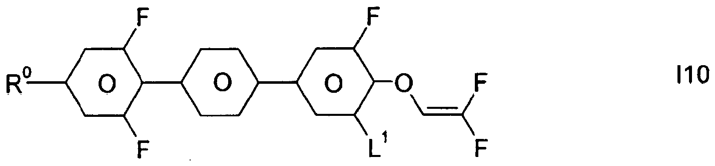 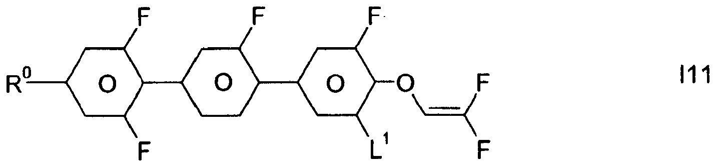 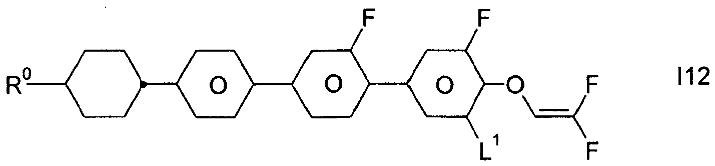 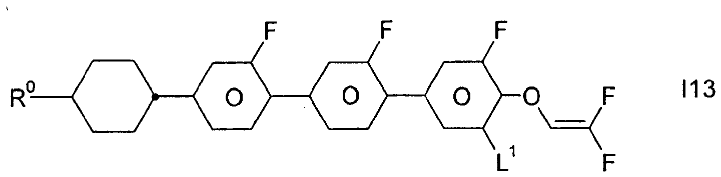 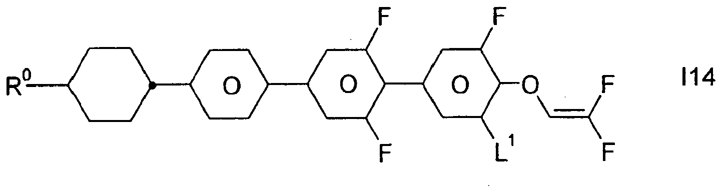 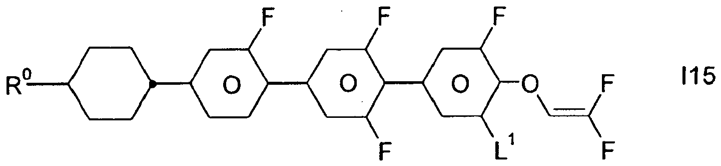 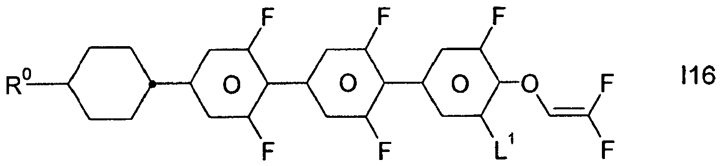 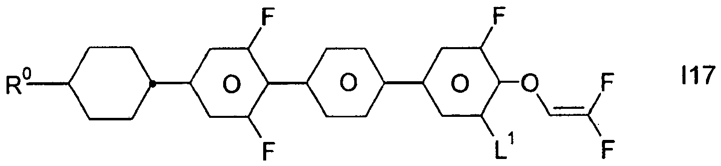 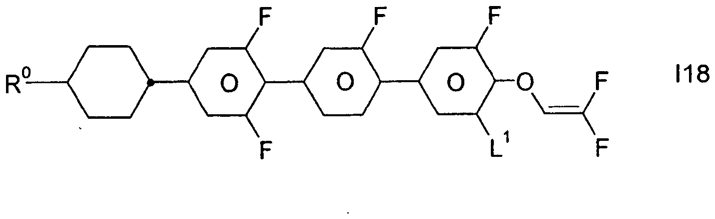 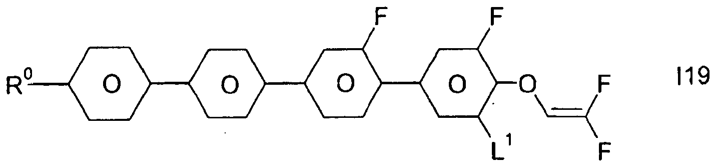 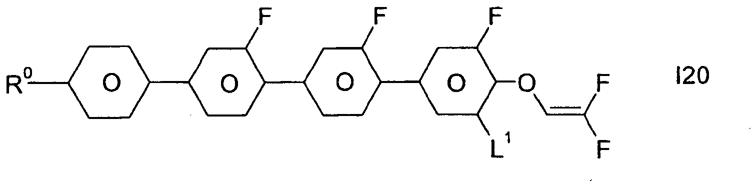 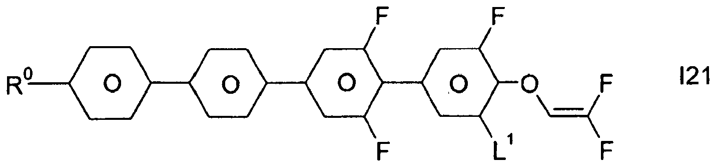 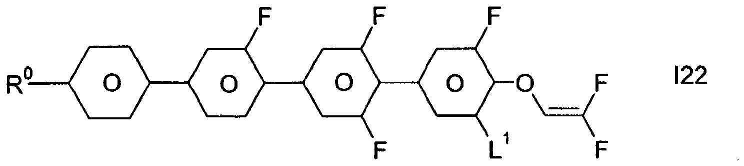 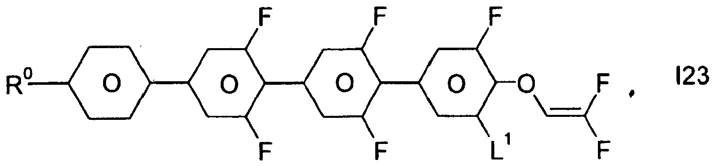 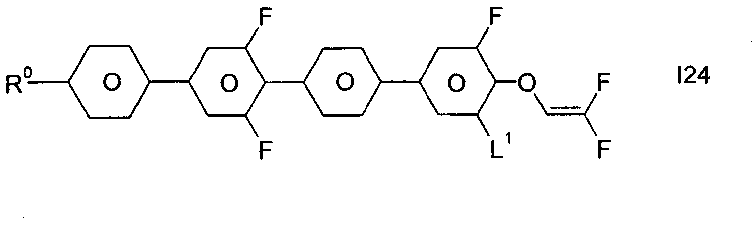 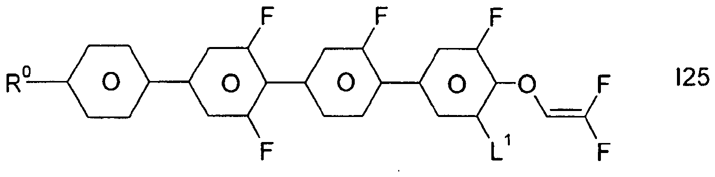 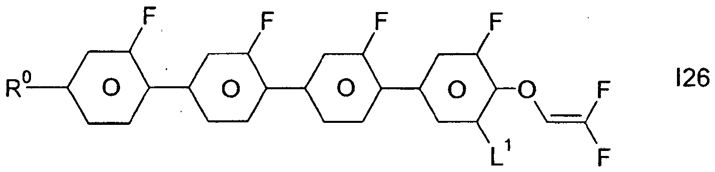 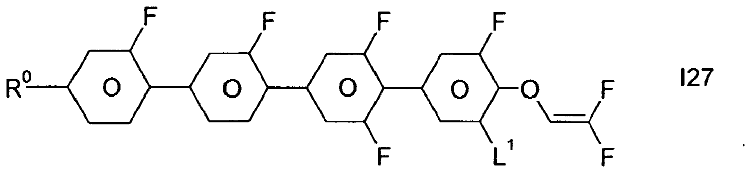 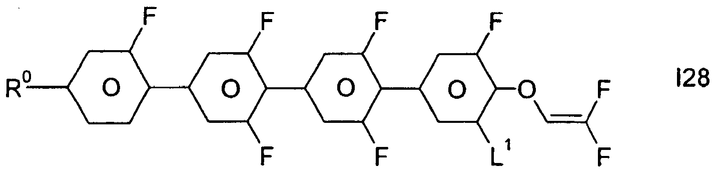 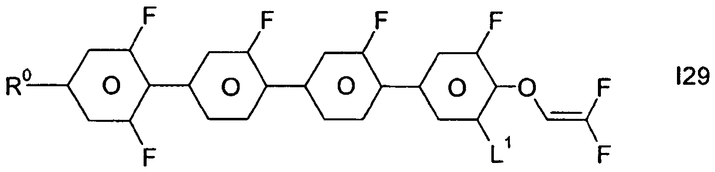 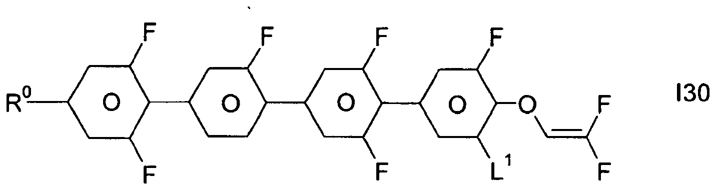 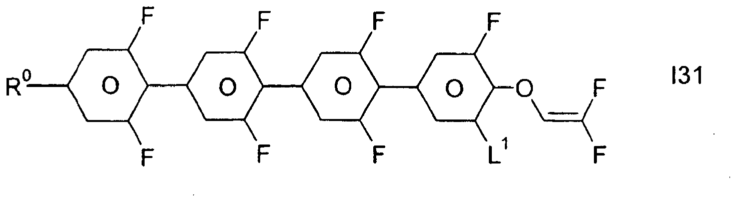 worin R⁰ und L¹ die in Anspruch 1 angegebene Bedeutung besitzen.

3. Flüssigkristallines Medium nach Anspruch 1 oder 2, **dadurch gekennzeichnet, dass** es eine zusätzlich eine oder mehrere Verbindungen der Formel II und/oder III enthält: 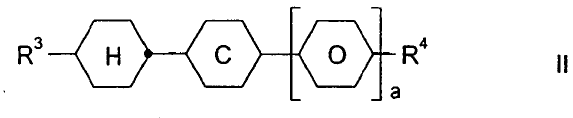 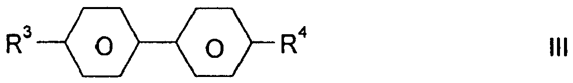 worin
Ring C 1,4-Phenylen oder trans-1,4-Cyclohexylen bedeutet,
a 0 oder 1 ist, und
R³ Alkenyl mit 2 bis 9 C-Atomen bedeutet,
und R⁴ die für R⁰ in Anspruch 1 angegebene Bedeutung besitzt.

4. Flüssigkristallines Medium nach einem oder mehreren der Ansprüche 1 bis 3, **dadurch gekennzeichnet, dass** es eine oder mehrere Verbindungen ausgewählt aus folgenden Formeln enthält: 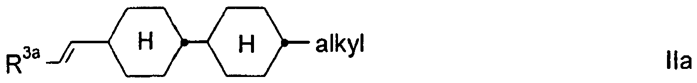 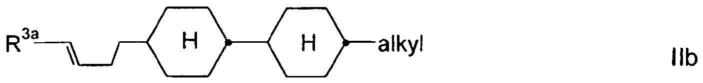 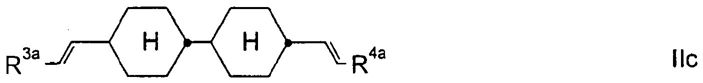 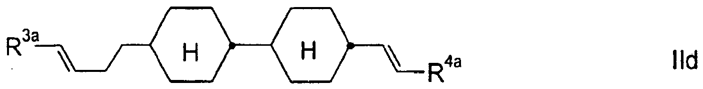 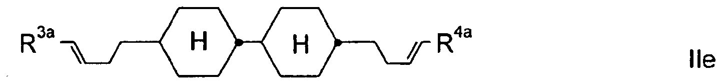 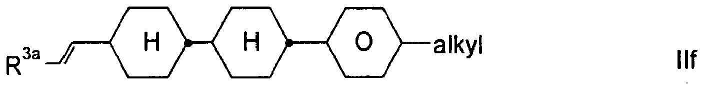 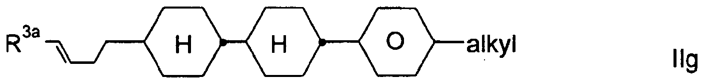 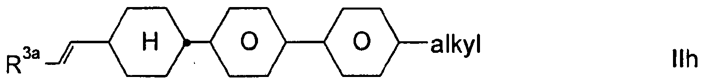 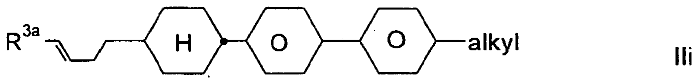 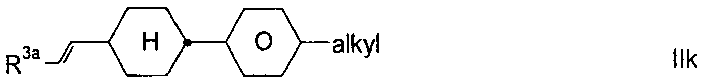 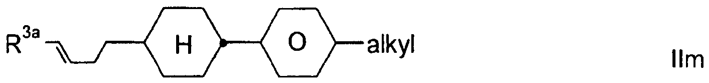 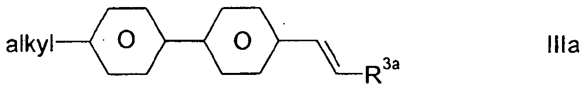 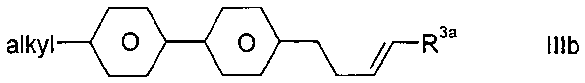 worin R^{3a} und R^{4a} jeweils unabhängig voneinander H, CH₃, C₂H₅ oder C₃H₇ bedeuten, und "alkyl" eine geradkettige Alkylgruppe mit 1 bis 8 C-Atomen bedeutet.

5. Flüssigkristallines Medium nach einem oder mehreren der Ansprüche 1 bis 4, **dadurch gekennzeichnet, dass** es eine zusätzlich eine oder mehrere Verbindungen ausgewählt aus folgenden Formeln enthält: 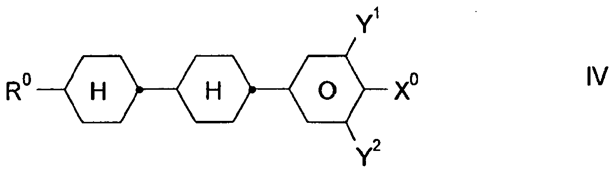 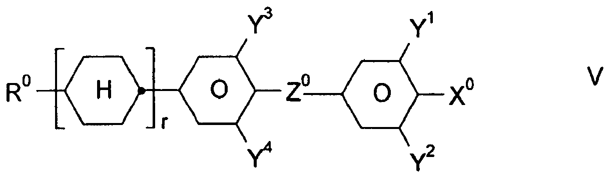 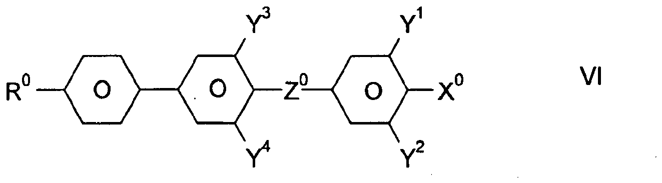 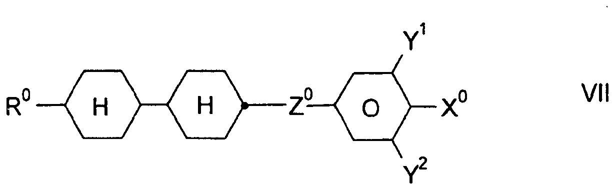 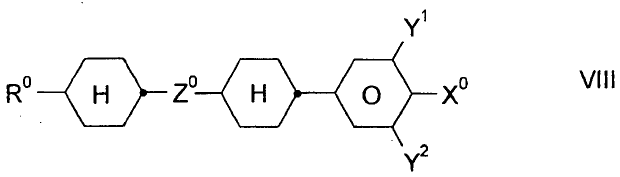 worin R⁰ die in Anspruch 1 angegebene Bedeutung besitzt,
Y¹⁻⁴ jeweils unabhängig voneinander H oder F,
X⁰ F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in Formel V und VI auch eine Einfachbindung, und
r 0 oder 1 bedeutet.

6. Flüssigkristallines Medium nach einem oder mehreren der Ansprüche 1 bis 5, **dadurch gekennzeichnet, dass** es eine oder mehrere Verbindungen ausgewählt aus folgenden Formeln enthält: 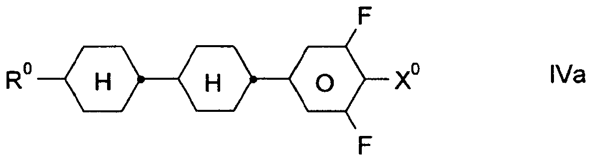 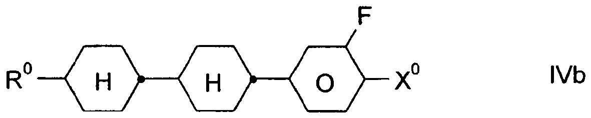 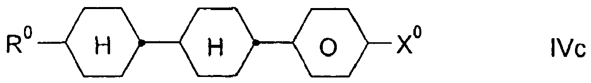 worin R⁰ und X⁰ die in Anspruch 5 angegebene Bedeutung haben.

7. Flüssigkristallines Medium nach einem oder mehreren der Ansprüche 1 bis 6, **dadurch gekennzeichnet, dass** es eine oder mehrere Verbindungen ausgewählt aus folgenden Formeln enthält: 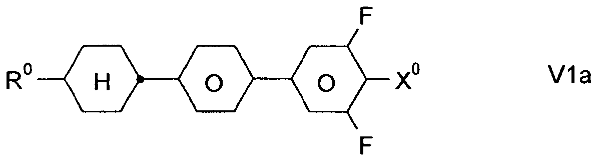 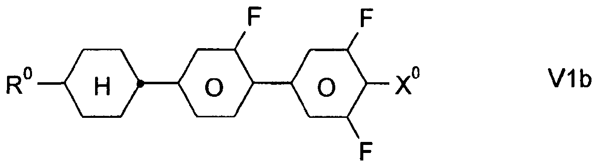 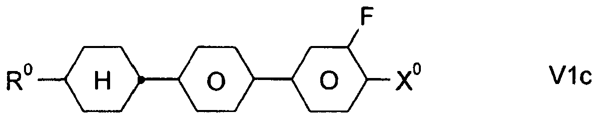 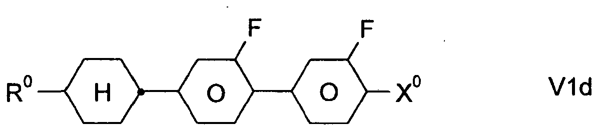 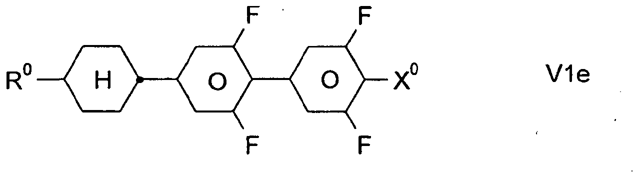 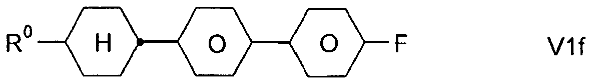 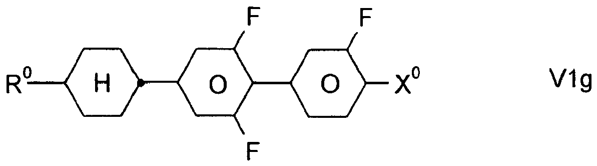 worin R⁰ und X⁰ die in Anspruch 5 angegebene Bedeutung haben.

8. Flüssigkristallines Medium nach einem oder mehreren der Ansprüche 1 bis 7, **dadurch gekennzeichnet, dass** es eine oder mehrere Verbindungen ausgewählt aus folgenden Formeln enthält: 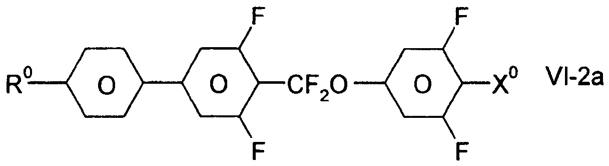 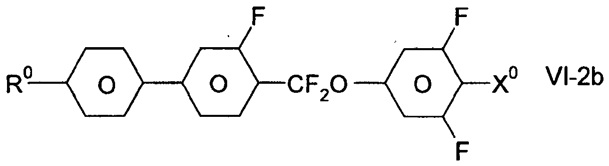 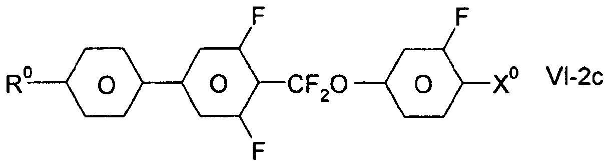 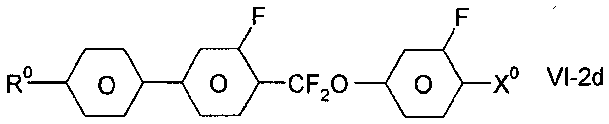 worin R⁰ und X⁰ die in Anspruch 5 angegebene Bedeutung haben.

9. Flüssigkristallines Medium nach einem oder mehreren der Ansprüche 1 bis 8, **dadurch gekennzeichnet, dass** es eine oder mehrere Verbindungen ausgewählt aus folgenden Formeln enthält: 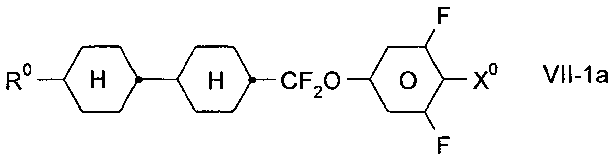 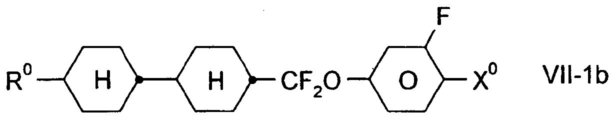 worin R⁰ und X⁰ die in Anspruch 5 angegebene Bedeutung haben.

10. Flüssigkristallines Medium nach einem oder mehreren der Ansprüche 1 bis 9, **dadurch gekennzeichnet, dass** es zusätzlich eine oder mehrere Verbindungen ausgewählt aus folgenden Formeln enthält: 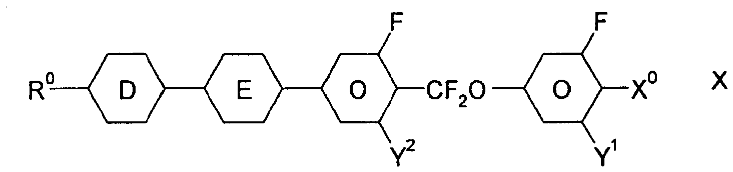 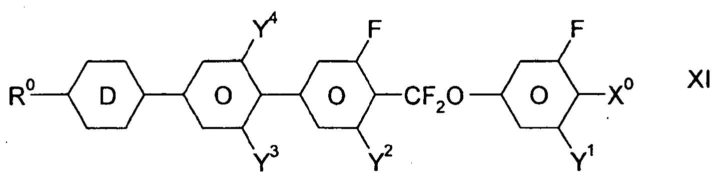 worin R⁰, X⁰ und Y¹⁻⁴ die in Anspruch 5 angegebene Bedeutung haben und 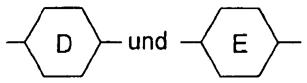 jeweils unabhängig voneinander 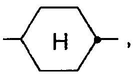 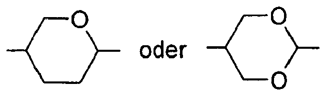 bedeuten.

11. Flüssigkristallines Medium nach einem oder mehreren der Ansprüche 1 bis 10, **dadurch gekennzeichnet, dass** es zusätzlich eine oder mehrere Verbindungen ausgewählt aus folgenden Formeln enthält: 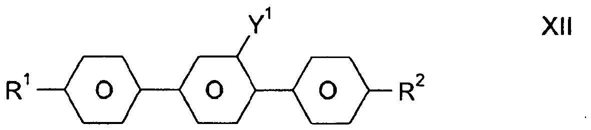 worin R¹ und R² jeweils unabhängig voneinander n-Alkyl, Alkoxy, Oxaalkyl, Fluoralkyl oder Alkenyl mit jeweils bis zu 9 C-Atomen bedeuten.

12. Flüssigkristallines Medium nach einem oder mehreren der Ansprüche 1 bis 11, **dadurch gekennzeichnet, dass** es zusätzlich eine oder mehrere Verbindungen ausgewählt aus folgenden Formeln enthält: 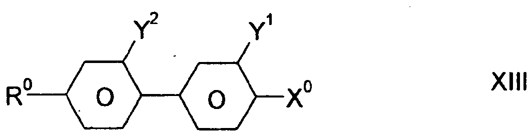 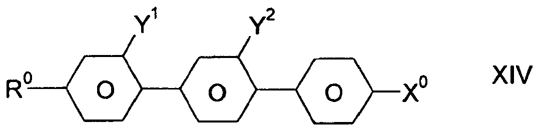 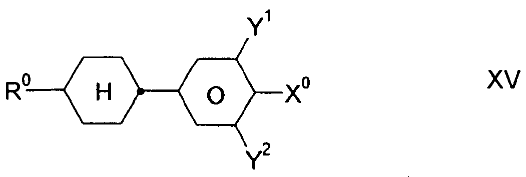 worin R⁰, X⁰, Y¹ und Y² die in Anspruch 5 angegebene Bedeutung haben.

13. Flüssigkristallines Medium nach einem oder mehreren der Ansprüche 1 bis 12, **dadurch gekennzeichnet, dass** es zusätzlich eine oder mehrere Verbindungen ausgewählt aus folgenden Formeln enthält: 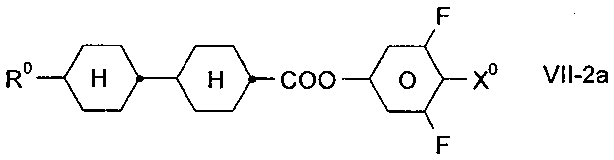 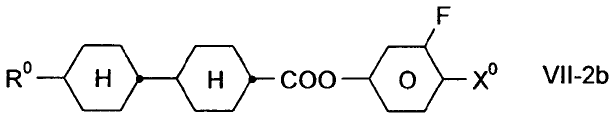 worin R⁰ und X⁰ die in Anspruch 5 angegebene Bedeutung haben.

14. Flüssigkristallines Medium nach einem oder mehreren der Ansprüche 1 bis 13, **dadurch gekennzeichnet, dass** es zusätzlich eine oder mehrere Verbindungen ausgewählt aus folgenden Formeln enthält: 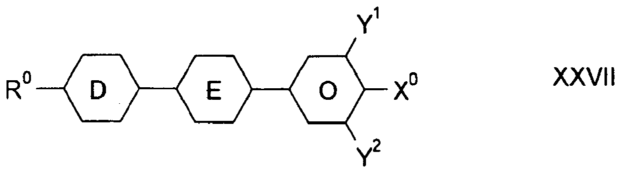 worin D und E die Anspruch 10 angegebene Bedeutung haben, R⁰, X⁰ und Y^{1,2} die in Anspruch 5 angegebene Bedeutung haben, und D und E nicht gleichzeitig Cyclohexylen bedeuten.

15. Flüssigkristallines Medium nach einem oder mehreren der Ansprüche 1 bis 14, **dadurch gekennzeichnet, dass** es
1-25 Gew.% an Verbindungen der Formel I,
25-80 Gew.% an Verbindungen der Formel II und/oder III,
5-30 Gew.%, an Verbindungen der Formel VI-2,
enthält.

16. Verwendung eines flüssigkristallinen Mediums nach einem oder mehreren der Ansprüche 1 bis 15 für elektrooptische Zwecke.

17. Elektrooptische Flüssigkristallanzeige enthaltend ein flüssigkristallines Medium nach einem oder mehreren der Ansprüche 1 bis 15.

18. Verfahren zur Herstellung eines flüssigkristallinen Mediums nach einem oder mehreren der Ansprüche 1 bis 15, **dadurch gekennzeichnet, dass** man eine oder mehrere Verbindungen der Formel I wie in Anspruch 1 oder 2 definiert mit einer oder mehreren Verbindungen gemäß einem oder mehreren der Ansprüche 3 bis 14 oder mit weiteren flüssigkristallinen Verbindungen und/oder Additiven mischt.

## Claims

1. Liquid-crystalline medium, **characterised in that** it comprises one or more compounds of the formula I 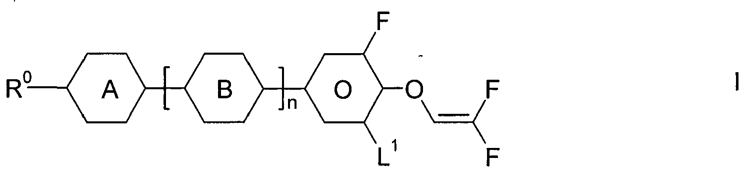 in which
R⁰ denotes an alkyl or alkoxy radical having 1 to 15 C atoms, where, in addition, one or more CH₂ groups in these radicals may each be replaced, independently of one another, by -C≡C-, -CF₂O-, -CH=CH-, 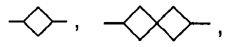 -O-, -CO-O- or -O-COin such a way that O atoms are not linked directly to one another, and in which, in addition, one or more H atoms may be replaced by halogen atoms,
L¹ denotes H or F,
n denotes 1 or 2, and 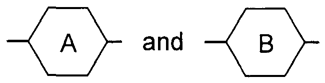 each, independently of one another, denote 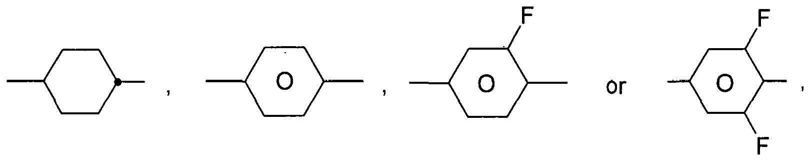 and additionally
one or more compounds selected from the following formulae: 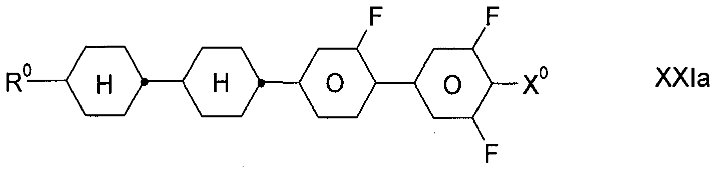 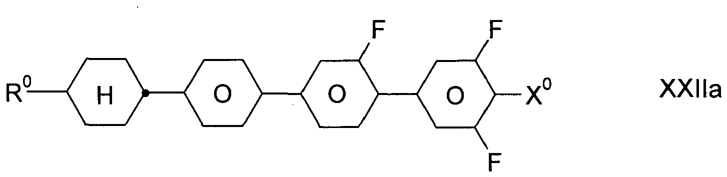 in which R⁰ is as defined for formula I, and
X⁰ denotes F, CI, CN, SF₅, SCN, NCS, a halogenated alkyl radical, a halogenated alkenyl radical, a halogenated alkoxy radical or a halogenated alkenyloxy radical having up to 6 C atoms.

2. Liquid-crystalline medium according to Claim 1, **characterised in that** it comprises one or more compounds selected from the following formulae: 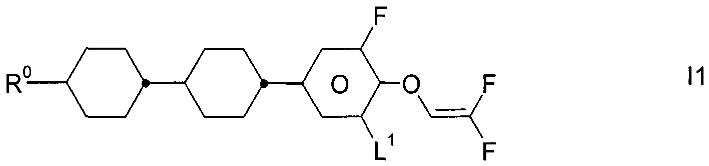 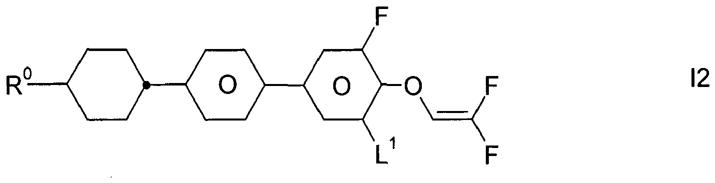 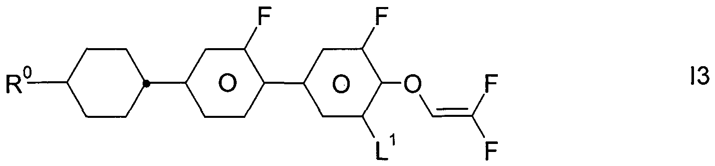 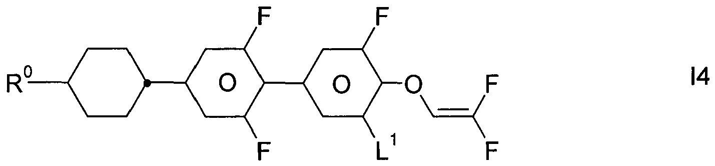 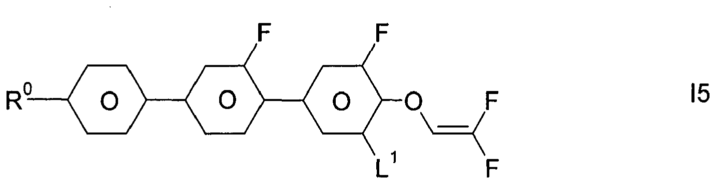 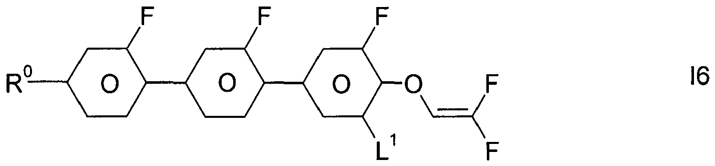 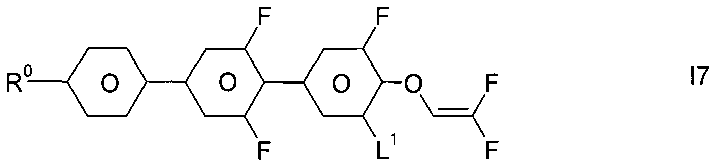 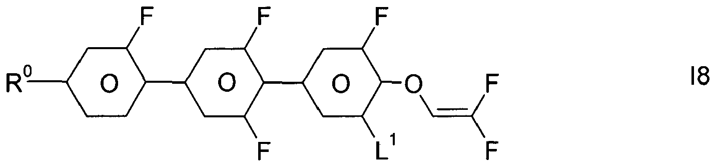 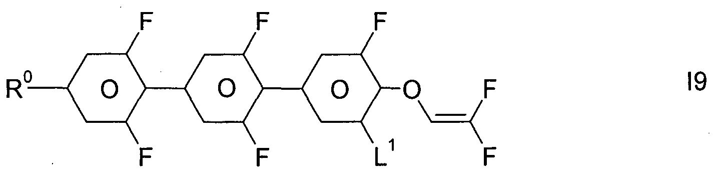 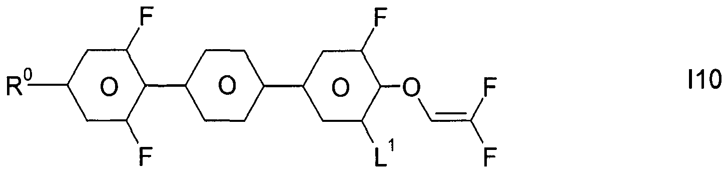 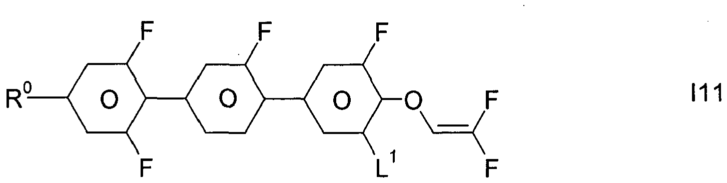 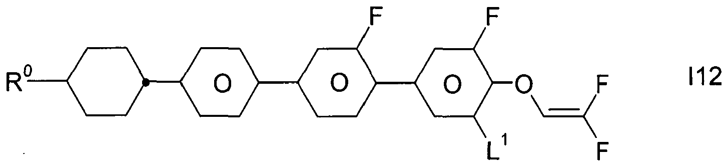 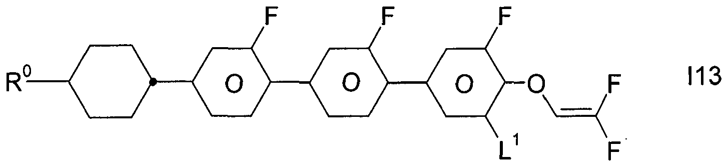 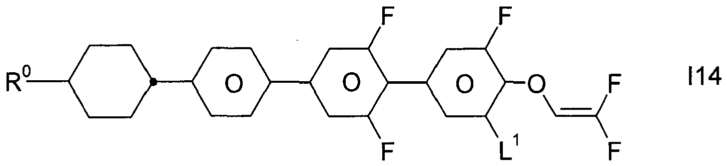 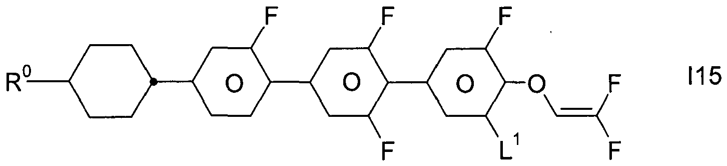 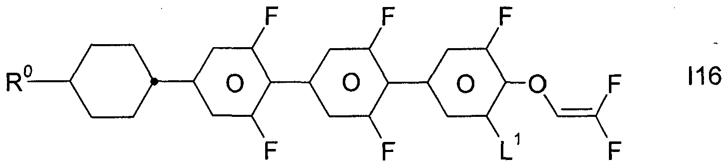 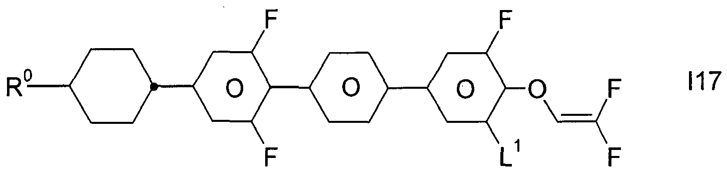 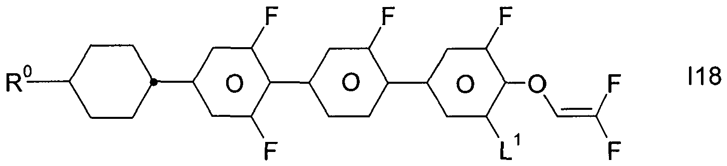 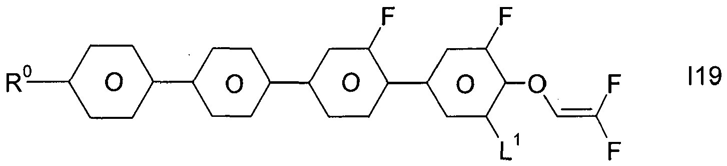 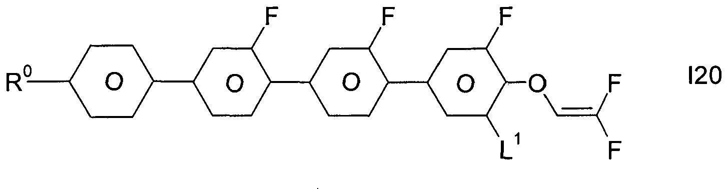 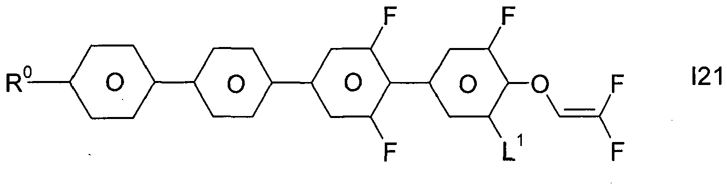 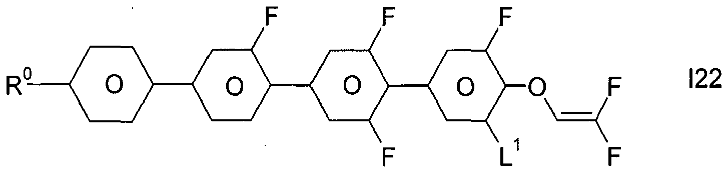 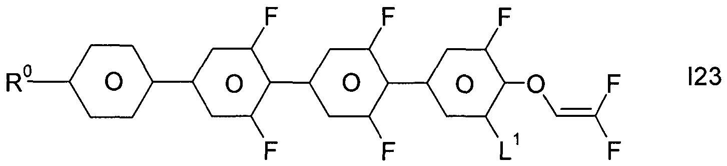 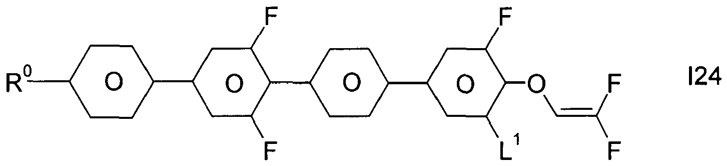 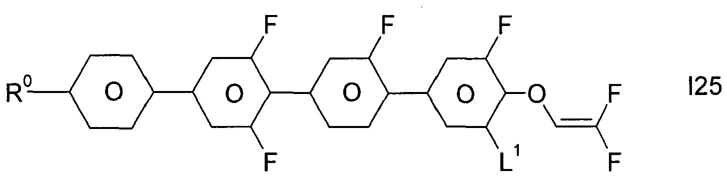 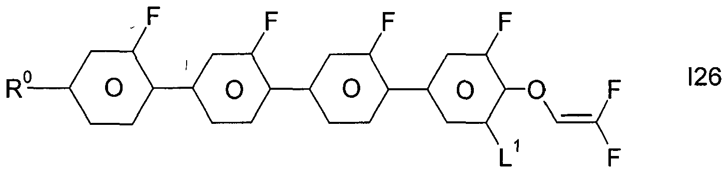 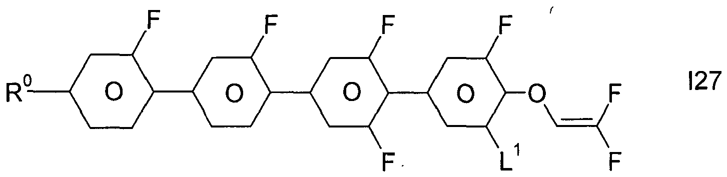 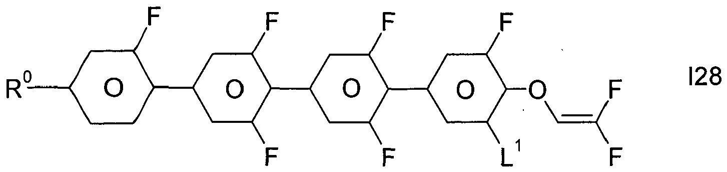 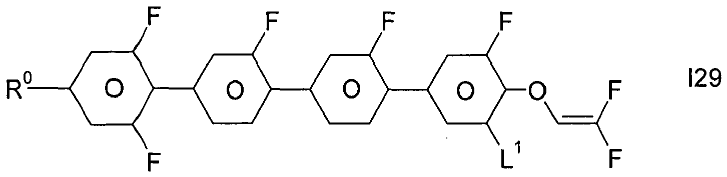 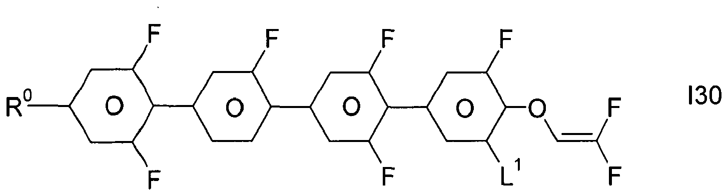 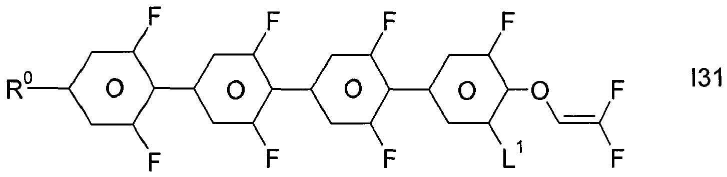 in which R⁰ and L¹ have the meaning indicated in Claim 1.

3. Liquid-crystalline medium according to Claim 1 or 2, **characterised in that** it additionally comprises one or more compounds of the formulae II and/or III: 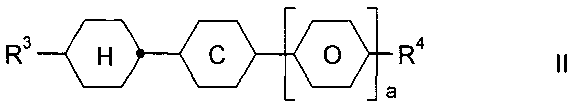 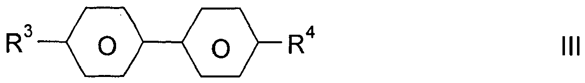 in which
ring C denotes 1,4-phenylene or trans-1,4-cyclohexylene,
a is 0 or 1, and
R³ denotes alkenyl having 2 to 9 C atoms,
and R⁴ has the meaning indicated for R⁰ in Claim 1.

4. Liquid-crystalline medium according to one or more of Claims 1 to 3, **characterised in that** it comprises one or more compounds selected from the following formulae: 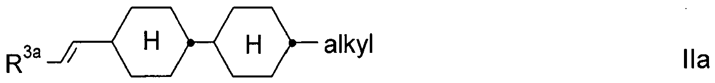 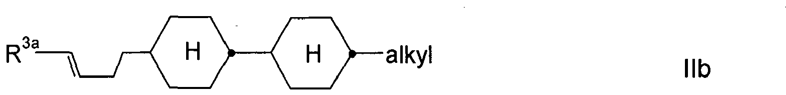 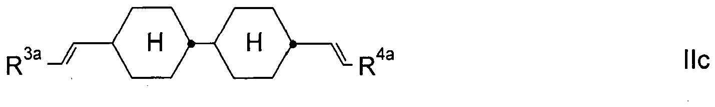 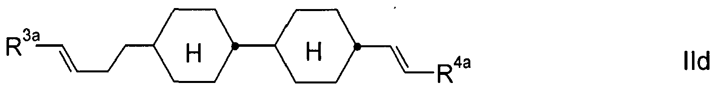 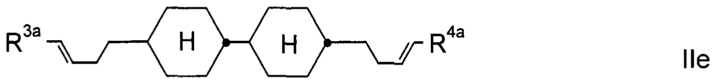 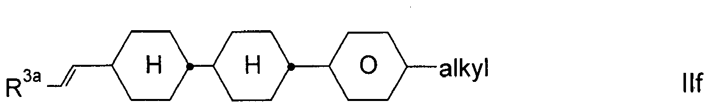 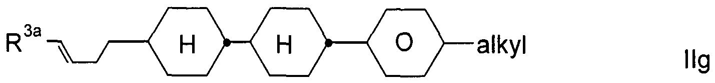 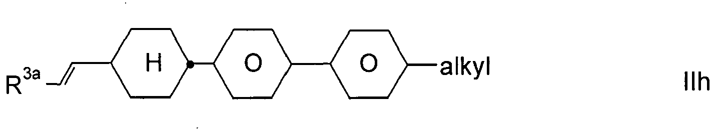 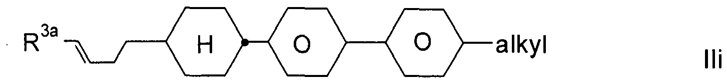 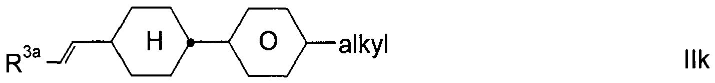 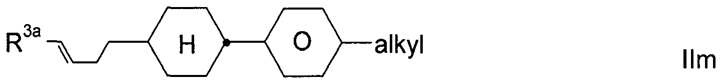 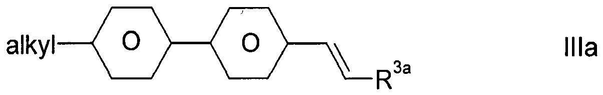 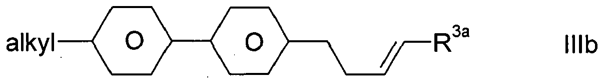 in which R^{3a} and R^{4a} each, independently of one another, denote H, CH₃, C₂H₅ or C₃H₇, and "alkyl" denotes a straight-chain alkyl group having 1 to 8 C atoms.

5. Liquid-crystalline medium according to one or more of Claims 1 to 4, **characterised in that** it additionally comprises one or more compounds selected from the following formulae: 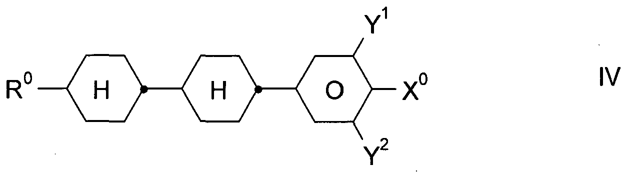 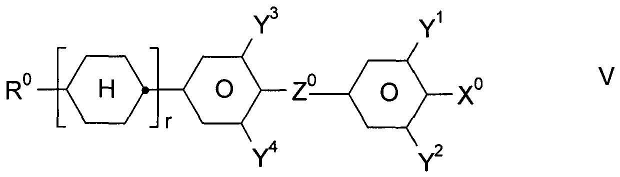 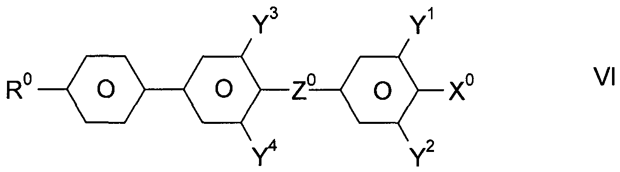 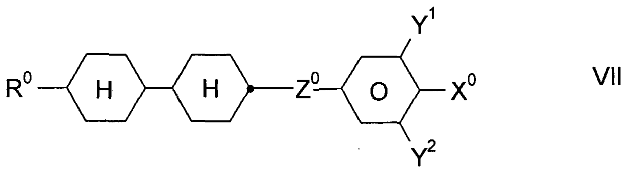 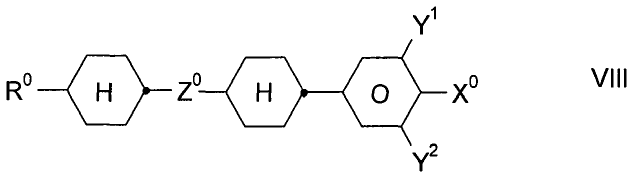 in which R⁰ has the meaning indicated in Claim 1,
Y¹⁻⁴ each, independently of one another, denote H or F,
X⁰ denotes F, CI, CN, SF₅, SCN, NCS, a halogenated alkyl radical, a halogenated alkenyl radical, a halogenated alkoxy radical or a halogenated alkenyloxy radical having up to 6 C atoms,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- or -OCF₂-, in formulae V and VI also a single bond, and
r denotes 0 or 1.

6. Liquid-crystalline medium according to one or more of Claims 1 to 5, **characterised in that** it comprises one or more compounds selected from the following formulae: 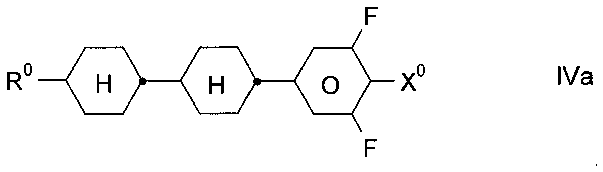 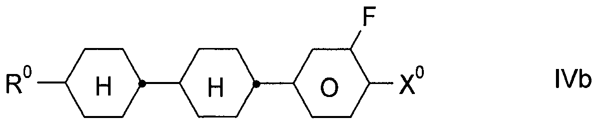 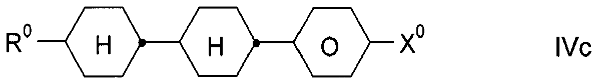 in which R⁰ and X⁰ have the meaning indicated in Claim 5.

7. Liquid-crystalline medium according to one or more of Claims 1 to 6, **characterised in that** it comprises one or more compounds selected from the following formulae: 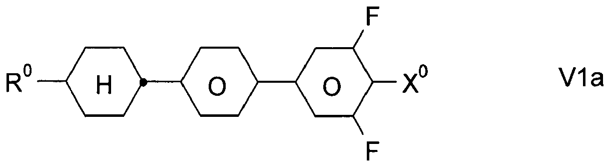 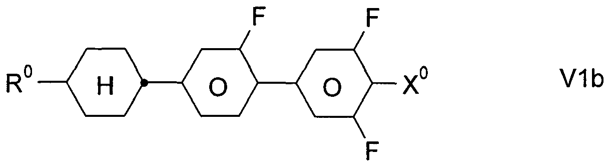 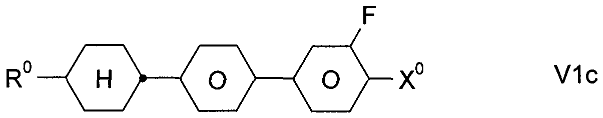 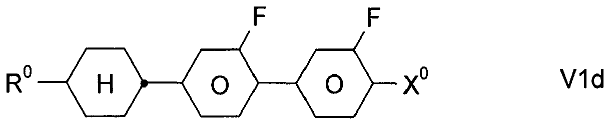 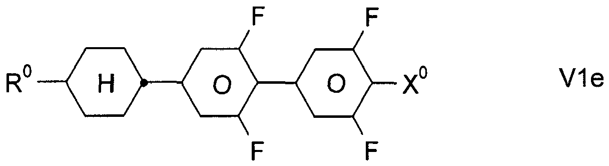 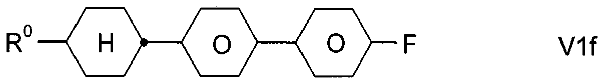 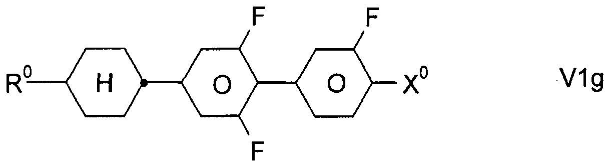 in which R⁰ and X⁰ have the meaning indicated in Claim 5.

8. Liquid-crystalline medium according to one or more of Claims 1 to 7, **characterised in that** it comprises one or more compounds selected from the following formulae: 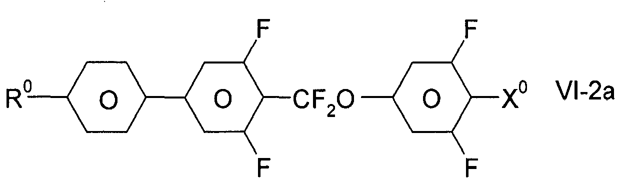 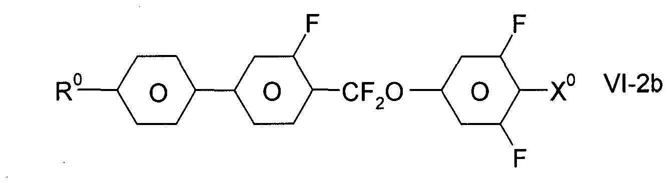 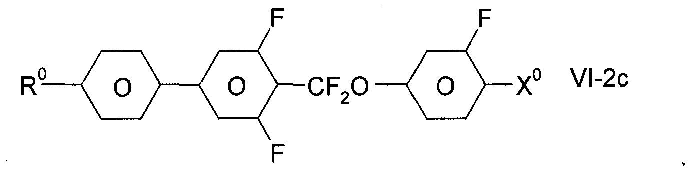 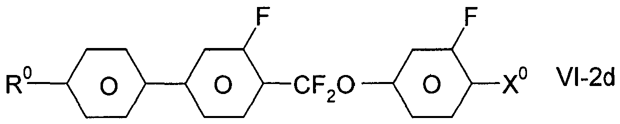 in which R⁰ and X⁰ have the meaning indicated in Claim 5.

9. Liquid-crystalline medium according to one or more of Claims 1 to 8, **characterised in that** it comprises one or more compounds selected from the following formulae: 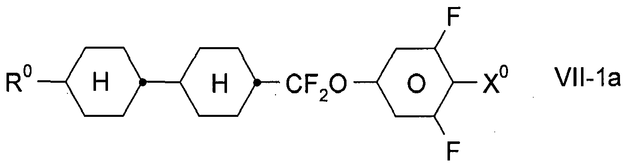 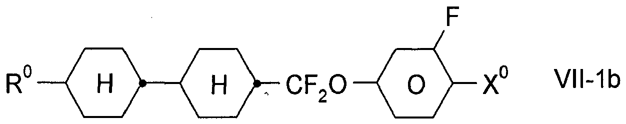 in which R⁰ and X⁰ have the meaning indicated in Claim 5.

10. Liquid-crystalline medium according to one or more of Claims 1 to 9, **characterised in that** it additionally comprises one or more compounds selected from the following formulae: 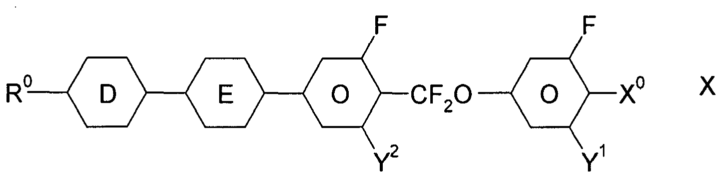 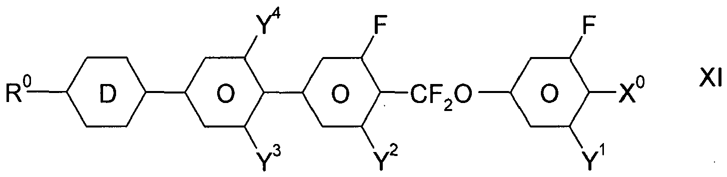 in which R⁰, X⁰ and Y¹⁻⁴ have the meaning indicated in Claim 5, and 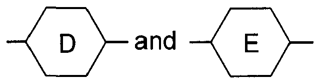 each, independently of one another, denote

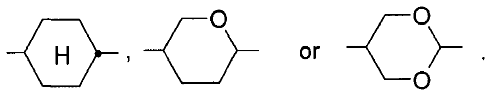

11. Liquid-crystalline medium according to one or more of Claims 1 to 10, **characterised in that** it additionally comprises one or more compounds selected from the following formula: 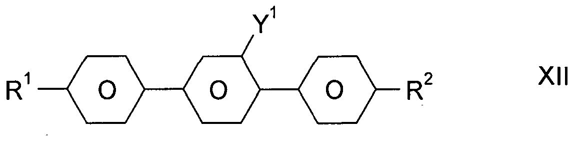 in which R¹ and R² each, independently of one another, denote n-alkyl, alkoxy, oxaalkyl, fluoroalkyl or alkenyl, each having up to 9 C atoms.

12. Liquid-crystalline medium according to one or more of Claims 1 to 11, **characterised in that** it additionally comprises one or more compounds selected from the following formulae: 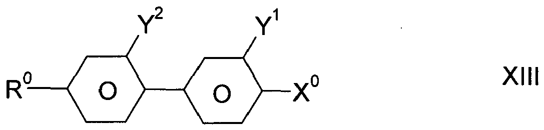 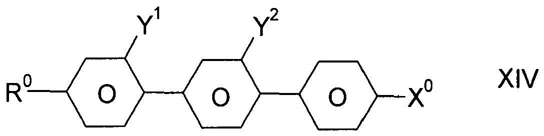 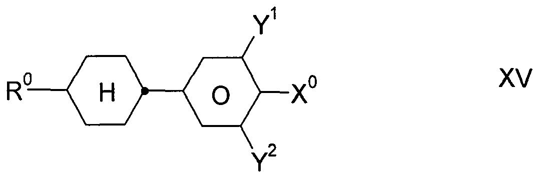 in which R⁰, X⁰, Y¹ and Y² have the meaning indicated in Claim 5.

13. Liquid-crystalline medium according to one or more of Claims 1 to 12, **characterised in that** it additionally comprises one or more compounds selected from the following formulae: 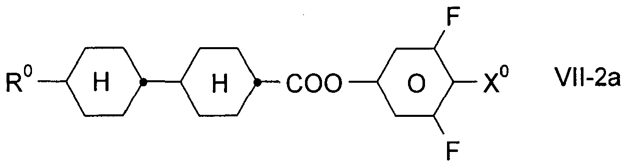 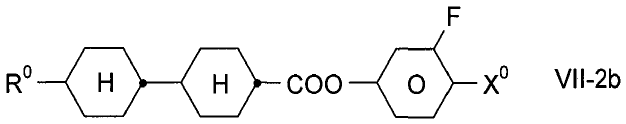 in which R⁰ and X⁰ have the meaning indicated in Claim 5.

14. Liquid-crystalline medium according to one or more of Claims 1 to 13, **characterised in that** it additionally comprises one or more compounds selected from the following formula: 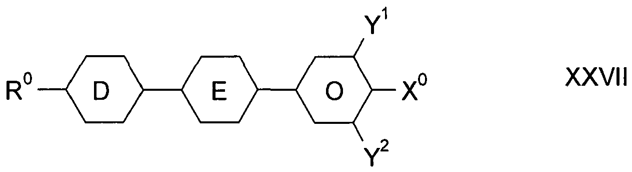 in which D and E have the meaning indicated in Claim 10, R⁰, X⁰ and Y^{1,2} have the meaning indicated in Claim 5, and D and E do not simultaneously denote cyclohexylene.

15. Liquid-crystalline medium according to one or more of Claims 1 to 14, **characterised in that** it comprises
1-25% by weight of compounds of the formula I,
25-80% by weight of compounds of the formulae II and/or III,
5-30% by weight of compounds of the formula VI-2.

16. Use of a liquid-crystalline medium according to one or more of Claims 1 to 15 for electro-optical purposes.

17. Electro-optical liquid-crystal display containing a liquid-crystalline medium according to one or more of Claims 1 to 15.

18. Process for the preparation of a liquid-crystalline medium according to one or more of Claims 1 to 15, **characterised in that** one or more compounds of the formula I as defined in Claim 1 or 2 are mixed with one or more compounds according to one or more of Claims 3 to 14 or with further liquid-crystalline compounds and/or additives.

## Revendications

1. Milieu cristallin liquide, **caractérisé en ce qu'**il comprend un ou plusieurs composés de la formule I 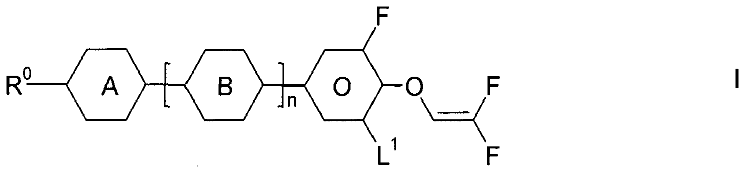 dans laquelle
R⁰ représente un radical alkyle ou alcoxy comportant de 1 à 15 atomes de C, où, en plus, un ou plusieurs groupes CH₂ dans ces radicaux peuvent chacun être remplacés, indépendamment les uns des autres, par -C≡C-, -CF₂O-, -CH=CH-, 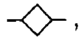 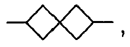 -O-, -CO-O- ou -O-CO- de telle sorte que des atomes de O ne soient pas liés directement les uns aux autres, et où, en plus, un ou plusieurs atomes de H peut/peuvent être remplacé(s) par des atomes d'halogène,
L¹ représente H ou F,
n représente 1 ou 2, et 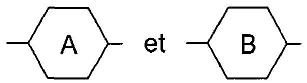 représentent, chacun indépendamment de l'autre, 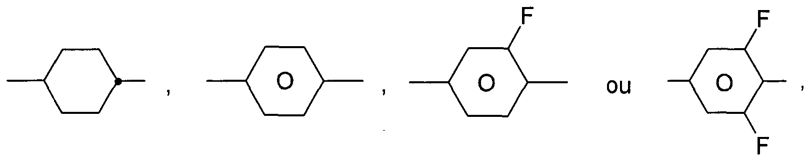 et additionnellement un ou plusieurs composés choisis parmi les formules qui suivent : 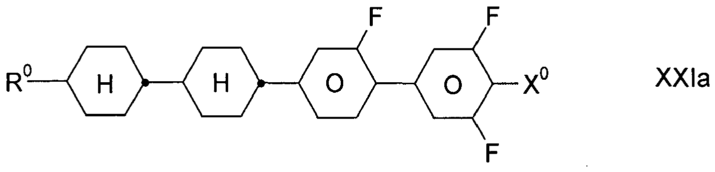 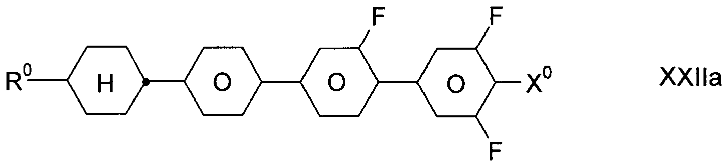 dans lesquelles R⁰ est comme défini pour formule I, et
X⁰ représente F, CI, CN, SF₅, SCN, NCS, un radical alkyle halogéné, un radical alkényle halogéné, un radical alcoxy halogéné ou un radical alkényloxy halogéné comportant jusqu'à 6 atomes de C.

2. Milieu cristallin liquide selon la revendication 1, **caractérisé en ce qu'**il comprend un ou plusieurs composés choisis parmi les formules qui suivent : 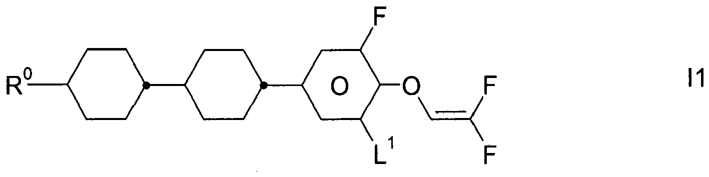 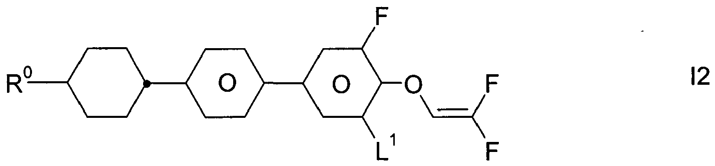 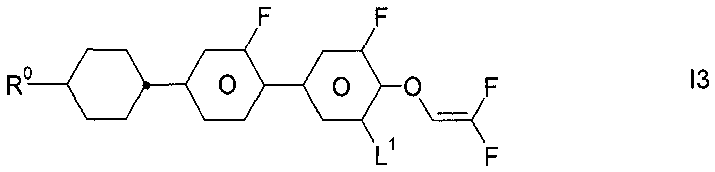 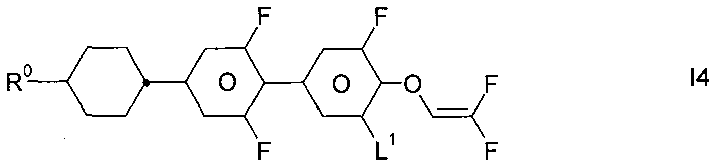 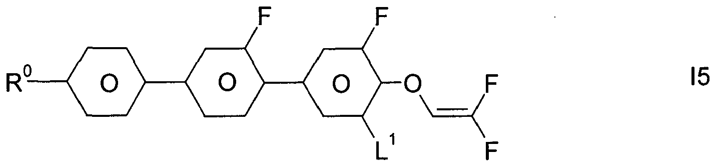 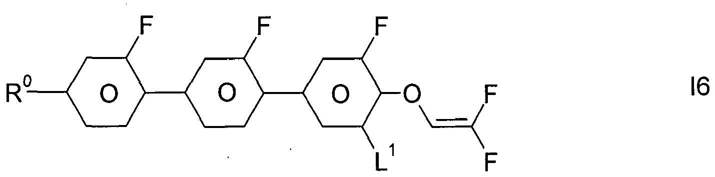 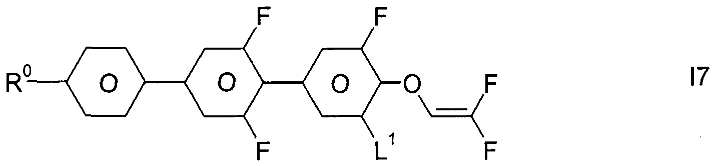 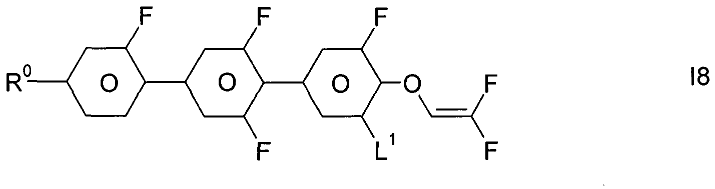 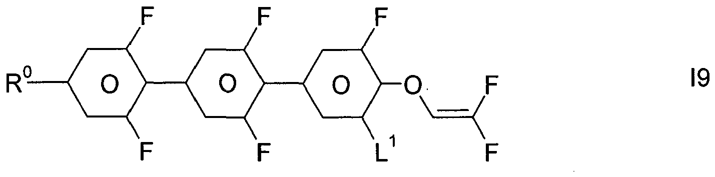 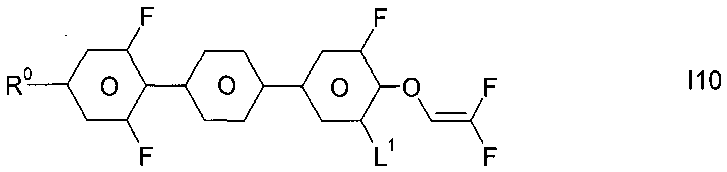 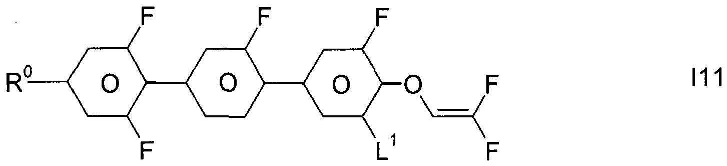 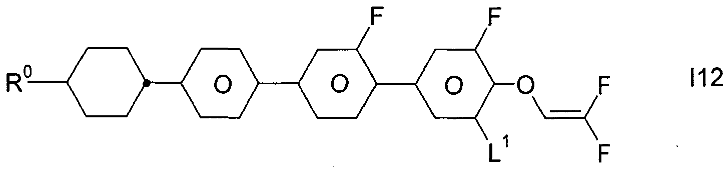 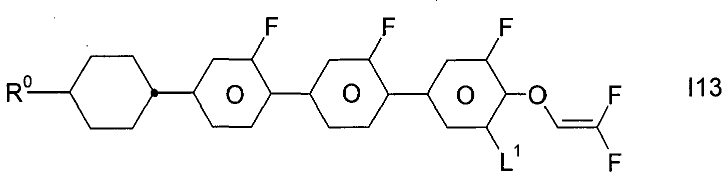 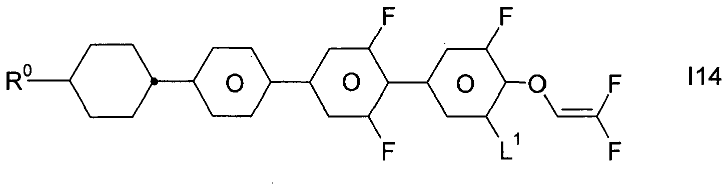 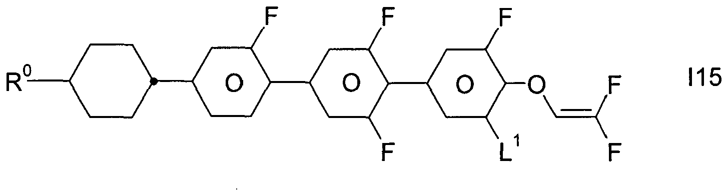 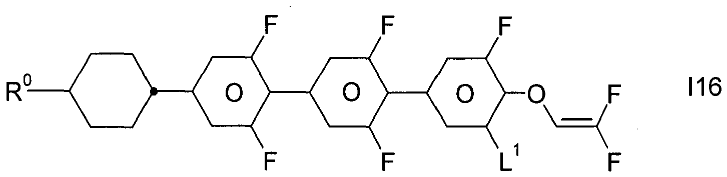 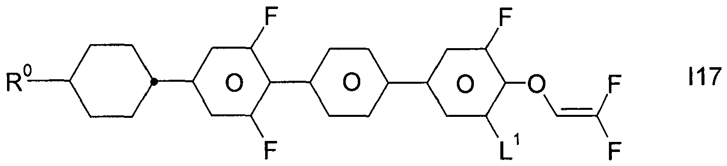 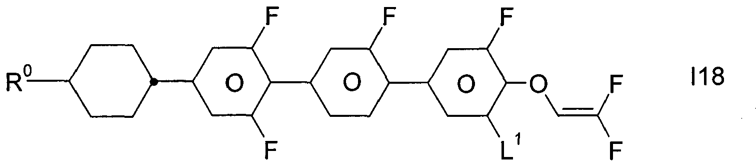 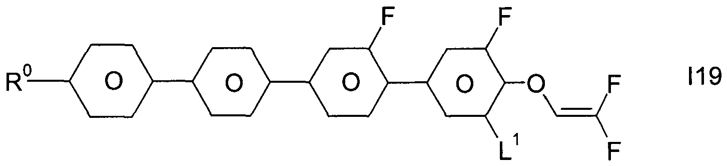 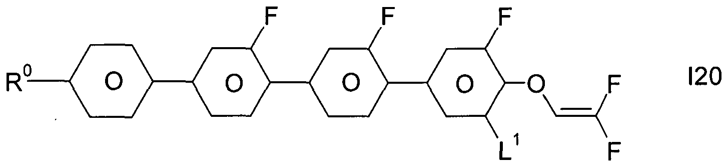 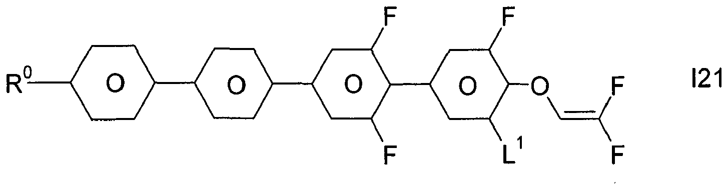 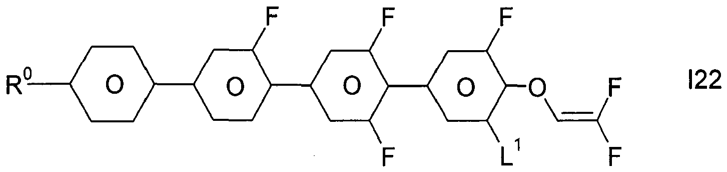 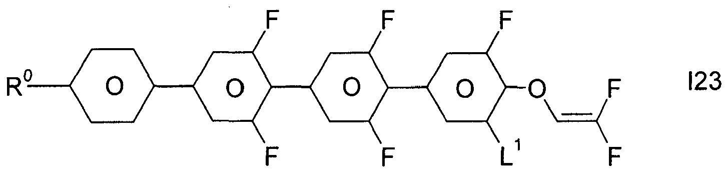 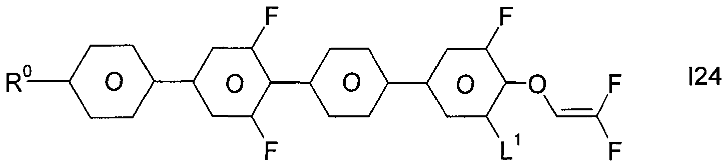 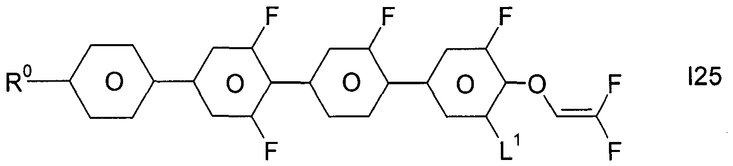 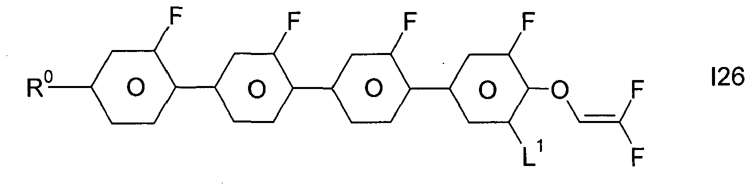 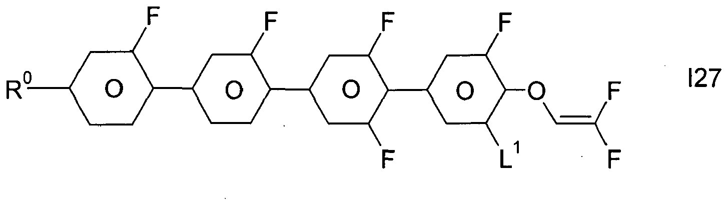 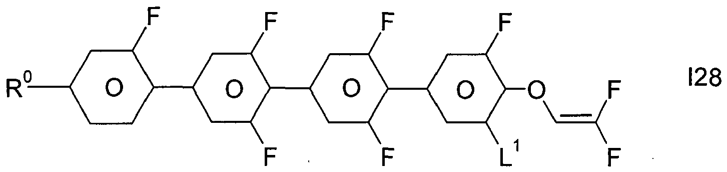 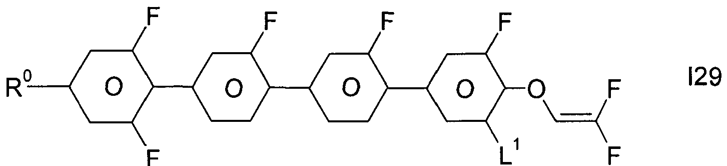 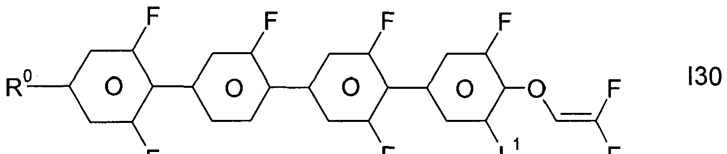 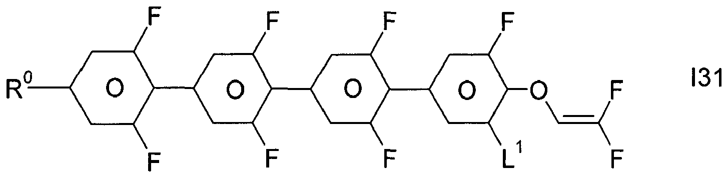 dans lesquelles R⁰ et L¹ présentent la signification indiquée selon la revendication 1.

3. Milieu cristallin liquide selon la revendication 1 ou 2, **caractérisé en ce qu'**il comprend additionnellement un ou plusieurs composés des formules II et/ou III : 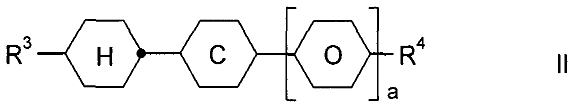 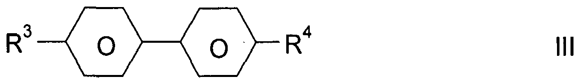 dans lesquelles
le cycle C représente 1,4-phénylène ou trans-1,4-cyclohexylène,
a est 0 ou 1, et
R³ représente alkényle comportant de 2 à 9 atomes de C,
et R⁴ présente la signification indiquée pour R⁰ selon la revendication 1.

4. Milieu cristallin liquide selon une ou plusieurs des revendications 1 à 3, **caractérisé en ce qu'**il comprend un ou plusieurs composés choisis parmi les formules qui suivent : 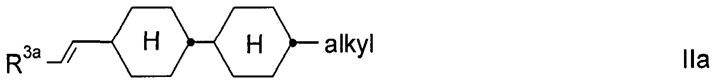 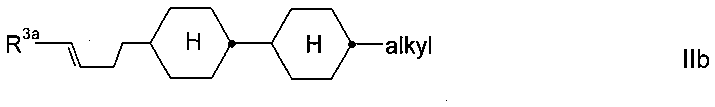 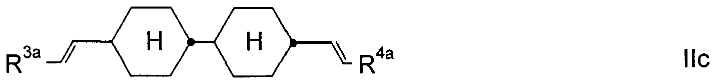 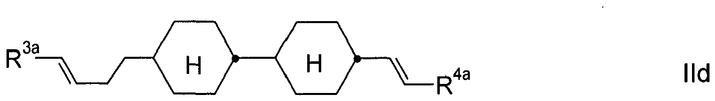 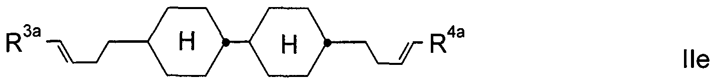 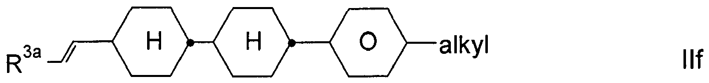 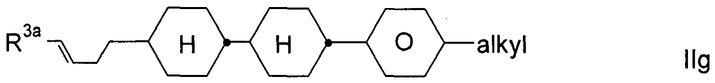 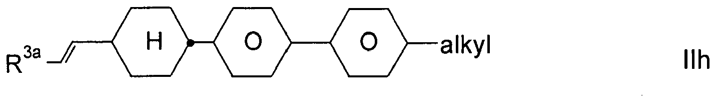 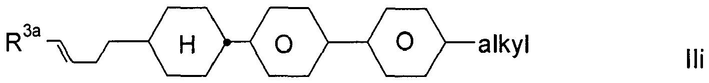 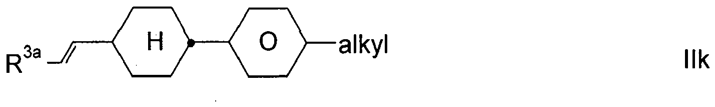 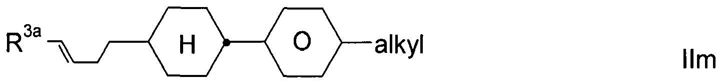 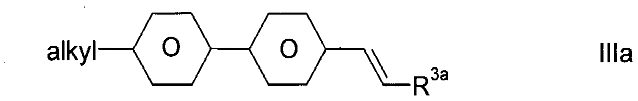 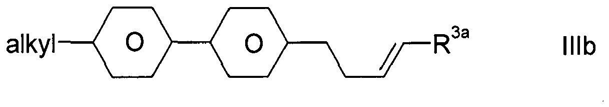 dans lesquelles R^{3a} et R^{4a} représentent, chacun indépendamment de l'autre, H, CH₃, C₂H₅ ou C₃H₇, et "alkyl" représente un groupe alkyle en chaîne droite comportant de 1 à 8 atomes de C.

5. Milieu cristallin liquide selon une ou plusieurs des revendications 1 à 4, **caractérisé en ce qu'**il comprend additionnellement un ou plusieurs composés choisis parmi les formules qui suivent : 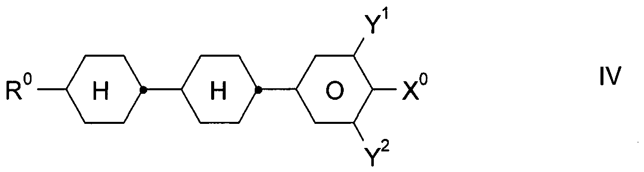 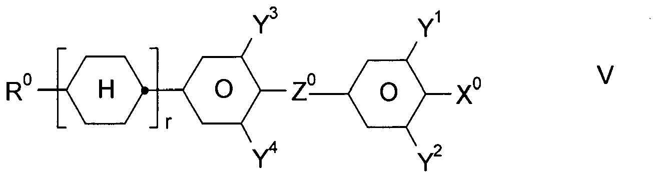 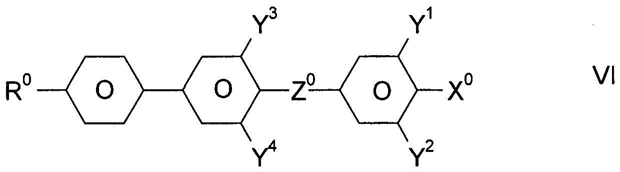 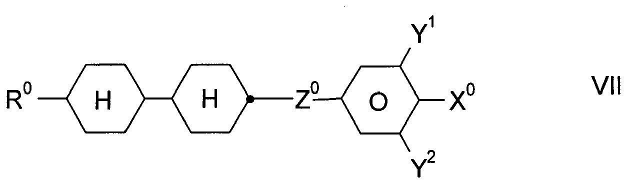 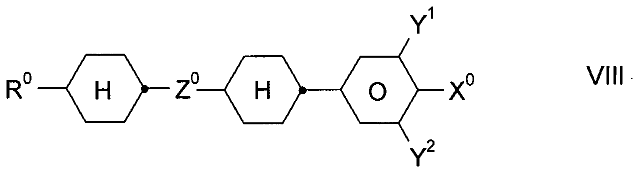 dans lesquelles R⁰ présente la signification indiquée selon la revendication 1,
Y¹⁻⁴ représentent, chacun indépendamment des autres, H ou F,
X⁰ représente F, CI, CN, SF₅, SCN, NCS, un radical alkyle halogéné, un radical alkényle halogéné, un radical alcoxy halogéné ou un radical alkényloxy halogéné comportant jusqu'à 6 atomes de C,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- ou -OCF₂-, dans les formules V et VI également une liaison simple, et
r représente 0 ou 1.

6. Milieu cristallin liquide selon une ou plusieurs des revendications 1 à 5, **caractérisé en ce qu'**il comprend un ou plusieurs composés choisis parmi les formules qui suivent : 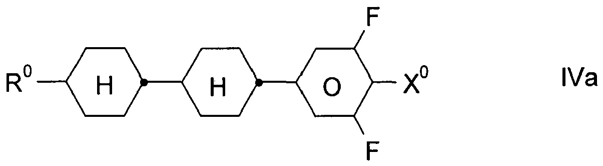 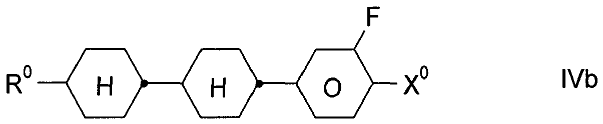 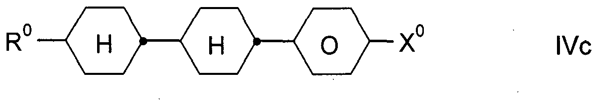 dans lesquelles R⁰ et X⁰ présentent la signification indiquée selon la revendication 5.

7. Milieu cristallin liquide selon une ou plusieurs des revendications 1 à 6, **caractérisé en ce qu'**il comprend un ou plusieurs composés choisis parmi les formules qui suivent : 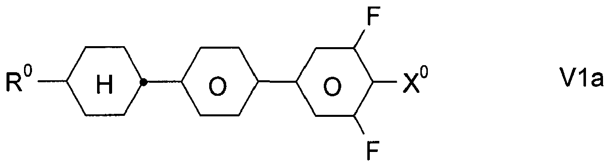 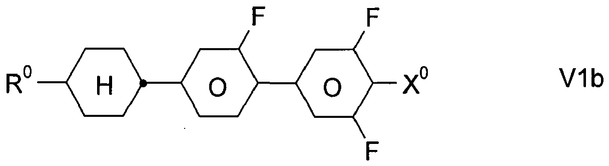 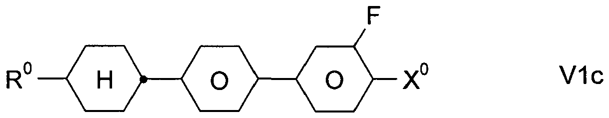 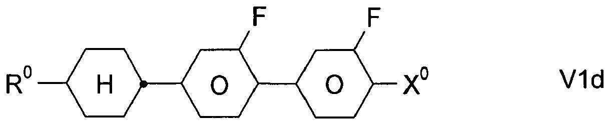 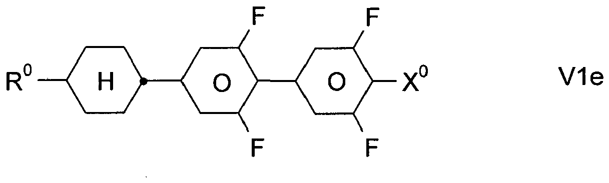 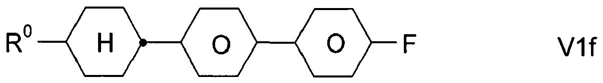 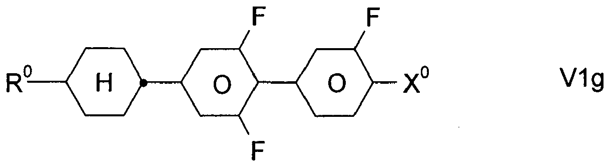 dans lesquelles R⁰ et X⁰ présentent la signification indiquée selon la revendication 5.

8. Milieu cristallin liquide selon une ou plusieurs des revendications 1 à 7, **caractérisé en ce qu'**il comprend un ou plusieurs composés choisis parmi les formules qui suivent : 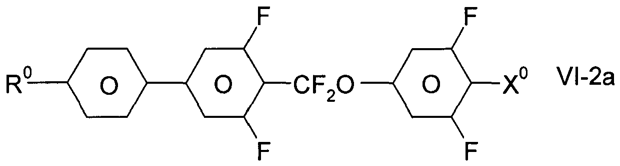 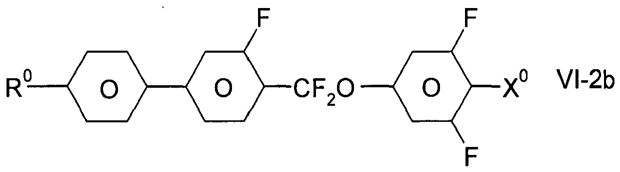 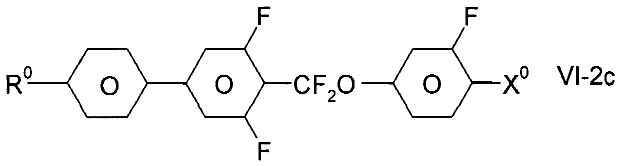 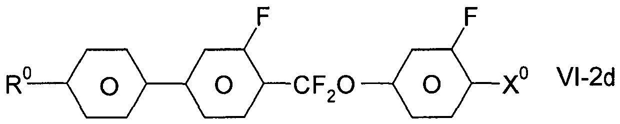 dans lesquelles R⁰ et X⁰ présentent la signification indiquée selon la revendication 5.

9. Milieu cristallin liquide selon une ou plusieurs des revendications 1 à 8, **caractérisé en ce qu'**il comprend un ou plusieurs composés choisis parmi les formules qui suivent : 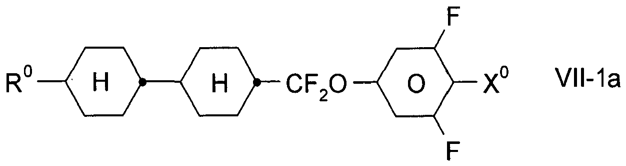 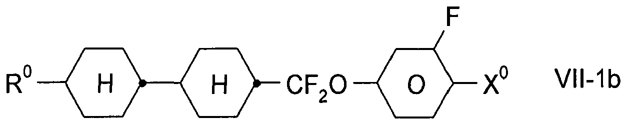 dans lesquelles R⁰ et X⁰ présentent la signification indiquée selon la revendication 5.

10. Milieu cristallin liquide selon une ou plusieurs des revendications 1 à 9, **caractérisé en ce qu'**il comprend additionnellement un ou plusieurs composés choisis parmi les formules qui suivent : 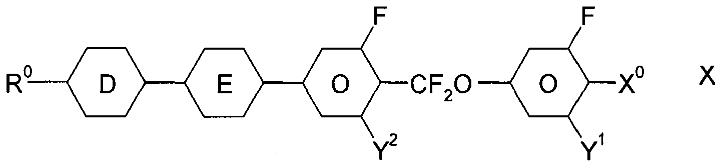 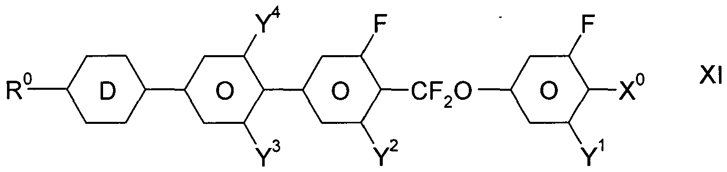 dans lesquelles R⁰, X⁰ et Y¹⁻⁴ présentent la signification indiquée selon la revendication 5, et 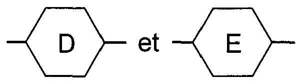 représentent, chacun indépendamment de l'autre,

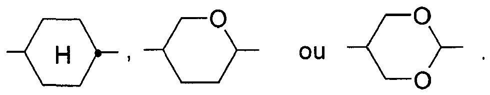

11. Milieu cristallin liquide selon une ou plusieurs des revendications 1 à 10, **caractérisé en ce qu'**il comprend additionnellement un ou plusieurs composés choisis parmi la formule qui suit : 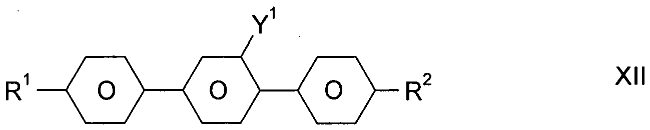 dans laquelle R¹ et R² représentent, chacun indépendamment de l'autre, n-alkyle, alcoxy, oxaalkyle, fluoroalkyle ou alkényle, chacun comportant jusqu'à 9 atomes de C.

12. Milieu cristallin liquide selon une ou plusieurs des revendications 1 à 11, **caractérisé en ce qu'**il comprend additionnellement un ou plusieurs composés choisis parmi les formules qui suivent : 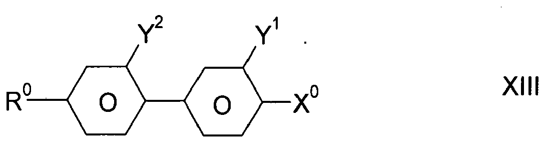 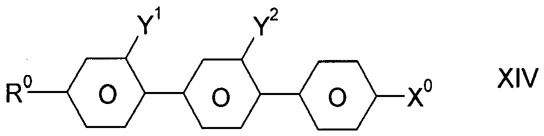 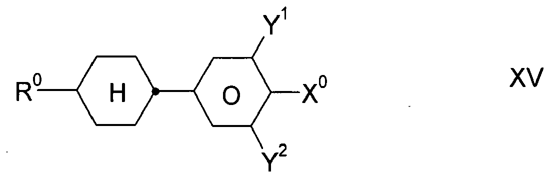 dans lesquelles R⁰, X⁰, Y¹ et Y² présentent la signification indiquée selon la revendication 5.

13. Milieu cristallin liquide selon une ou plusieurs des revendications 1 à 12, **caractérisé en ce qu'**il comprend additionnellement un ou plusieurs composés choisis parmi les formules qui suivent : 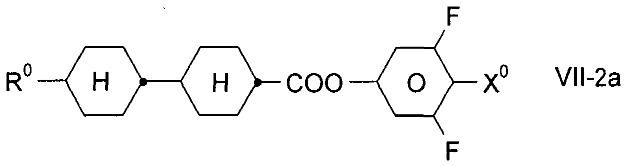 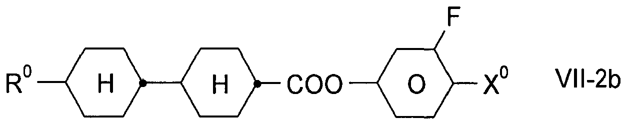 dans lesquelles R⁰ et X⁰ présentent la signification indiquée selon la revendication 5.

14. Milieu cristallin liquide selon une ou plusieurs des revendications 1 à 13, **caractérisé en ce qu'**il comprend additionnellement un ou plusieurs composés choisis parmi la formule qui suit : 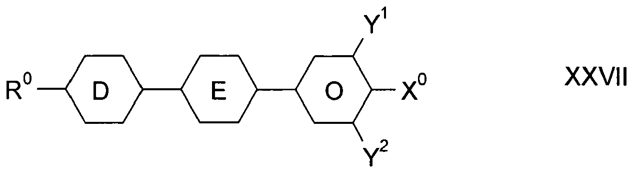 dans laquelle D et E présentent la signification indiquée selon la revendication 10, R⁰, X⁰ et Y^{1,2} présentent la signification indiquée selon la revendication 5, et D et E ne représentent pas simultanément cyclohexylène.

15. Milieu cristallin liquide selon une ou plusieurs des revendications 1 à 14, **caractérisé en ce qu'**il comprend
1-25% en poids de composés de la formule I,
25-80% en poids de composés des formules II et/ou III,
5-30% en poids de composés de la formule VI-2.

16. Utilisation d'un milieu cristallin liquide selon une ou plusieurs des revendications 1 à 15 à des fins électro-optiques.

17. Affichage à cristaux liquides électro-optique contenant un milieu cristallin liquide selon une ou plusieurs des revendications 1 à 15.

18. Procédé pour la préparation d'un milieu cristallin liquide selon une ou plusieurs des revendications 1 à 15, **caractérisé en ce qu'**un ou plusieurs composés de la formule I comme défini selon la revendication 1 ou 2 est/sont mélangé(s) avec un ou plusieurs composés selon une ou plusieurs des revendications 3 à 14 ou avec d'autres composés cristallins liquides et/ou additifs.
